# EUROPEAN PATENT APPLICATION

(11) **EP 2 386 350 A1**
(43) Date of publication of application: **16.11.2011**
(21) Application number: 10791974.8
(22) Date of filing: 10.06.2010
(51) Int. Cl.: B01F 7/32, A21C 1/02, A47J 43/044, A47J 43/07, B01F 3/04, B01F 7/16

(54) **STIRRING ROTATING BODY AND STIR DEVICE**

(30) Priority: 23.06.2009 JP 2009148223; 28.12.2009 JP 2009297119; 08.06.2010 JP 2010130654; 08.06.2010 JP 2010130655
(71) Applicant: IPMS Inc., Chuou-ku Tokyo 1040061 (JP)
(72) Inventor: MURATA, Kazuhisa, Saitama-shi Saitama 337-0042 (JP)
(74) Representative: Müller-Boré & Partner Patentanwälte
(86) International application number: PCT/JP2010/059811
(87) International publication number: WO 2010/150656

(57) **Abstract**

[OBJECT]

It is an object to provide a stirring rotor and a stirring device capable of performing a stirring operation in a safe and efficient manner, irrespective of intended purposes.

[SOLUTION]

A stirring rotor 1 of the present invention comprises a rotor body 10 adapted to be rotated about a rotation axis C, an inlet port 12 provided in an outer surface of the rotor body 10, an outlet port 14 provided in the outer surface of the rotor body 10, and a flow passage 16 communicating the inlet port 12 with the outlet port 14. The inlet port 12 is provided at a position closer to the rotation axis C than the outlet port 14, and the outlet port 14 is provided at a position more outward in a centrifugal direction from the rotation C axis than the inlet port 12.

## Description

### TECHNICAL FIELD

The present invention relates to a stirring rotor and a stirring device for stirring a liquid or various other fluids to perform a mixing operation, a dispersing operation, or the like.

### BACKGROUND ART

Heretofore, for example, in an operation of mixing two or more types of fluids or uniformly dispersing various materials, such as a powder, in a fluid, an agitator or stirrer has been used which is designed to rotate an impeller in a fluid. Typically, the impeller is provided with propeller blades or turbine blades, and adapted, upon being rotated, to cause a flow of the fluid so as to stir the fluid.

The stirrer includes a dominant type which is used under a condition that it is permanently installed in a tank for receiving a fluid therein. It also includes a handy type which is often used for stirring a fluid, such as paint, at a job site just before use of the fluid. Typically, the handy-type stirrer is designed such that the impeller is provided at a distal end of a drive shaft of a hand drill-shaped drive unit, wherein a user holds the drive unit with both hands and inserts the impeller into a container containing a stirrable substance to be stirred, such as paint, to stir the stirrable substance according to rotation of the impeller.

However, the handy-type stirrer has a problem that it requires careful handling because of danger from sharp blade tips of the impeller to be rotated at a high speed. There is another problem that, if the impeller with many protrusions is hit against the container, or the impeller undergoes fatigue fracture, a portion of the container or an edge of the impeller is likely to be chipped or scraped, and mixed in the stirrable substance.

The impeller is adapted to cause a flow of a stirrable substance through collision with the stirrable substance. Thus, the stirrer with the impeller has yet another problem that the impeller is apt to be shaken due to a counteracting force occurring when the impeller is put in the stirrable substance while being rotated, or starts being rotated within the stirrable substance. Consequently, user inexperience in operating the stirrer frequently causes an undesirable situation, such as hitting of the impeller against the container or scattering of the stirrable substance outside the container.

In cases where the stirrable substance includes a precipitate, the precipitate can be adequately dispersed only if the stirrable substance is stirred while keeping the impeller in contact with a bottom wall of the container. Thus, the stirrer with the impeller has still another problem that debris or chips caused by contact between the impeller and a wall surface of the container are likely to be mixed in the stirrable substance.

The stirrer with the impeller has yet still another problem that powder particles mixed in the stirrable substance are likely to be pulverized due to collision with the impeller. Thus, in cases where it is required to keep the mixed powder particles from being pulverized, for example, as in metallic paint, it is difficult to sufficiently stir the stirrable substance.

Meanwhile, there has also been proposed a mixer for a high viscous fluid, wherein the impeller comprises a cylindrical body which has a 6-sided column shaped contour with a lateral surface provided with a plurality of holes, instead of using propeller blades or turbine blades (see, for example, the following Patent Document 1).

### PRIOR ART DOCUMENTS

### [PATENT DOCUMENTS]

Patent Document 1: JP 5-154368A

### SUMMARY OF THE INVENTION

### [PROBLEM TO BE SOLVED BY THE INVENTION]

However, the high viscous fluid mixer disclosed in the Patent Document 1 is provided with an impeller having a 6-sided column shaped contour, and designed to cause a flow of a stirrable substance, primarily by means of collision between an outer wall of the impeller and the stirrable substance, so that it cannot solve the problem of a counteracting force occurring when the impeller starts being rotated, and the problem of pulverization of powder particles in a stirrable substance.

The mixer is intended to allow the stirrable substance to flow out through the holes in the lateral surface. However, an inner space of the impeller has a large volume relative to the holes in the lateral surface, so that a flow rate of the stirrable substance in the inner space of the impeller becomes lower, which causes a problem that, when the mixer is used for a long period of time, a stagnant substance is liable to adhere and accumulate onto an inner surface of the impeller, resulting in deterioration of stirring capability.

In view of the above circumstances, it is an object of the present invention to provide a stirring rotor and a stirring device capable of performing a stirring operation in a safe and efficient manner, irrespective of intended purposes.

### [MEANS FOR SOLVING THE PROBLEM]

The present invention provides a stirring rotor which comprises: a rotor body adapted to be rotated about a rotation axis; an inlet port provided in an outer surface of the rotor body; an outlet port provided in the outer surface of the rotor body; and a flow passage communicating the inlet port with the outlet port, wherein the inlet port is provided at a position closer to the rotation axis than the outlet port, and the outlet port is provided at a position more outward in a centrifugal direction from the rotation axis than the inlet port.

In the stirring rotor of the present invention, the rotor body may be configured such that a cross-section thereof perpendicular to the rotation axis has a circular shape.

In the above stirring rotor, the rotor body may have a semi-spherical or semi-ellipsoidal shape.

Alternatively, in the above stirring rotor, the rotor body may be configured in a spherical or ellipsoidal shape.

In the above stirring rotor, the rotor body may be configured in a shape where at least one of opposite base surfaces of a circular column or a disk is formed as a spherical surface.

In the stirring rotor of the present invention, the rotor body may be configured such that an outer peripheral shape of a cross-section of at least a part thereof perpendicular to a direction of the rotation axis has a shape where a plurality of convex or concave segments are provided in a circle.

In the above stirring rotor, each of the convex or concave segments may be configured such that a contour shape thereof in the cross-section perpendicular to the direction of the rotation axis has a generally triangular shape.

In the above stirring rotor, the outer peripheral shape of the cross-section of at least a part of the rotor body perpendicular to the direction of the rotation axis may be configured as a polygonal shape by the convex or concave segments.

In the above stirring rotor, the outer peripheral shape of the cross-section of at least a part of the rotor body perpendicular to the direction of the rotation axis may be configured as a 12 or more-sided polygonal shape by the convex or concave segments.

In the above stirring rotor, a corner of a top of each of the convex segments may be rounded.

Alternatively, in the above stirring rotor, each of the convex or concave segments may be configured such that a contour shape thereof in the cross-section perpendicular to the direction of the rotation axis has a generally arc shape.

In the stirring rotor of the present invention, the rotor body may be configured in a shape where a thickness of at least a part thereof in a direction of the rotation axis gradually decreases toward an outward side in the centrifugal direction.

In the stirring rotor of the present invention, the rotor body has an inclined surface which extends to become gradually farther away from the rotation axis, in a direction from one side to the other side of the rotation axis, wherein at least a part of the outlet port is located in the inclined surface.

In the stirring rotor of the present invention, a ratio of a cross-sectional area of the inlet port perpendicular to a flow therein to a cross-sectional area of the outlet port perpendicular to a flow therein is set in a range of 1/3 to 3.

The stirring rotor of the present invention may include a plurality of the outlet ports, wherein the inlet port and the flow passage are provided with respect to a respective one of the plurality of outlet ports.

In the stirring rotor of the present invention, the inlet port may be provided on a side opposite to a drive shaft to be connected to the rotor body so as to rotate the rotor body.

In the stirring rotor of the present invention, the inlet port may be provided on an outward side in the centrifugal direction with respect to the rotation axis.

In the stirring rotor of the present invention, the flow passage is configured to communicate the inlet port with the outlet port in plurality to one relationship, wherein the plurality of inlet ports communicated with the one outlet port are arranged such that they are different from each other in terms of a distance from the rotation axis in the centrifugal direction.

The stirring rotor of the present invention may further comprise a gas suction port provided in the outer surface of the rotor body at a position closer to the rotation axis than the outlet port, and a gas passage communicating the gas suction port with the outlet port, wherein the stirring rotor is usable in a posture where the gas suction port is exposed to gas outside of a stirrable substance, so as to allow the outside gas to be sucked from the gas suction port and introduced into the stirrable substance.

The stirring rotor of the present invention may further comprise a guide member for guiding a flow from the outlet port in a given direction.

In the stirring rotor of the present invention, the rotor body may be connected to a drive shaft for rotating the rotor body, wherein the drive shaft has an in-shaft passage communicating an opening provided therein with the flow passage.

In the above stirring rotor, the opening may be provided in a portion of the drive shaft to be located outside the stirrable substance.

In the above stirring rotor, the opening is provided in a portion of the drive shaft to be located inside the stirrable substance.

In the above stirring rotor, a supply device is connected to the in-shaft passage to supply a fluid or a mixture of a fluid and a solid to the flow passage via the in-shaft passage.

The present invention also provides a stirring device which comprises a plurality of the stirring rotors as described above, wherein the plurality of stirring rotors are arranged in a direction of the rotation axis.

### [EFFECT OF THE INVENTION]

The present invention can achieve a beneficial effect of being able to perform a stirring operation in a safe and efficient manner, irrespective of intended purposes.

### BRIEF DESCRIPTION OF THE DRAWINGS

FIG. 1(a) is a top plan view of a stirring rotor according to a first embodiment of the present invention.
FIG. 1(b) is a front view of the stirring rotor.
FIG. 2(a) is a top plan view illustrating an operation of the stirring rotor.
FIG. 2(b) is a front view illustrating the operation of the stirring rotor.
FIGS. 3(a) and 3(b) are schematic diagrams illustrating an example of how the stirring rotor is used.
FIGS. 4(a) and 4(b) are schematic diagrams illustrating other examples of how the stirring rotor is used.
FIGS. 5(a) and 5(b) are front views illustrating examples of a modified configuration of a flow passage.
FIGS. 6(a) to 6(c) illustrate examples of a modified configuration of an inlet port, an outlet port and the flow passage.
FIGS. 7(a) and 7(b) are front views illustrating examples of a modified shape of a rotor body.
FIGS. 8(a) and 8(b) are front views illustrating other examples of the modified shape of the rotor body.
FIG. 9(a) is a front view illustrating an example where the inlet port is provided on the side of a drive shaft.
FIG. 9(b) is a front view illustrating an example where the stirring rotor is provided with a gas suction port for sucking a gas outside of a fluid, and a gas passage communicating the gas suction port with the outlet port.
FIG. 10(a) and 10(b) are front views illustrating examples where the stirring rotor is configured to be capable of capturing foreign substances.
FIG. 11 is a front view illustrating an example of a stirring device based on the first embodiment.
FIG. 12(a) is a top plan view of a stirring rotor according to a second embodiment of the present invention.
FIG. 12(b) is a front view (side view) of the stirring rotor.
FIG. 12(c) is a bottom view of the stirring rotor.
FIG. 13(a) is a top plan view illustrating an operation of the stirring rotor.
FIG. 13(b) is a sectional view illustrating the operation of the stirring rotor.
FIGS. 14(a) and 14(b) are schematic diagrams illustrating an example of how the stirring rotor is used.
FIGS. 15(a) to 15(c) illustrate examples of a modified configuration of an inlet port, an outlet port and a flow passage.
FIGS. 16(a) to 16(c) illustrate additional examples of the modified configuration of the inlet port, the outlet port and the flow passage.
FIGS. 17(a) to 17(c) illustrate other examples of the modified configuration of the inlet port, the outlet port and the flow passage.
FIG. 18(a) illustrates an outer peripheral shape of a cross-section of a rotor body of the stirring rotor perpendicular to a central axis of the rotor body.
FIG. 18(b) is an enlarged view of the area A in FIG. 18(a).
FIGS. 19(a) to 19(d) illustrate examples of a modified shape of a convex segment.
FIGS. 20(a) to 20(d) illustrate examples of a shape of a concave segment.
FIGS. 21(a) to 21(c) illustrate an example of a modified shape of the rotor body of the stirring rotor.
FIGS. 22(a) to 22(c) illustrate another example of the modified shape of the rotor body of the stirring rotor.
FIGS. 23(a) to 23(c) illustrate yet another example of the modified shape of the rotor body of the stirring rotor.
FIGS. 24(a) to 24(c) illustrate still another example of the modified shape of the rotor body of the stirring rotor.
FIGS. 25(a) to 25(c) illustrate yet still another example of the modified shape of the rotor body of the stirring rotor.
FIGS. 26(a) to 26(c) illustrate another further example of the modified shape of the rotor body of the stirring rotor.
FIGS. 27(a) to 27(c) illustrate still a further example of the modified shape of the rotor body of the stirring rotor.
FIGS. 28(a) to 28(c) illustrate an additional example of the modified shape of the rotor body of the stirring rotor.
FIGS. 29(a) to 29(c) illustrate yet an additional example of the modified shape of the rotor body of the stirring rotor.
FIGS. 30(a) to 30(c) illustrate other example of the modified shape of the rotor body of the stirring rotor.
FIGS. 31(a) and 31(b) are front views illustrating examples of a stirring device based on the second embodiment.
FIG. 32(a) is a top plan view of a stirring rotor according to a second embodiment of the present invention.
FIG. 32(b) is a front view of the stirring rotor.
FIG. 32(c) is a bottom view of the stirring rotor.
FIG. 33 is a partially sectional view of the stirring rotor.
FIG. 34(a) is a top plan view illustrating an operation of the stirring rotor.
FIG. 34(b) is a front view illustrating the operation of the stirring rotor.
FIGS. 35(a) and 35(b) are schematic diagrams illustrating an example of how the stirring rotor is used.
FIGS. 36(a) to 36(c) are partially sectional views illustrating examples of how the stirring rotor is used.
FIGS. 37(a) to 37(c) are front views showing examples of a modified arrangement of an inlet port and an outlet port.
FIG. 38 is a front view illustrating an example of a modified shape of a rotor body.
FIG. 39 is a front view illustrating an example of the modified shape of the rotor body.
FIGS. 40(a) to 40(d) are sectional views illustrating examples of a modified configuration of a connection port.
FIG. 41 is a front view illustrating an example of a stirring device based on the second embodiment.
FIG. 42(a) is a top plan view of a stirring rotor according to a third embodiment of the present invention.
FIG. 42(b) is a front view of the stirring rotor.
FIG. 42(c) is a bottom view of the stirring rotor.
FIG. 43(a) is a top plan view illustrating an operation of the stirring rotor.
FIG. 43(b) is a front view illustrating the operation of the stirring rotor.
FIGS. 44(a) and 44(b) are schematic diagrams illustrating an example of how the stirring rotor is used.
FIGS. 45(a) to 45(c) are front views illustrating examples where a rotor body is configured in a spherical shape.
FIGS. 46(a) to 46(c) are front views illustrating other examples where the rotor body is configured in a spherical shape.
FIGS. 47(a) to 47(c) are front views illustrating examples of a modified shape of the rotor body.
FIGS. 48(a) to 48(c) are front views illustrating examples where the rotor body is provided with a guide member.
FIGS. 49(a) to 49(c) are front views illustrating examples where the inlet port is communicated with the outlet port in plurality-to-one relationship.
FIGS. 50(a) to 50(c) are partially sectional views illustrating an example where an in-shaft passage is provided in a drive shaft connected to the rotor body.
FIGS. 51 (a) to 51 (d) are sectional views illustrating examples of a modified configuration of a connection port.
FIG. 52 is a front view illustrating an example of a stirring device based on the third embodiment.

### DESCRIPTION OF EMBODIMENTS

With reference to the accompanying drawings, various embodiments of the present invention will now be described.

### <FIRST EMBODIMENT>

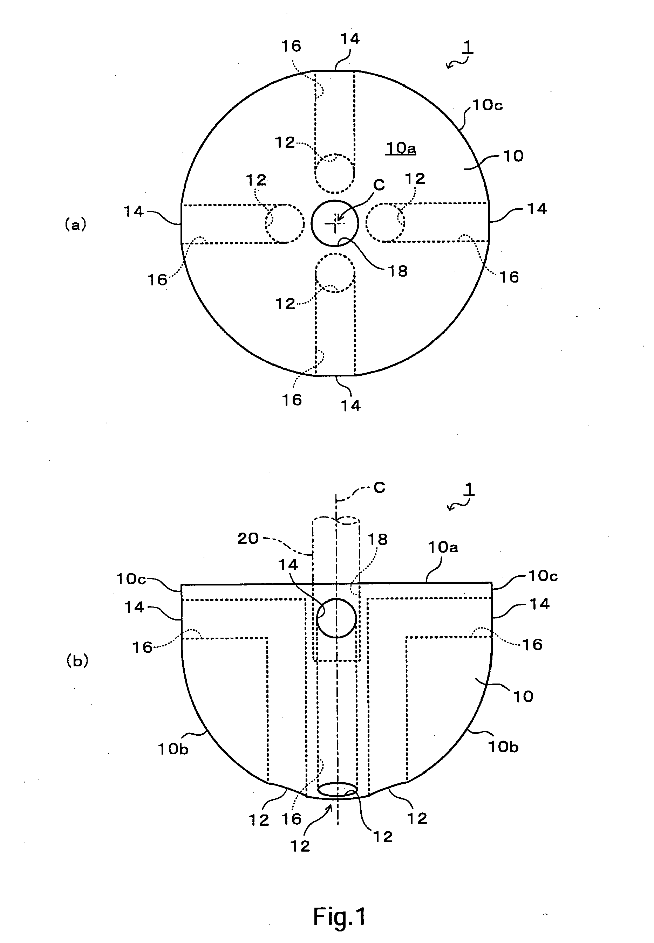

A structure of a stirring rotor 1 according to a first embodiment of the present invention will be described below. FIG. 1(a) is a top plan view of the stirring rotor 1, and FIG. 1(b) is a front view of the stirring rotor 1 (a side view is identical thereto). As illustrated in FIGS. 1(a) and 1(b), the stirring rotor 1 comprises a generally semi-spherical shaped rotor body 10, a plurality of inlet ports 12 provided in an outer surface of the rotor body 10, a plurality of outlet ports 14 provided in the outer surface of the rotor body 10, and a flow passage 16 formed inside the rotor body 10 to communicate the inlet ports 12 with the outlet ports 14.

In the first embodiment, the rotor body 10 is configured in a generally semi-spherical shape, specifically, in a shape where one 10b of opposite base surfaces of a disk is formed as a spherical surface. The rotor body 10 has a connection portion 18 provided in the center of the other base surface 10a thereof to allow a drive shaft 20 of a drive unit such as a motor to be connected thereto. Thus, the stirring rotor 1 is adapted to be rotated about a rotation axis defined by a central axis C of the rotor body 10. A technique for the connection between the drive shaft 20 and the connection portion 18 may be any conventional means, such as thread connection or engagement connection.

In the first embodiment, a portion of the rotor body 10 other than the flow passage 16 is configured as a solid structure to provide enhanced strength of the rotor body 10. A material for forming the rotor body 10 is not particularly limited, but an appropriate material suitable for its use conditions, such as metal, ceramics, resin, rubber or wood, may be employed. The rotor body 10 in the first embodiment is designed in a simple and easily-fabricatable or machinable configuration, so that it becomes possible to form the rotor body 10 from a wide variety of materials without being restricted by production processes.

The inlet ports 12 are provided in the base surface 10b of the rotor body 10 on a side opposite to the connection portion 18. In the first embodiment, the number of the inlet ports 12 is four, wherein the four inlet ports 12 are arranged side-by-side on a circle having a center at the central axis C, in equally spaced relation to each other, and each of the four inlet ports 12 is formed in the same direction as that of the central axis C. The outlet ports 14 are provided in a lateral surface 10c of the rotor body 10. In the first embodiment, the number of the outlet ports 14 is four, wherein each of the four outlet ports 14 is provided at a position outward in a radial direction of the rotor body 10 (in a centrifugal direction) (at a position away from the central axis C in a direction perpendicular to the central axis C) with respect to a corresponding one of the inlet ports 12. Further, each of the outlet ports 14 is formed in a direction perpendicular to the central axis C.

The flow passage 16 is formed as a passage communicating each of the inlet ports 12 with a corresponding one the outlet ports 14. In other words, in the first embodiment, the number of the flow passages 16 formed inside the rotor body 10 is four. Each of the flow passages 16 is formed to extend linearly from the inlet port 12 along the central axis C, and then, after bending at a right angle, extend linearly outwardly in the radial direction of the rotor body 10 to reach the corresponding outlet port 14.

In the first embodiment, each of the flow passages 16 is configured as just described to allow a set of the inlet port 12, the outlet port 14 and the flow passage 16 to be easily formed by a boring operation using a drill. Specifically, the set of the inlet port 12, the outlet port 14 and the flow passage 16 can be easily formed by drilling a hole from a position of the inlet port 12 along the central axis C, and drilling a hole from a position of the outlet port 14 toward the central axis C. Although the flow passage 16 in the first embodiment is configured such that a cross-section thereof has a circular shape, the cross-sectional shape is not limited thereto, but may be any other suitable shape such as an elliptical shape or a polygonal shape.

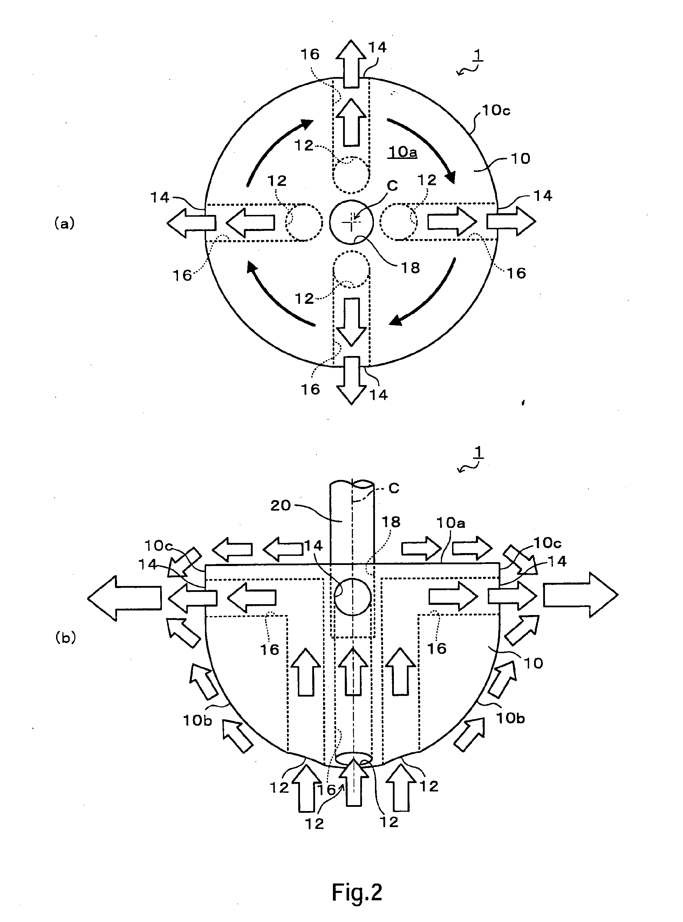

An operation of the stirring rotor 1 will be described below. FIG. 2(a) is a top plan view illustrating the operation of the stirring rotor 1, and FIG. 2(b) is a front view illustrating the operation of the stirring rotor 1. The stirring rotor 1 is adapted to be driven and rotated about the central axis C by the drive shaft 20, within a stirrable substance which is a fluid, so as to stir the stirrable substance.

Upon rotating the stirring rotor 1 under a condition that it is immersed in a fluid, a part of the fluid entering inside each of the flow passages 16 is also rotated together with the stirring rotor 1. Then, a centrifugal force is applied to the fluid inside of the flow passage 16, and thereby the fluid inside of the flow passage 16 flows toward an outward side in the radial direction of the stirring rotor 1, as illustrated in FIGS. 2(a) and 2(b). Each of the outlet ports 14 is provided more outwardly in the radial direction of the rotor body 10 than a corresponding one of the inlet ports 12, so that the centrifugal force becomes stronger at the outlet port 14 than at the inlet port 12. Thus, as long as the stirring rotor 1 is being rotated, the fluid flows from the inlet port 12 toward the outlet port 14. More specifically, the fluid inside of the flow passage 16 is jetted out from the outlet port 14, and simultaneously the outside fluid is sucked from the inlet port 12 into the flow passage 16. Consequently, a flow radiating out from the lateral surface 10c with the outlet port 14, and a flow directed toward a distal end of the stirring rotor 1 with the inlet port 12, will be generated in the fluid around the stirring rotor 1.

Further, upon rotating the stirring rotor 1 under a condition that it is immersed in the fluid, a part of the fluid adjacent to an outer surface of the stirring rotor 1 is rotated together with the stirring rotor 1 by the effect of viscosity. Thus, a centrifugal force is also applied to the fluid adjacent to the outer surface of the stirring rotor 1, so that the outer surface-adjacent fluid flows to the lateral surface 10c along the outer surface of the stirring rotor 1, and becomes a flow accompanied with the jet flow from the outlet port 14, as illustrated in FIGS. 2(a) and 2(b).

In the first embodiment, the base surface 10b is formed as a spherical surface, i.e., the rotor body 10 is configured in a shape where an axial thickness thereof gradually decreases toward the outward side of the radial direction, so that it becomes possible to smoothly combine a flow adjacent to the base surface 10b of the stirring rotor 1 with the flow radiating out from the lateral surface 10c. In addition, based on configuring the base surface 10b in the above shape, a part of the flow directed toward the distal end of the stirring rotor 1 can be smoothly guided to the lateral surface 10c along the base surface 10b, and combined with the flow radiating out from the lateral surface 10c. This makes it possible to generate strong flows in the surrounding fluid, so that the stirring rotor 1 becomes capable of performing an efficient stirring operation.

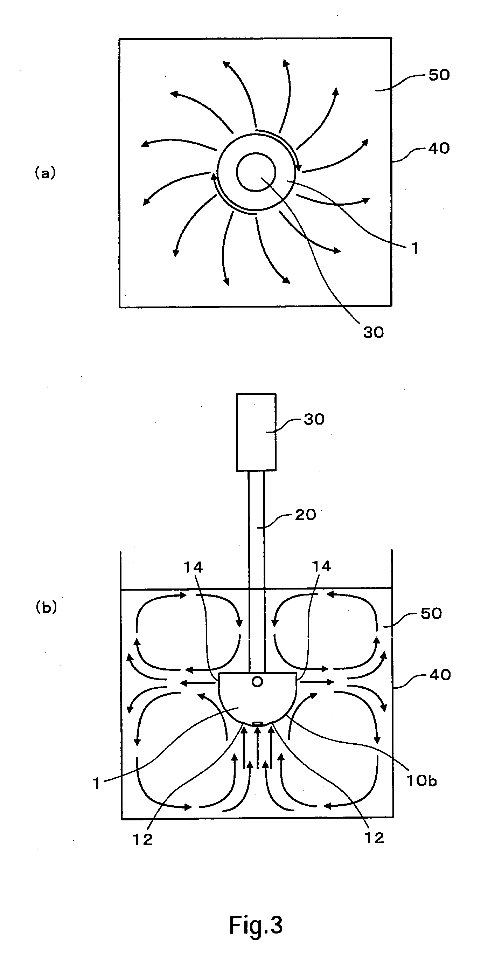

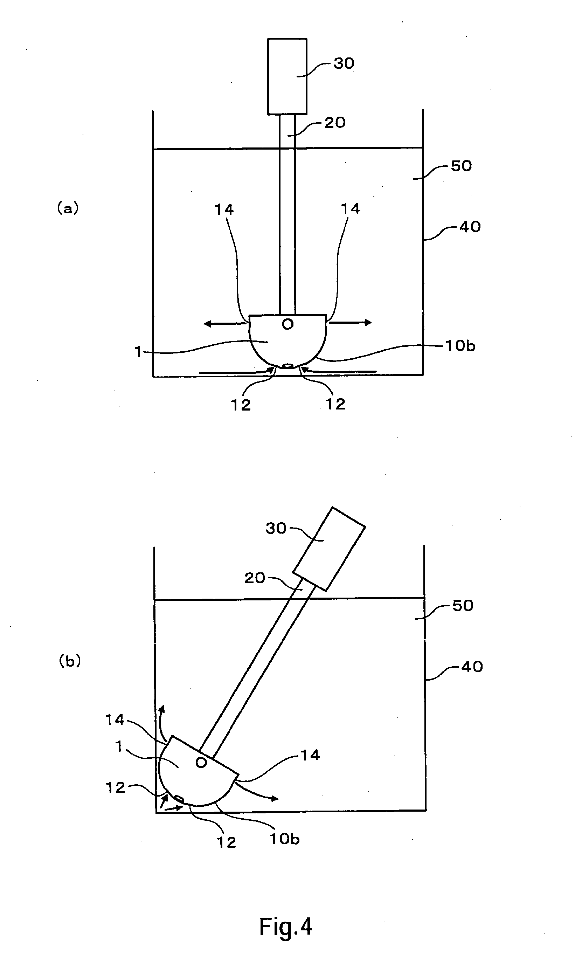

FIGS. 3(a), 3(b), 4(a) and 4(b) are schematic diagrams illustrating examples of how the stirring rotor 1 is used. As illustrated in FIGS. 3(a) to 4(b), the stirring rotor 1 is used under a condition that it is connected to a drive shaft 20 of a drive unit 30 such as a motor, and immersed in a stirrable substance 50 which is a fluid contained in a container 40. The drive unit 30 may be a type fixed to the container 40, a frame or the like, or may be a type adapted to be manually held and operated by a user.

Upon rotating the stirring rotor 1 by the drive unit 30, a flow radiating out from the stirring rotor 1 and a flow directed toward the distal end of the stirring rotor 1 are generated, as described above. As a result, as illustrated in FIGS. 3(a) and 3(b), complicated circulating flows are generated in the stirrable substance 50, so that the stirrable substance 50 will be sufficiently stirred by the circulating flows. In the first embodiment, the rotor body 10 is configured such that a cross-section thereof perpendicular to the direction of the rotation axis has a circular shape, i.e., configured to become free of a portion which collides with the stirrable substance 50 during the rotation, so that it becomes possible to almost eliminate a counteracting force which would otherwise occur during start of the rotation.

In an operation of dispersing a stagnant substance accumulated at a bottom of the container 40, the distal end of the stirring rotor 1 may be moved to a position close to the bottom of the container 40, as illustrated in FIG. 4(a). This makes it possible to suck up the stagnant substance from the inlet ports 12 and jet out it from the outlet ports 14 so as to sufficiently disperse the stagnant substance into the stirrable substance 50. Further, in an operation of dispersing a stagnant substance accumulated at a corner of the container 40, the distal end of the stirring rotor 1 may be moved to a position close to the corner of the container 40, as illustrated in FIG. 4(b). In the first embodiment, the base surface 10b is formed as a spherical surface, so that the inlet ports 12 can be moved even to a position close to a narrow corner.

In the first embodiment, the rotor body 10 is configured such that a cross-section thereof perpendicular to the direction of the rotation axis has a circular shape, i.e., configured to have no protrusion, so that it becomes possible to reduce a risk that the stirring rotor 1 or the container 40 is damaged or chipped, even if the stirring rotor 1 is hit against a wall surface of the container 40. Thus, a user can move the stirring rotor 1 to a position close to the wall surface of the container 40 with a sense of security so as to sufficiently perform the stirring operation throughout the container 40. In addition, it becomes possible to prevent debris or chips of the stirring rotor 1 or the container 40, etc., from being easily mixed into the stirrable substance 50.

In the first embodiment, each of the inlet ports 12 is provided at a position slightly outward of a center of the distal end of the stirring rotor 1 (slightly outward of the central axis C as the rotation axis) so as to keep the inlet port 12 from being closed even when the distal end of the stirring rotor 1 is brought into contact with the wall surface of the container 40. This makes it possible to stably operate the stirring rotor 1 even in a position adjacent to the wall surface of the container 40.

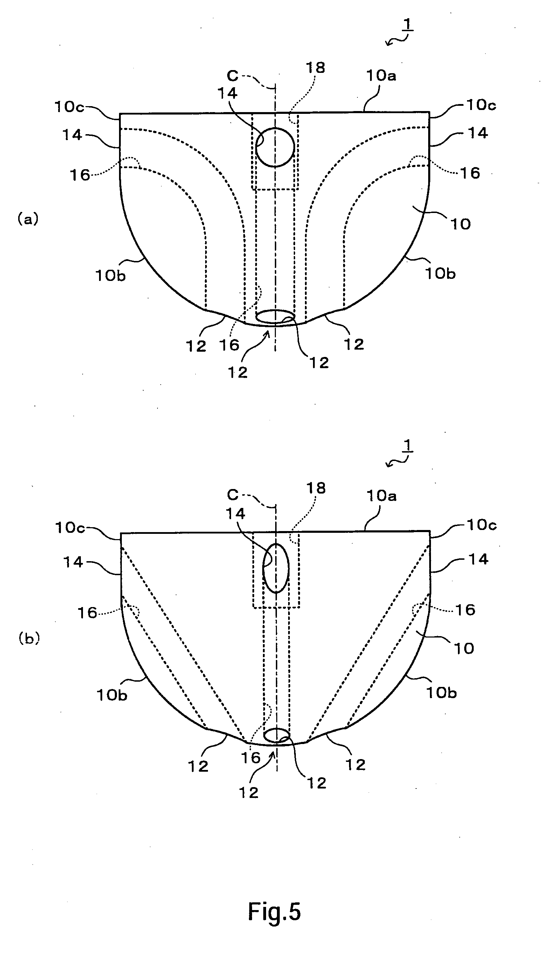

A modification of the stirring rotor 1 will be described below. FIGS. 5(a) and 5(b) are front views illustrating examples of a modified configuration of the flow passage 16. FIG. 5(a) illustrates an example where each of the flow passages 16 is configured as a smoothly curved passage. Based on configuring the flow passage 16 in this manner, a flow resistance in the flow passage 16 can be reduced, so that it becomes possible to further strengthen a flow to be generated by the stirring rotor 1, so as to improve stirring capability. For example, this modified flow passage 16 can be formed by producing the rotor body 10 through casting.

FIG. 5(b) illustrates an example where each of the flow passages 16 is configured in a straight shape. The flow passage 16 configured in this manner can also reduce the flow resistance therein. In addition, this modified flow passage 16 makes it easy to perform cleaning of an inside thereof.

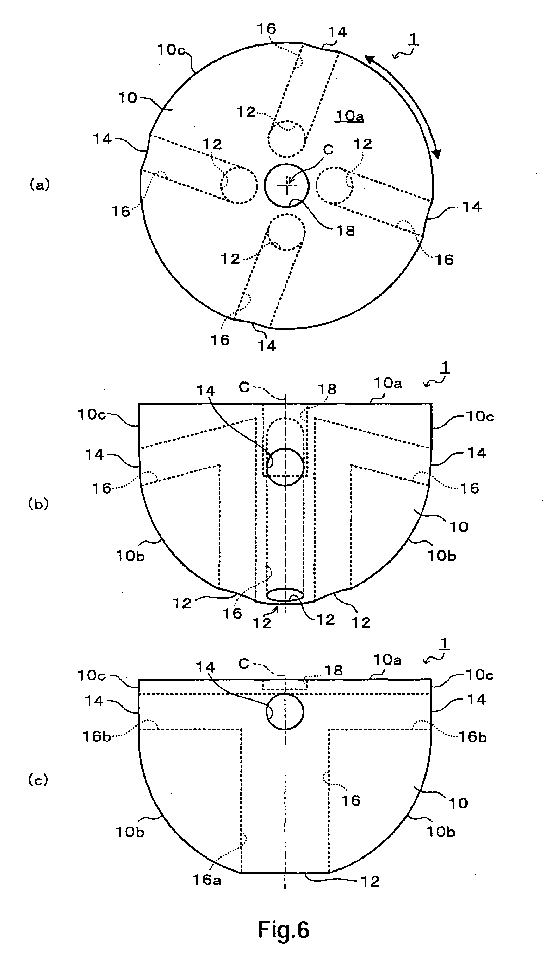

FIGS. 6(a) to 6(c) illustrate examples of a modified configuration of an inlet port 12, an outlet port 14 and the flow passage 16, wherein FIG. 6(a) is a top plan view of the stirring rotor 1, and FIGS. 6(b) and 6(c) are front views of the stirring rotor 1.

FIG. 6(a) illustrates an example where each of the outlet ports 14 is arranged offset in a rotation direction of the stirring rotor 1 in such a manner that a region of a corresponding one of the flow passages 16 in continuous relation to the outlet port 14 is configured to form an angle with respect to the radial direction of the stirring rotor 1. Based on changing an orientation of the outlet port 14 in this manner, for example, when the stirring rotor 1 is rotated in the counterclockwise direction indicated in FIG. 6(a), a jet flow from the outlet port 14 can be smoothly formed. On the other hand, when the stirring rotor 1 is rotated in the clockwise direction indicated in FIG. 6(a), the jet flow from the outlet port 14 can be brought into a turbulent state. In other words, in this modification, the arrangement and orientation of the flow passage 16 and the outlet port 14 are appropriately set, depending on intended purposes of the stirring rotor, so that it becomes possible to obtain an optimal flow for efficient stirring.

FIG. 6(b) illustrates an example where each of the outlet ports 14 is arranged offset in the direction of the rotation axis in such a manner that a region of a corresponding one of the flow passages 16 in continuous relation to the outlet port 14 is configured to be oriented on the side of the distal end (distal end side) of the stirring rotor 1. Based on orienting the outlet port 14 on the distal end side in this manner, a flow toward a fluid level can be weakened, so that it becomes possible to reduce whipping, entrainment of gas bubbles or the like due to strong flows or turbulences adjacent to the fluid level. Alternatively, the outlet port 14 may be oriented on the side of the drive shaft (drive shaft side) to intentionally allow a gas outside of a fluid to be entrained in the fluid.

FIG. 6(c) illustrates an example where the inlet port 12 is provided with respect to the corresponding outlet port 14 in one-to-plurality relationship, wherein the flow passage 16 is configured to extend from the one inlet port 12 and then branch toward the plurality of outlet ports 14. In this manner, the inlet port 12 may be provided as a common port to the plurality of outlet ports 14. In this case, a cross-sectional area of a common region 16a of the flow passage 16 may be set to be equal or approximately equal to a sum of respective cross-sectional areas of a plurality of branched regions 16b of the flow passage 16, so as to keep a flow rate from becoming lower in each of the branched regions 16b. This makes it possible to prevent a stagnant substance from being accumulated in the flow passage 16.

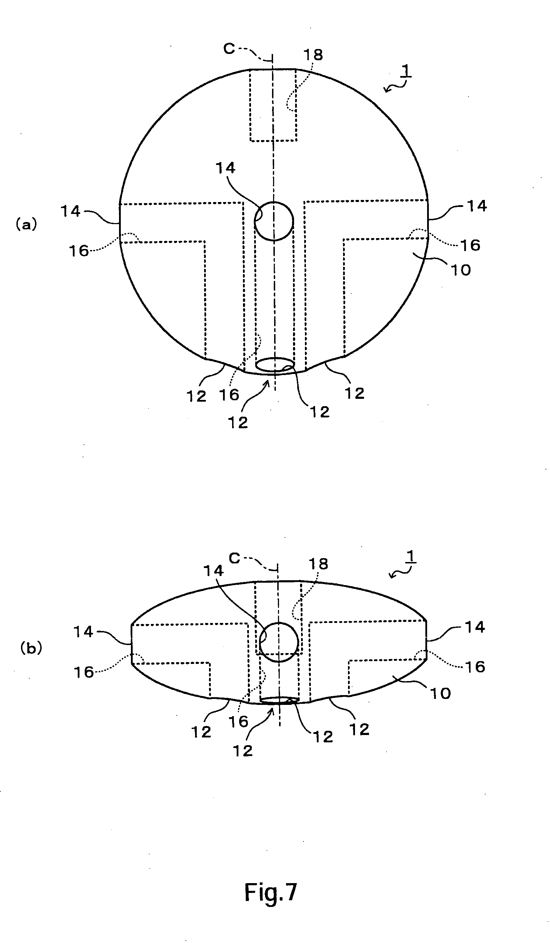

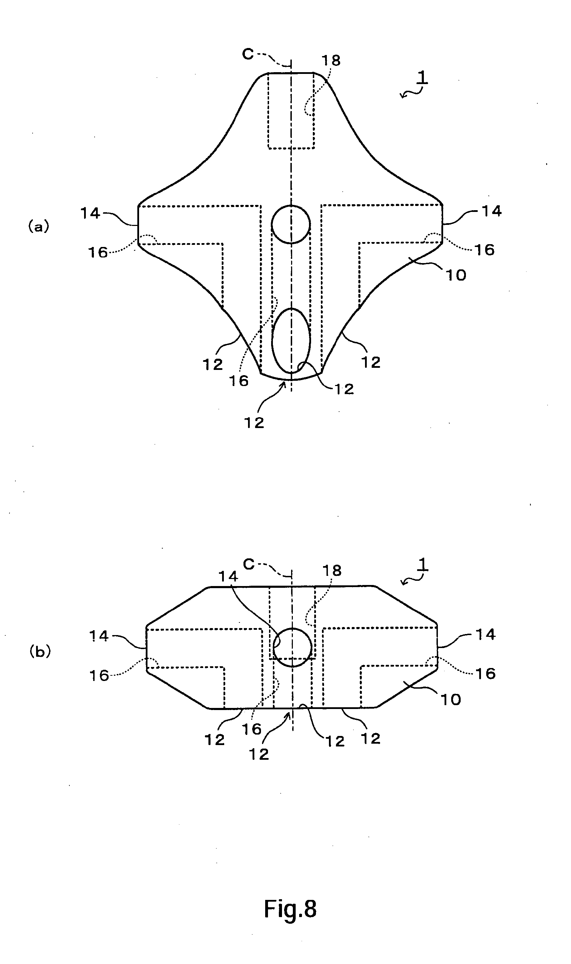

FIGS. 7(a), 7(b), 8(a) and 8(b) are front views illustrating examples of a modified shape of the rotor body 10. FIG. 7(a) illustrates an example where the rotor body 10 is configured in a spherical shape, and FIG. 7(b) illustrates an example where the rotor body 10 is configured in an ellipsoidal shape. The rotor body 10 may have any other shape (e.g., a circular column shape or a disk shape) as long as it is configured such that a cross-section thereof perpendicular to the direction of the rotation axis has a circular shape. However, in view of allowing a flow adjacent to the outer surface of the rotor body 10 to be smoothly formed as a flow accompanied with a jet flow from the outlet port 14, it is preferable to employ a shape where a thickness of the rotor body 10 in the direction of the rotation axis gradually decreases toward the outward side in the radial direction, as illustrated in FIGS. 7(a) or 7(b). Particularly, it is preferable to reduce the thickness in the direction of the rotation axis in whole, as illustrated in FIG. 7(b). In this case, it becomes possible to further strengthen the flow radiating out from the stirring rotor 1.

The term "spherical shape" in the present invention represents a broad concept which includes a shape comprised of a part of a sphere, and a shape similar to a sphere. The term "ellipsoidal shape" in the present invention represents a broad concept which includes a shape comprised of a part of an ellipsoid, and a shape similar to an ellipsoid.

FIG. 8(a) illustrates an example where the rotor body 10 is configured in a shape where a thickness thereof in the direction of the rotation axis gradually decreases toward the outward side in the radial direction and along a concaved curve. Based on this shape, a part of a flow directed toward the inlet ports 12 and a flow from the side of the rotation axis can be smoothly guided along the outer surface of the rotor body 10 and formed as a flow accompanied with a jet flow from the outlet port 14, so that it becomes possible to generate a stronger flow.

FIG. 8(b) illustrates an example where the rotor body 10 is configured in a shape where a thickness of a part thereof in the direction of the rotation axis gradually decreases toward the outward side in the radial direction. In this case, the part having a decreasing thickness may be provided outwardly in the radial direction with respect to the remaining part having a constant thickness. Alternatively, the part having a constant thickness may be provided outwardly in the radial direction with respect to the part having a decreasing thickness.

In addition to setting of the shape of the rotor body 10, the outer surface of the rotor body 10 may be adjusted to have an appropriate roughness or fabricated into a concavo-convex or dimpled surface, to more accurately control flows around the stirring rotor 1. Further, an apple, a soccer ball or the like may be painted on the outer surface of the rotor body 10 configured, for example, in a spherical shape, to improve aesthetic quality.

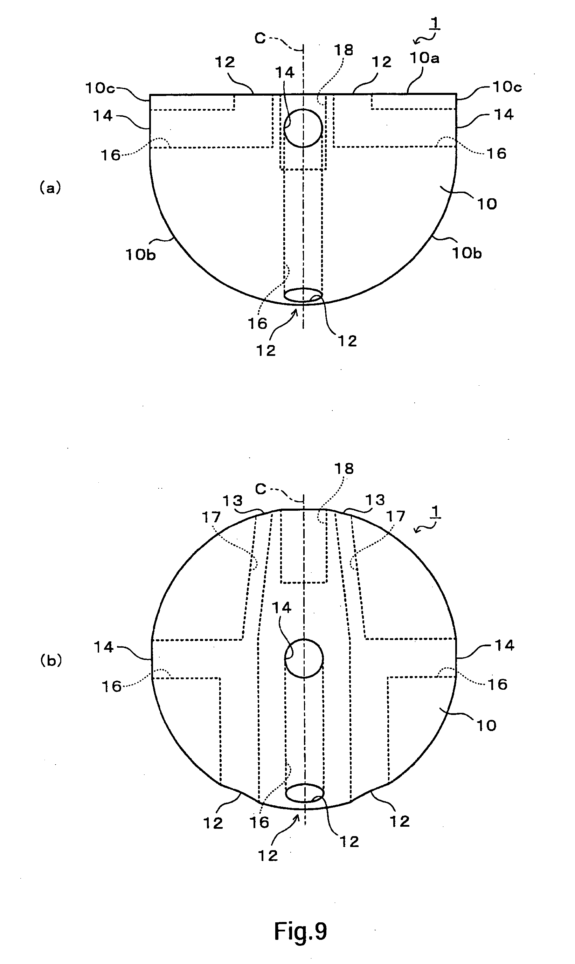

FIG. 9(a) is a front view illustrating an example where the inlet port 12 is provided on the drive shaft side. More specifically, FIG. 9(a) illustrates an example where two of the four inlet ports are provided in the base surface 10a on the drive shaft side. As in this modification, the plurality of inlet ports 12 may be arranged such that a part thereof is provided on the distal end side and a remaining part thereof is provided on the drive shaft side. Alternatively, depending on intended purposes, all of the inlet ports 12 may be provided on the drive shaft side.

Based on appropriately setting the arrangement of the inlet ports 12, an optimal flow for an intended purpose can be generated. Further, the inlet ports 12 on the drive shaft side may be moved to a position close a level of the fluid so as to suck a gas outside of the fluid to positively incorporate the outside gas into the fluid. This makes it possible to allow a gas to be dissolved in the fluid or to allow gas bubbles to be entrained in the fluid.

FIG. 9(b) is a front view illustrating an example where the stirring rotor 1 is provided with a gas suction port 13 for sucking a gas outside of the fluid, and a gas passage 17 communicating the gas suction port 13 with the outlet port 14. More specifically, FIG. 9(b) illustrates an example where two gas suction ports 13 are provided in a drive shaft-side surface region of the rotor body 10 configured in a spherical shape, and a gas passage 17 is formed inside the rotor body 10 to communicate each of the gas suction ports 13 with a corresponding one of the outlet ports 14 via a corresponding one of the flow passages 16. In this modification, under a condition that the rotor body 10 provided with the gas suction ports 13 and the gas passages 17 is set in a posture where the gas suction ports 13 are exposed to an outside of the fluid, the stirring rotor 1 is rotated. This makes it easy to allow a gas to be dissolved in the fluid or to allow gas bubbles to be entrained in the fluid.

In this case, each of the gas suction ports 13 is provided at a position more inward in the radial direction (closer to the rotation axis) than a corresponding one of the inlet ports 12, so that it becomes possible to efficiently incorporate a gas into the fluid while preventing outflow of the fluid from the gas suction ports 13. Instead of communicating the gas passage 17 with the outlet port 14 for jetting out the fluid, the gas passage 17 may be communicated with a dedicated outlet port which is additionally provided in the rotor body 10 to jet out a gas into the fluid.

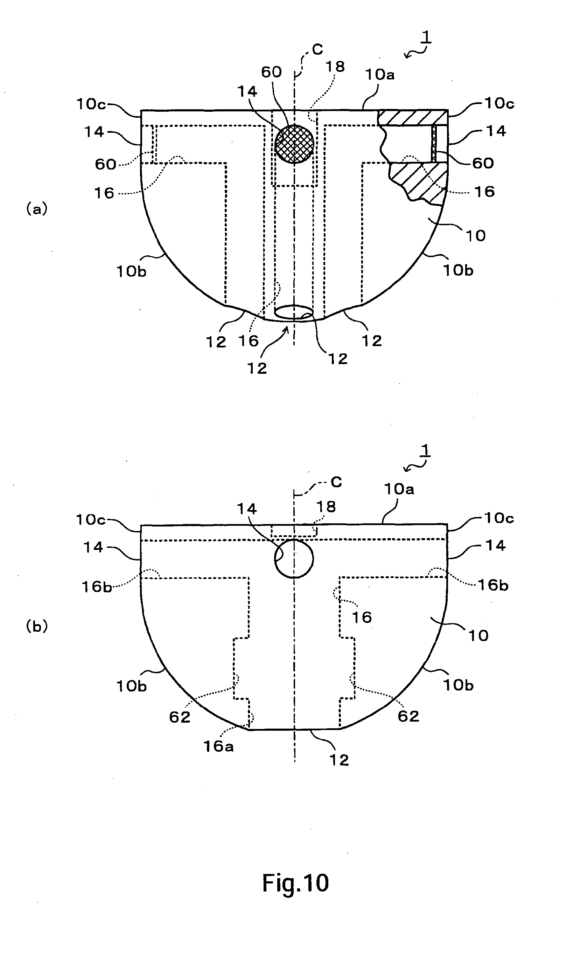

FIG. 10(a) and 10(b) are front views illustrating examples where the stirring rotor 1 is configured to be capable of capturing foreign substances. FIG. 10(a) illustrates an example where a filter 60 for capturing foreign substances such as foreign particles is provided in each of the flow passages 16 at a position adjacent to a corresponding one of the outlet ports 14. Based on interposing the filter 60 in the flow passage 16 in this manner, stirring of the fluid and removal of foreign substances contained in the fluid can be simultaneously performed. The filter 60 may be made of a material suitable for an intended purpose, such as wire mesh or sponge. A position for installing the filter 60 is not limited to the position illustrated in FIG. 10(a), but may be any other suitable position.

FIG. 10(b) illustrates an example where, in the above rotor body where the inlet port 12 is provided as a common port as described above, a concave portion 62 for capturing foreign substances is formed in an inner peripheral wall of the common region 16a of the flow passage 16. In the rotor body where the inlet port 12 is provided as a common port, the fluid passing through the common region 16a of the flow passage 16 is formed as a swirling flow according to the rotation of the stirring rotor 1. Thus, based on forming the concave portion 62 in the inner peripheral wall of the common region 16a of the flow passage 16, foreign substances in the fluid can be captured within the concave portion 62 by the same mechanism as centrifugal separation. The filter 60 may be provided inside the concave portion 62 to allow the captured foreign substances to be reliably held in the concave portion 62.

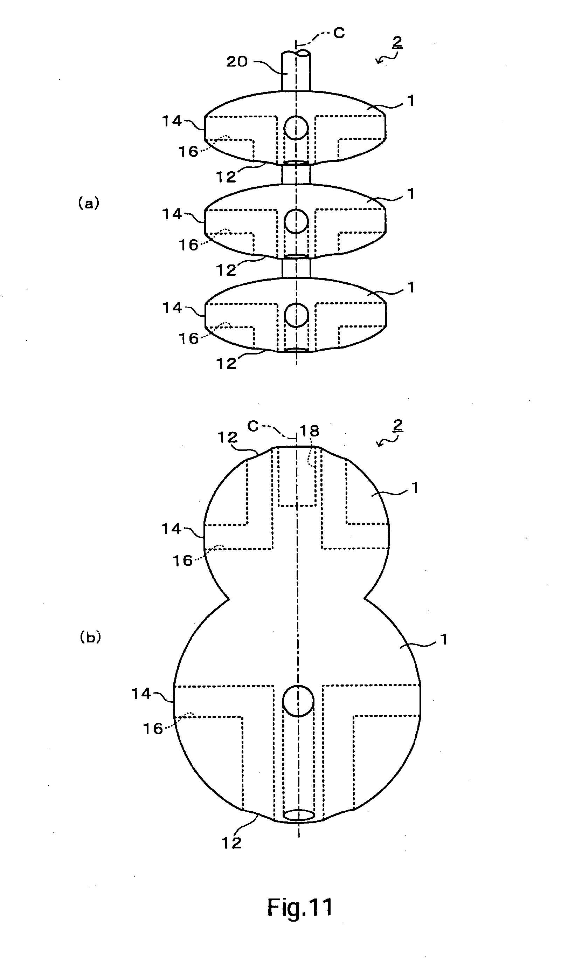

A stirring device 2 formed by coupling a plurality of the stirring rotors 1 will be described below. FIGS. 11(a) and 11(b) are front views illustrating examples of the stirring device 2. More specifically, FIG. 11(a) illustrates an example where the three stirring rotors 1 are coupled together through the drive shaft, and FIG. 11(b) illustrates an example where the two stirring rotors 1 are integrally coupled together. As illustrated in FIGS. 11(a) and 11(b), the plurality of stirring rotors 1 are coupled together in the direction of the rotation axis, so that it becomes possible to further improve the stirring capability. This is effective, particularly, when a fluid to be stirred has a large depth. The stirring device 2 illustrated in FIG. 11(b) may be used to suck a gas outside the fluid from the inlet ports 12 on the drive shaft side. In this case, the gas can be more efficiently incorporated in the fluid.

Based on coupling the plurality of stirring rotors 1, the stirring device 2 can be formed in a shape having high aesthetic quality. For example, the stirring device 2 illustrated in FIG. 11(b) may be painted as a snowman to enhance merchantability as a household whisk.

As described above, the stirring rotor 1 according to the first embodiment comprises: a rotor body 10 configured such that a cross-section thereof perpendicular to a direction of a rotation axis thereof has a circular shape; an inlet port 12 provided in an outer surface of the rotor body 10; an outlet port 14 provided in the outer surface of the rotor body 10 at a position more outward in a radial direction (centrifugal direction) than the inlet port 12; and a flow passage communicating the inlet port 12 with the outlet port 14.

Thus, the stirring rotor 1 can be produced at a cost far lower than an impeller or the like, while ensuring sufficient stirring capability. In addition, the rotor body 10 is configured such that a cross-section thereof perpendicular to the direction of the rotation axis has a circular shape. Thus, it becomes possible to eliminate a counteracting force during start of the rotation, and allow damage, chipping or the like of the stirring rotor 1 or a container containing a stirrable substance to become less likely to occur even if the stirring rotor 1 is hit against the container or the like. This makes it possible to perform a stirring operation in a safe and efficient manner, irrespective of intended purposes.

Further, based on configuring the rotor body 10 such that the cross-section thereof perpendicular to the direction of the rotation axis has a circular shape, the occurrence of unbalance with respect to the rotation axis can be minimized. Thus, differently from an impeller or the like which likely to cause unbalance, it becomes possible to almost eliminate vibration, shaking or the like which would otherwise occur during the rotation.

In the first embodiment, the rotor body 10 is configured in a shape where a thickness thereof in the direction of the rotation axis gradually decreases toward an outward side in the radial direction (centrifugal direction). Thus, a flow adjacent to the outer surface of the rotor body 10 can be smoothly formed as a flow accompanied with a jet flow from the outlet port 14. This makes it possible to generate a stronger flow so as to further improve stirring capacity.

In the first embodiment, the rotor body 10 is configured in a circular column or disk shape where at least one of opposite base surfaces thereof is formed as a spherical shape. This makes it possible to generate a strong flow, and allow the inlet port 12 to be moved to a position close to a narrow area, such as a corner of the container, so as to suck a stagnant substance. In other words, it becomes possible to sufficiently perform the stirring operation throughout the container. The rotor body 10 may be configured in a spherical or ellipsoidal shape.

In the first embodiment, the stirring rotor 1 includes a plurality of the outlet ports 14, wherein the inlet port 12 and the flow passage 16 are provided with respect to a respective one of the plurality of outlet ports 14. Thus, a flow rate in the flow passage 16 can be maintained at an appropriately high value. This makes it possible to prevent deterioration in stirring capability due to accumulation of stagnant substances within the flow passage 16.

In the first embodiment, the inlet port 12 is provided on a side opposite to a drive shaft 20 to be connected to the rotor body 10 so as to rotate the rotor body 10. This makes it possible to suck a stagnant substance at a bottom of the container so as to perform a reliable stirring operation free of unevenness. In addition, it becomes possible to perform the stirring operation without destabilizing a level of the stirrable substance.

In the first embodiment, the inlet port 12 is provided on the outward side in the radial direction (centrifugal direction) with respect to the rotation axis (central axis C). Thus, even if the stirring rotor 1 is moved to a position close to a wall surface of the container, it becomes possible to avoid a situation where the stirring rotor 1 is suckingly brought into contact with the wall surface and thereby the inlet port 12 is closed. This makes it possible to perform a stable stirring operation even in cases where the stirring rotor 1 is manually operated.

The stirring rotor 1 may further comprise a gas suction port 13 for sucking a gas outside of the stirrable substance, and a gas passage 17 communicating the gas suction port 13 with the outlet port 14. This makes it possible to allow gas bubbles to be easily entrained in the stirrable substance.

The stirring device 2 based on the first embodiment comprises the plurality of stirring rotors 1 arranged in the direction of the rotation axis. This makes it possible to further improve the stirring capability and improve the aesthetic quality.

Although the first embodiment has been described based on an example where the thickness of the rotor body 10 in the direction of the rotation axis gradually decreases toward the outward side in the radial direction, the present invention is not limited thereto. For example, depending on properties of a fluid as a stirrable substance, such as viscosity, and intended purposes of stirring, the rotor body 10 may be configured in a disk or circular column shape or the like without a portion where a thickness thereof in the direction of the rotation axis gradually decreases toward the outward side in the radial direction.

### <SECOND EMBODIMENT>

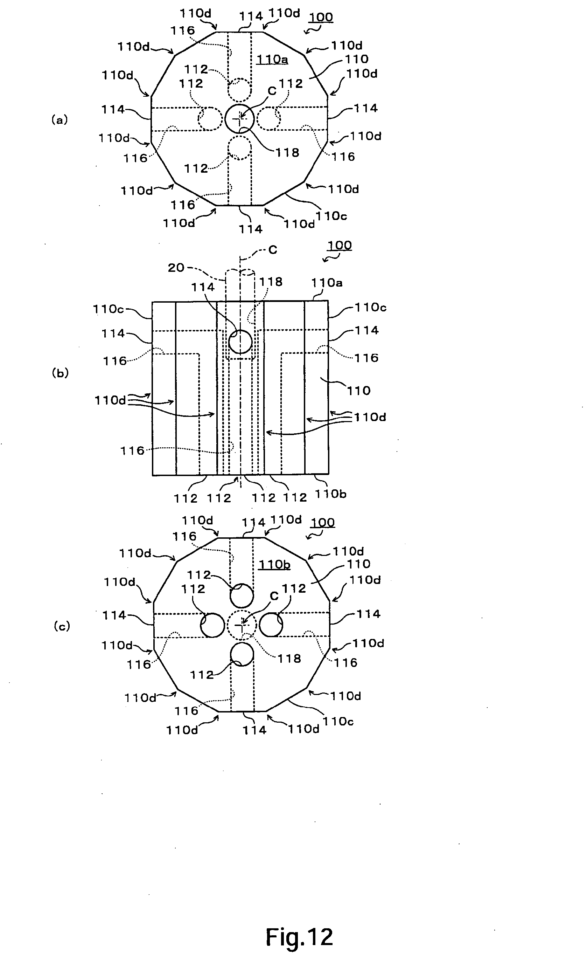

A structure of a stirring rotor 100 according to a second embodiment of the present invention will be described below. FIG. 12(a) is a top plan view of the stirring rotor 100. FIG. 12(b) is a front view of the stirring rotor 100 (a side view is identical thereto), and FIG. 12(c) is a bottom view of the stirring rotor 100. As illustrated in FIGS. 12(a) to 12(c), the stirring rotor 100 comprises a columnar-shaped rotor body 110, a plurality of inlet ports 112 provided in (a bottom surface 110b of) an outer surface of the rotor body 110, a plurality of outlet ports 114 provided in (a lateral surface 110c of) the outer surface of the rotor body 110, and a flow passage 116 formed inside the rotor body 110 to communicate the inlet ports 112 with the outlet ports 114.

The rotor body 110 is configured in a 12-sided column shape where twelve convex segments 110d are provided on an outer peripheral surface (lateral surface 110c) of a circular column (the details will be described later). The rotor body 110 has a connection portion 118 provided in the center of a top surface 110a thereof to allow a drive shaft 20 of a drive unit such as a motor to be connected thereto. Thus, the stirring rotor 100 is adapted to be rotated about a rotation axis defined by a central axis C of the rotor body 110. A technique for the connection between the drive shaft 20 and the connection portion 118 may be any conventional means, such as thread connection or engagement connection.

In the second embodiment, a portion of the rotor body 110 other than the flow passage 116 is configured as a solid structure to provide enhanced strength of the rotor body 110. A material for forming the rotor body 110 is not particularly limited, but an appropriate material suitable for its use conditions, such as metal, ceramics, resin, rubber or wood, may be employed. The rotor body 110 in the first embodiment is designed in a simple and easily-fabricatable or machinable configuration, so that it becomes possible to form the rotor body 110 from a wide variety of materials without being restricted by production processes.

Based on configuring the rotor body 110 in such a simple shape, the occurrence of unbalance with respect to the rotation axis can be minimized. Thus, differently from an impeller or the like which is likely to cause unbalance, it becomes possible to almost eliminate vibration, shaking or the like which would otherwise occur during the rotation.

The inlet ports 112 are provided in the bottom surface 110b of the rotor body 110 (surface region on a side opposite to the connection portion 118). In the second embodiment, the number of the inlet ports 112 is four, wherein the four inlet ports 112 are arranged side-by-side on a circle having a center at the central axis C, in equally spaced relation to each other, and each of the four inlet ports 112 is formed in the same direction as that of the central axis C. The outlet ports 114 are provided in the lateral surface 110c of the rotor body 110. More specifically, in the second embodiment, the number of the outlet ports 114 is four, wherein each of the four outlet ports 114 is provided at a position more outward in a centrifugal direction from the central axis C of the rotor body 110 (at a position farther away from the central axis C in a direction perpendicular to the central axis C) than a corresponding one of the inlet ports 112. Further, each of the outlet ports 114 is formed in a direction perpendicular to the central axis C.

The flow passage 116 is formed as a passage communicating each of the inlet ports 112 with a corresponding one the outlet ports 114. In other words, in the second embodiment, the number of the flow passages 116 formed inside the rotor body 110 is four. Each of the flow passages 116 is formed to extend linearly from the inlet port 112 along the central axis C, and then, after bending at a right angle, extend linearly in the centrifugal direction of the rotor body 110 to reach the corresponding outlet port 114.

In the second embodiment, each of the flow passages 116 is configured as just described to allow a set of the inlet port 112, the outlet port 114 and the flow passage 116 to be easily formed by a boring operation using a drill. Specifically, the set of the inlet port 112, the outlet port 114 and the flow passage 116 can be easily formed by drilling a hole from a position of the inlet port 112 along the central axis C, and drilling a hole from a position of the outlet port 114 toward the central axis C. Although the flow passage 116 in the second embodiment is configured such that a cross-section thereof has a circular shape, the cross-sectional shape is not limited thereto, but may be any other suitable shape such as an elliptical shape or a polygonal shape.

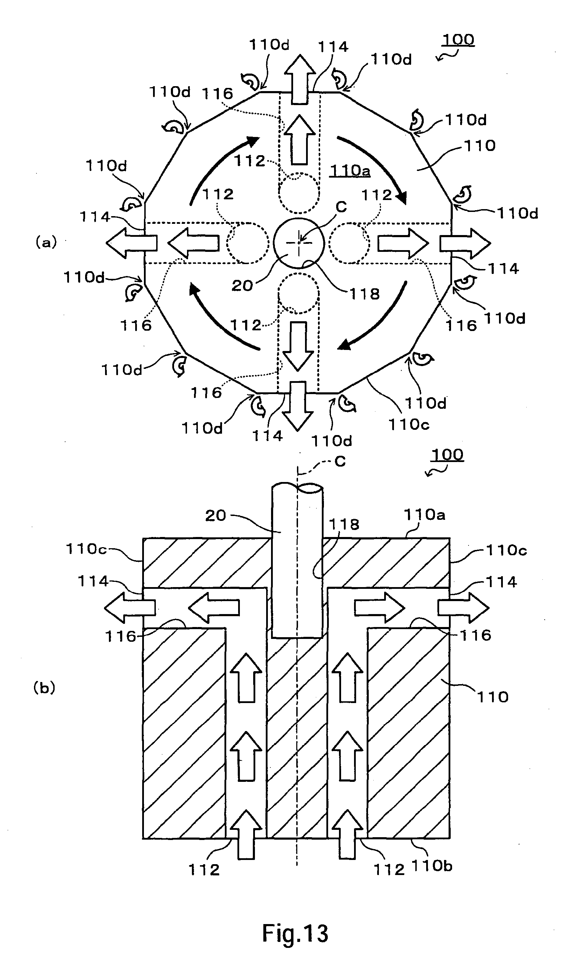

An operation of the stirring rotor 100 will be described below. FIG. 13(a) is a top plan view illustrating the operation of the stirring rotor 100, and FIG. 13(b) is a sectional view illustrating the operation of the stirring rotor 100. The stirring rotor 100 is adapted to be driven and rotated about the central axis C by the drive shaft 20, within a stirrable substance which is a fluid, so as to stir the stirrable substance.

Upon rotating the stirring rotor 100 under a condition that it is immersed in a fluid, a part of the fluid entering inside each of the flow passages 116 is also rotated together with the stirring rotor 100. Then, a centrifugal force is applied to the fluid inside of the flow passage 116, and thereby the fluid inside of the flow passage 116 flows in the centrifugal direction of the stirring rotor 100, as illustrated in FIGS. 13(a) and 13(b). Each of the outlet ports 114 is provided more outwardly in the centrifugal direction of the rotor body 110 than a corresponding one of the inlet ports 112, so that the centrifugal force becomes stronger at the outlet port 114 than at the inlet port 112. Thus, as long as the stirring rotor 100 is being rotated, the fluid flows from the inlet port 112 toward the outlet port 114. More specifically, the fluid inside of the flow passage 116 is jetted out from the outlet port 114, and simultaneously the outside fluid is sucked from the inlet port 112 into the flow passage 116. Consequently, a flow radiating out from the lateral surface 110c with the outlet port 114, and a flow directed toward the bottom surface 110b with the inlet port 112, will be generated in the fluid around the stirring rotor 100.

Further, upon rotating the stirring rotor 100 under a condition that it is immersed in the fluid, swirling or turbulent flows are generated in the fluid around the stirring rotor 100 by the convex segments 110d provided on the lateral surface 110c. Along with the rotation of the stirring rotor 100, the swirling or turbulent flows are integrated with flows from the outlet ports 114, so that more complicated flows (turbulent flows) will be generated in the fluid around the stirring rotor 100.

As above, in the second embodiment, based on a synergistic effect of the inflows of the fluid into the inlet ports 112, the outflows of the fluid from the outlet ports 114 and the swirling or turbulent flows by the convex segments 110d, complicated flows (turbulent flows) can be generated in the fluid around the stirring rotor 100 so as to obtain a nonconventional stirring capability.

In the second embodiment, based on providing the twelve convex segments 110d, the rotor body 110 is configured in a 12-sided column shape, i.e., an outer peripheral shape of a cross-section of the rotor body 110 perpendicular to the central axis (rotation axis) is configured as a 12-sided polygonal shape. Alternatively, the rotor body 110 may be configured in any other multi-sided column shape, depending on viscosity or other property of the stirrable substance, etc. However, in cases where the rotor body 110 is configured in a multi-sided column shape, the number of sides is preferably set to 12 or more, more preferably to 16 or more, particularly preferably to 18 or more, in view of maximally avoiding collision of the rotor body 110 with the surrounding fluid (stirrable substance), and having no sharp protrusion.

In the second embodiment, a cross-sectional area of the inlet port 112 (cross-sectional area of the inlet port 112 perpendicular to a flow passing therethrough) is set to be approximately equal to a cross-sectional area of the outlet port 114 (cross-sectional area of the outlet port 114 perpendicular to a flow passing therethrough). Alternatively, the two cross-sectional areas may be set to become different from each other, depending on intended purposes of the stirring rotor 100, etc. However, in view of allowing the fluid to smoothly flow through the flow passage 116 without stagnation so as to obtain an effective stirring capability, a ratio of the cross-sectional area of the inlet port 112 (cross-sectional area of the inlet port 112 perpendicular to a flow passing therethrough) to the cross-sectional area of the outlet port 114 (cross-sectional area of the outlet port 114 perpendicular to a flow passing therethrough) is preferably set in a range of 1/3 to 3, more preferably in a range of 1/2 to 2, particularly preferably in a range of 5/6 to 1.2.

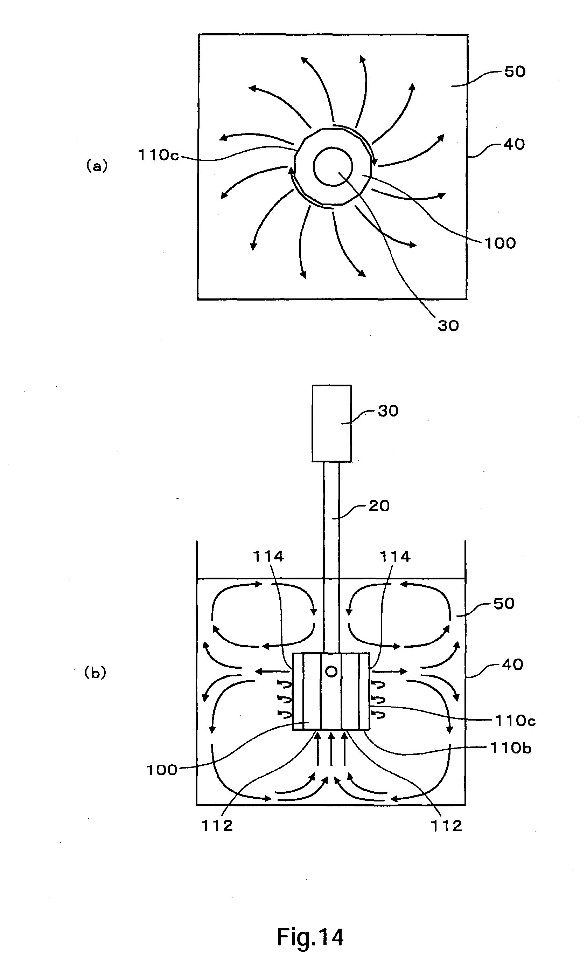

FIGS. 14(a) and 14(b) are schematic diagrams illustrating an example of how the stirring rotor 100 is used. As illustrated in FIGS. 14(a) ad 14(b), the stirring rotor 100 is used under a condition that it is connected to a drive shaft 20 of a drive unit 30 such as a motor, and immersed in a stirrable material 50 which is a fluid contained in a container 40. The drive unit 30 may be a type fixed to the container 40, a frame or the like, or may be a type adapted to be manually held and operated by a user.

Upon rotating the stirring rotor 100 by the drive unit 30, a flow radiating out from the lateral surface 110c of the stirring rotor 100 and a flow directed toward a distal end of the stirring rotor 100 (bottom surface 110b on a side opposite to the drive shaft 20) are generated, as described above. Further, swirling or turbulent flows are generated in a vicinity of the lateral surface 110c of the stirring rotor 100. As a result, as illustrated in FIGS. 14(a) and 14(b), complicated circulating flows are generated in the stirrable substance 50, so that the stirrable substance 50 is sufficiently stirred according to the circulating flows. In an operation of dispersing a stagnant substance accumulated at a bottom of the container 40, the distal end of the stirring rotor 100 may be moved to a position close to the bottom of the container 40. This makes it possible to suck up the stagnant substance from the inlet ports 112 and jet out it from the outlet ports 114 so as to sufficiently disperse the stagnant substance into the stirrable substance 50.

In the second embodiment, the rotor body 110 is configured in a 12-sided column shape, i.e., configured to reduce collision with the stirrable substance 50 during the rotation, so that it becomes possible to almost eliminate a counteracting force which would otherwise occur during start of the rotation. In addition, differently from an impeller or the like, the rotor body 110 has no sharp protrusion, so that it becomes possible to reduce a risk that the stirring rotor 100 or the container 40 is damaged or chipped, even if the stirring rotor 100 is hit against a wall surface of the container 40. Thus, a user can move the stirring rotor 100 to a position close to the wall surface of the container 40 with a sense of security so as to sufficiently perform the stirring operation throughout the container 40. In addition, it becomes possible to prevent debris or chips of the stirring rotor 100 or the container 40, etc., from being easily mixed into the stirrable substance 50.

A modification of the stirring rotor 100 will be described below.

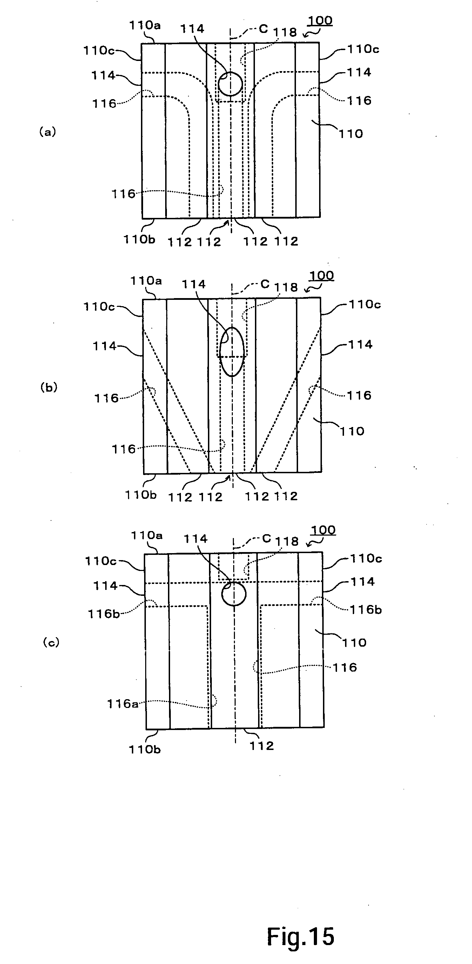

FIGS. 15 to 17 illustrate examples of a modified configuration of the inlet port 112, the outlet port 114 and the flow passage 116.

FIG. 15(a) is a front view illustrating an example where each of the flow passages 116 is configured as a smoothly curved passage. Based on configuring the flow passage 116 in this manner, a flow resistance in the flow passage 116 can be reduced, so that it becomes possible to further strengthen a flow to be generated by the stirring rotor 100, so as to improve stirring capability. For example, this modified flow passage 116 can be formed by producing the rotor body 110 through casting.

FIG. 15(b) is a front view illustrating an example where each of the flow passages 116 is configured in a straight shape. The flow passage 116 configured in this manner can also reduce the flow resistance therein. In addition, this modified flow passage 116 makes it easy to perform cleaning of an inside thereof.

FIG. 15(c) is a front view illustrating an example where the inlet port 112 is provided with respect to the corresponding outlet port 114 in one-to-plurality relationship, wherein the flow passage 116 is configured to extend from the one inlet port 112 and then branch toward the plurality of outlet ports 114. As in this modification, the inlet port 112 may be provided as a common port to the plurality of outlet ports 114. In this case, in view of allowing a fluid (stirrable substance) to smoothly flow through the flow passage 116 without stagnation so as to obtain an effective stirring capability, a ratio of a cross-sectional area of the inlet port 112 (cross-sectional area of the inlet port 112 perpendicular to a flow passing therethrough) to a sum of respective cross-sectional areas of the outlet ports 114 (cross-sectional areas of the outlet ports 114 perpendicular to a flow passing therethrough) is preferably set in a range of 1/3 to 3, more preferably in a range of 1/2 to 2, particularly preferably in a range of 5/6 to 1.2.

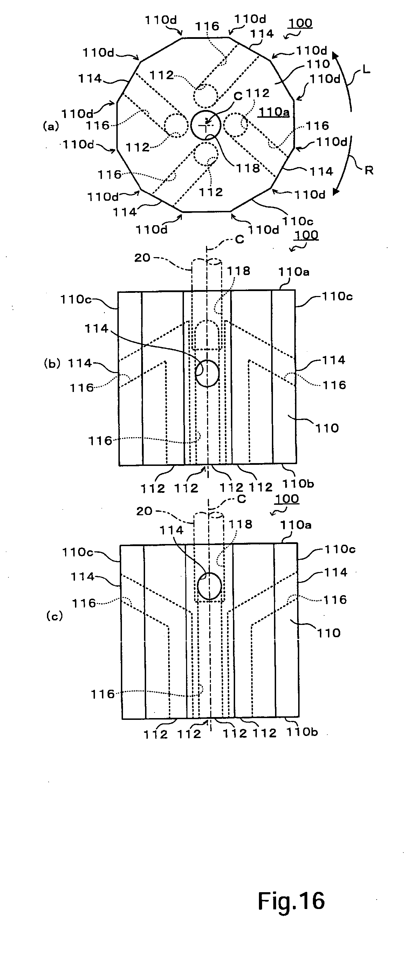

FIG. 16(a) is a top plan view illustrating an example where each of the outlet ports 114 is arranged offset in a rotation direction of the stirring rotor 100 in such a manner that a region of a corresponding one of the flow passages 116 in continuous relation to the outlet port 114 is configured to form an angle with respect to the centrifugal direction of the stirring rotor 100. Based on changing an orientation of the outlet port 114 in this manner, for example, when the stirring rotor 100 is rotated in the counterclockwise direction indicated (by the arrowed line L) in FIG. 16(a), a jet flow from the outlet port 114 can be smoothly generated. On the other hand, when the stirring rotor 100 is rotated in the clockwise direction indicated (by the arrowed line R) in FIG. 16(a), the jet flow from the outlet port 114 can be brought into a turbulent state. In other words, in this modification, the arrangement and orientation of the flow passage 116 and the outlet port 114 are appropriately set, depending on intended purposes of the stirring rotor, so that it becomes possible to obtain an optimal flow for efficient stirring.

FIG. 16(b) is a front view illustrating an example where each of the outlet ports 114 is arranged offset in the direction of the rotation axis in such a manner that a region of a corresponding one of the flow passages 116 in continuous relation to the outlet port 114 is configured to be oriented on the side of the distal end (distal end side) of the stirring rotor 100 (on a side opposite to the drive shaft 20). Based on orienting the outlet port 114 on the distal end side as just described, a flow toward a fluid level can be weakened, so that it becomes possible to reduce whipping, entrainment of gas bubbles or the like due to strong flows or turbulences adjacent to the fluid level.

FIG. 16(c) is a front view illustrating an example where each of the outlet ports 114 is arranged offset in the direction of the rotation axis in such a manner that a region of a corresponding one of the flow passages 116 in continuous relation to the outlet port 114 is configured to be oriented on the side of the drive shaft (drive shaft side). In this case, even if the stirring rotor 100 is rotated in a deep position far away from the fluid level, the entire stirrable substance can be sufficiently stirred. Further, based on generating a flow oriented toward the fluid level, a gas outside of the stirrable substance can be intentionally entrained in the stirrable substance.

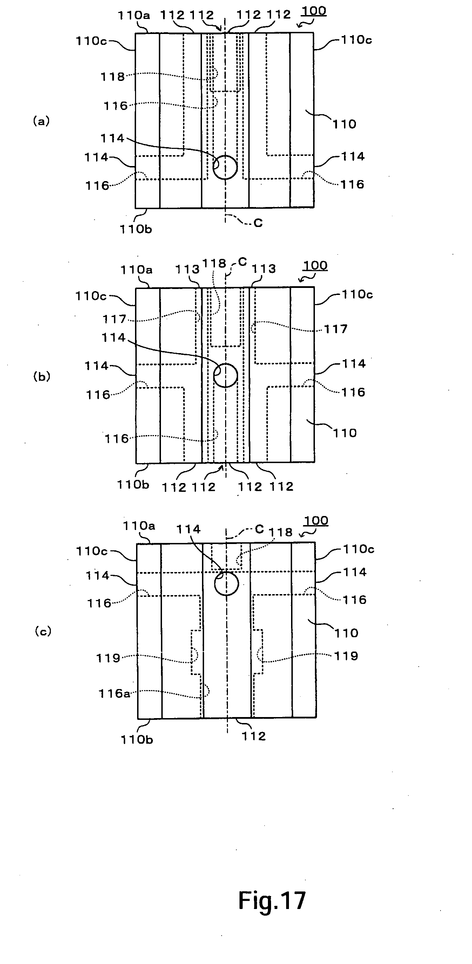

FIG. 17(a) is a front view illustrating an example where the inlet port 112 is provided on the drive shaft side. More specifically, FIG. 17(a) illustrates an example where the four inlet ports 112 are provided in the top surface 110a on the drive shaft side. As in this modification, all of the plurality of inlet ports 112 may be provided on the drive shaft side. Alternatively, depending on intended purposes, the plurality of inlet ports 112 may be arranged such that a part thereof is provided on the distal end side and a remaining part thereof is provided on the drive shaft side.

Based on appropriately setting the arrangement of the inlet ports 112, an optimal flow for an intended purpose can be generated. Further, the inlet ports 112 on the drive shaft side may be moved to a position close a level of the fluid so as to suck a gas outside of the fluid to positively incorporate the outside gas into the fluid. This makes it possible to allow a gas to be dissolved in the fluid or to allow gas bubbles to be entrained in the fluid.

FIG. 17(b) is a front view illustrating an example where the stirring rotor 100 is provided with a gas suction port 113 for sucking a gas outside of the fluid, and a gas passage 117 communicating the gas suction port 113 with the outlet port 114. More specifically, FIG. 17(b) illustrates an example where two gas suction ports 113 are provided in the top surface 110a of the rotor body 110 on the drive shaft side, and a gas passage 117 is formed inside the rotor body 110 to communicate each of the gas suction ports 113 with a corresponding one of the outlet ports 114 via a corresponding one of the flow passages 116. In this modification, under a condition that the rotor body 110 provided with the gas suction ports 113 and the gas passages 117 is set in a posture where the gas suction ports 113 are exposed to an outside of the fluid, the stirring rotor 100 is rotated. This makes it easy to allow a gas to be dissolved in the fluid or to allow gas bubbles to be entrained in the fluid.

In this case, each of the gas suction ports 113 is provided at a position more inward in the radial direction (closer to the rotation axis) than a corresponding one of the inlet ports 112, so that it becomes possible to efficiently incorporate a gas into the fluid while preventing outflow of the fluid from the gas suction ports 113. Instead of communicating the gas passage 117 with the outlet port 114 for jetting out the fluid, the gas passage 117 may be communicated with a dedicated outlet port which is additionally provided in the rotor body 110 to jet out a gas into the fluid.

FIG. 17(c) illustrates an example where, in the above rotor body provided with the one inlet port 112, a common region 116a of the flow passage 116 has an enlarged portion 119 formed by enlarging an inner diameter thereof so as to capture foreign substances therein. In the rotor body having the one inlet port 112, the fluid passing through the common region 116a of the flow passage 116 is formed as a swirling flow according to the rotation of the stirring rotor 100. Thus, based on forming the enlarged portion 119 in an inner peripheral wall of the common region 116a of the flow passage 116, foreign substances in the fluid can be captured within the enlarged portion 119 by the same mechanism as centrifugal separation. In other words, the stirring rotor 100 can simultaneously perform stirring, and removal of foreign substances. A trap may be provided inside the enlarged portion 119 to reliably hold the captured foreign substances.

Although illustration is omitted, instead of providing the enlarged portion 119, a foreign substance-capturing filter may be interposed in the flow passage 116. In this case, the removal of foreign substances can be performed in an easy and simple manner. The filter may be made of a material suitable for an intended purpose, such as wire mesh or sponge.

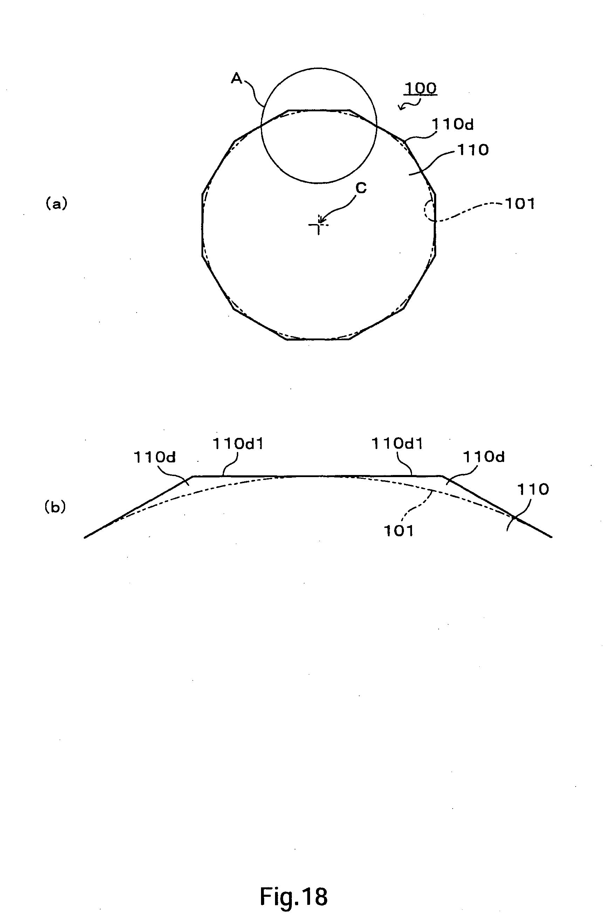

FIG. 18(a) illustrates an outer peripheral shape of a cross-section of the rotor body 110 of the stirring rotor 100 perpendicular to the central axis C, and FIG. 18(b) is an enlarged view of the area A in FIG. 18(a). As described above, in the second embodiment, the rotor body 110 is configured in a multi-side column shape (12-sided column shape), i.e., the outer peripheral shape of the cross-section of the rotor body 110 perpendicular to the central axis (rotation axis) C is configured as a polygonal shape. Specifically, as illustrated in FIG. 18(a), the outer peripheral shape of the cross-section of the rotor body 110 perpendicular to the central axis (rotation axis) C is configured as a shape where a plurality of convex segments 110d are provided in a virtual circle 101, wherein each of the convex segments 110d is configured such that a contour shape thereof in the cross-section perpendicular to the central axis C has a generally triangular shape. Further, as illustrated in FIG. 18(b), the shape of each of the convex segments 110d is set to allow respective sides 110d1 of adjacent ones thereof to be aligned on a straight line, so that the outer peripheral shape of the cross-section of the rotor body 110 perpendicular to the central axis (rotation axis) C is configured as a polygonal shape (convex polygonal shape).

In the second embodiment, the plurality of convex segments 110d are provided in this manner to generate moderate swirling or turbulent flows around the stirring rotor 100 so as to enhance the stirring capability. However, the shape of each of the convex segments 110d is not limited to the above shape, but may be any other suitable shape.

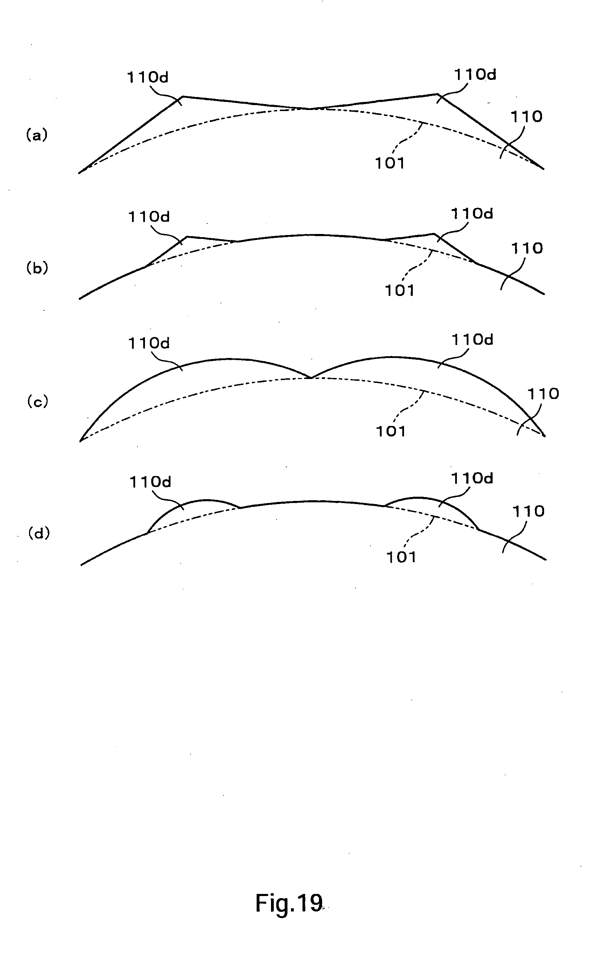

FIGS. 19(a) to 19(d) illustrate examples of a modified shape of the convex segment 110d. For example, the contour shape of the convex segment 110d in the cross-section perpendicular to the central axis C may be a shape which allows the outer peripheral shape of the cross-section of the rotor body 110 perpendicular to the central axis (rotation axis) C to be configured as a concave polygonal shape as illustrated in FIG. 19(a); or may be a shape which allows the outer peripheral shape of the cross-section of the rotor body 110 perpendicular to the central axis (rotation axis) C to be configured as a shape where a plurality of triangular-shaped protrusions are provided in a circle, as illustrated in FIG. 19(b).

Alternatively, the contour shape of the convex segment 110d in the cross-section perpendicular to the central axis C may be a shape other than a generally triangular shape. For example, the contour shape of the convex segment 110d in the cross-section perpendicular to the central axis C may be a generally arc shape as illustrated in FIGS. 19(a) and 19(b). Alternatively, although illustration is omitted, it may be any other suitable polygonal shape or may be any other suitable shape configured by combining curved lines and/or straight lines.

In other words, the shape of the convex segment 110d may be appropriately set depending on intended purposes and use conditions of the stirring rotor 100. Further, it is to be understood that the number or arrangement of the convex segments 110d may also be appropriately set depending on intended purposes and use conditions.

Instead of the convex segment 110d, a concave segment 110e may be provided in the rotor body 110. Specifically, the outer peripheral shape of the cross-section of the rotor body 110 perpendicular to the central axis (rotation axis) C may be configured as a shape where a plurality of concave segments 110e are provided in a virtual circle 101. In this case, the same effect as that in the stirring rotor provided with the convex segments 110d can also be achieved.

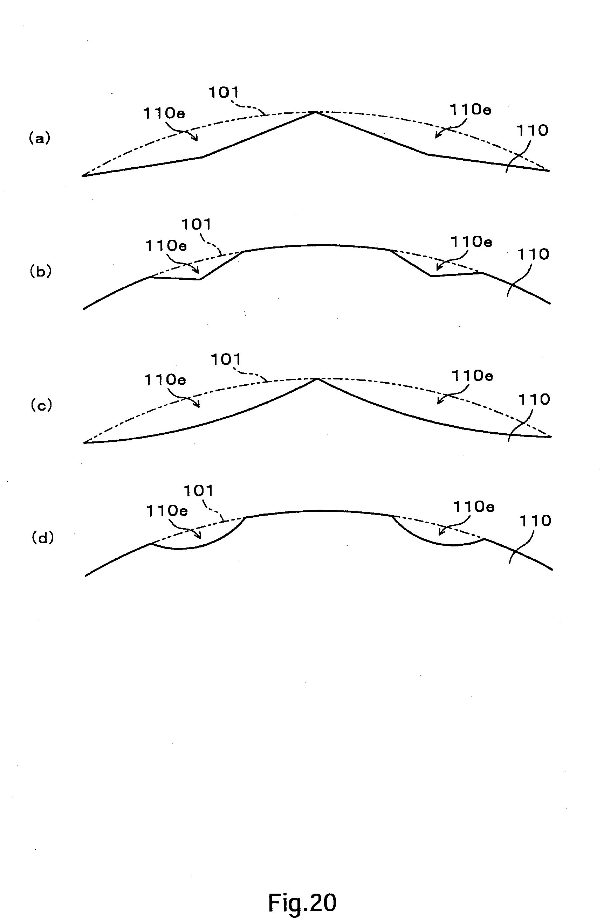

FIGS. 20(a) to 20(d) illustrate examples of a shape of the concave segment 110e. For example, a contour shape of the concave segment 110e in the cross-section perpendicular to the central axis C may be a generally triangular shape as illustrated in FIG. 20(a) or 20(b), or may be a generally arc shape as illustrated in FIG. 20(c) or 20(d). Alternatively, although illustration is omitted, it may be any other suitable shape. In an arrangement of the plurality of concave segments 110e, adjacent ones thereof may be arranged in coupled relation, or may be arranged in spaced-apart relation.

As above, the outer peripheral shape of the cross-section of the rotor body 110 perpendicular to the central axis (rotation axis) C is configured as a shape where the plurality of convex segments 110d or concave segments 110e are provided in the virtual circle 101. This makes it possible to generate moderate swirling or turbulent flows around the stirring rotor 100 so as to enhance the stirring capability.

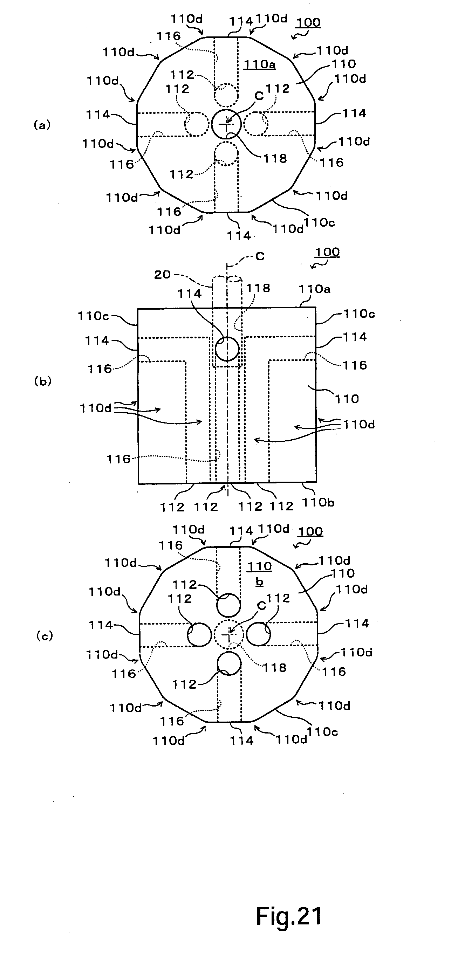

FIGS. 21 to 30 illustrate examples of a modified shape of the rotor body 110 of the stirring rotor 100. The rotor body 110 may have any shape, as long as it is configured such that an outer peripheral shape of a cross-section of at least a part thereof perpendicular to the direction of the rotation axis C has a shape where the plurality of convex segments 110d or concave segments 110e are provided in a circle. Although typical examples of the shape of the rotor body 110 will be described below, it is understood that the shape of the rotor body 110 is not limited to such examples.

FIGS. 21 (a) to 21 (c) illustrate an example where the rotor body 110 is configured to have a 12-sided polygonal shape in cross-section, and a corner of a top of each of the convex segments 110d is rounded, wherein FIG. 21 (a), FIG. 21 (b) and FIG. 21 (c) are a top plan view, a front view (side view) and a bottom view, respectively. Based on rounding the corner of the top of the convex segment 110d, safety of the stirring rotor 100 can be enhanced. In addition, it becomes possible to further reduce a risk that, when the stirring rotor 100 being rotated is brought into contact with the container 40 or the like, debris or chips are generated and mixed in the stirrable substance.

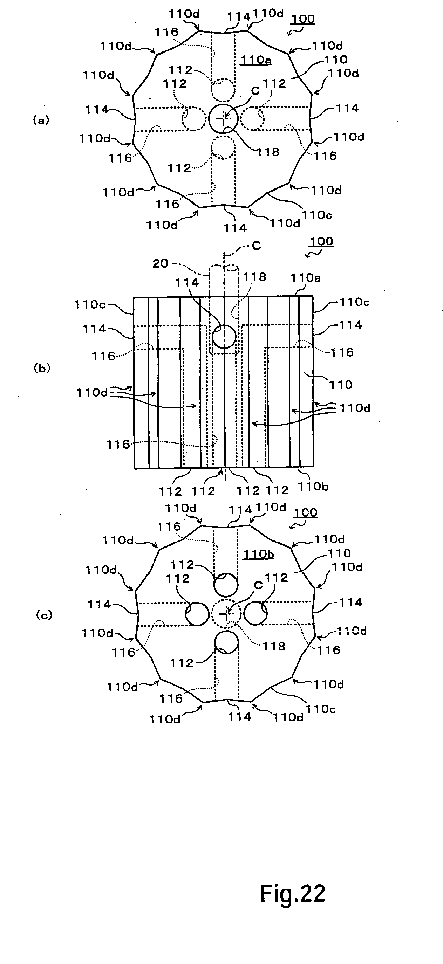

FIGS. 22(a) to 22(c) illustrate an example where the outer peripheral shape of the cross-section of the rotor body 110 perpendicular to the central axis (rotation axis) C is configured as a concave polygonal shape (12-sided polygonal shape), wherein FIG. 22(a), FIG. 22(b) and FIG. 22(c) are a top plan view, a front view (side view) and a bottom view, respectively. As illustrated in FIGS. 22(a) to 22(c), the rotor body 110 may be configured in a multi-sided column shape, wherein each of the top surface 110a and the bottom surface 110b has a concave polygonal shape. Depending on properties of a fluid as a stirrable substance, such as viscosity, etc, the rotor body 110 configured in the above shape can provide an efficient stirring operation.

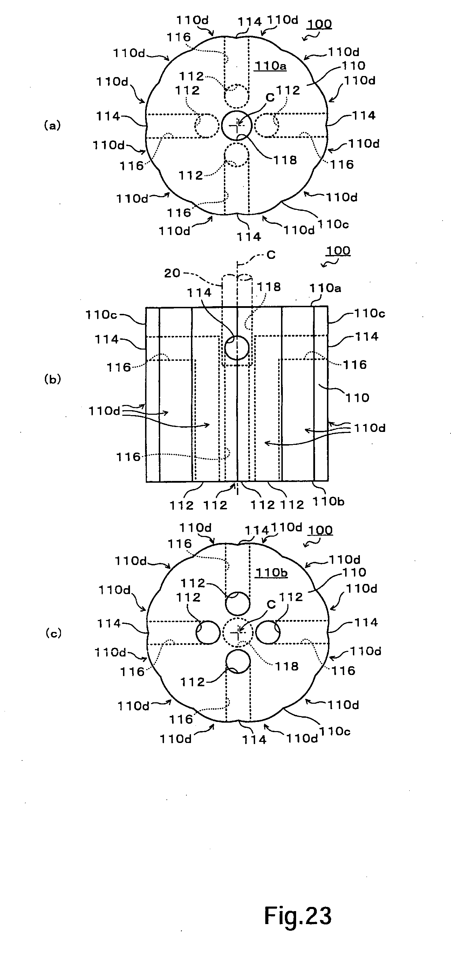

FIGS. 23(a) to 23(c) illustrate an example where the contour shape of the convex segment 110d in the cross-section perpendicular to the central axis (rotation axis) C is configured as a generally arc shape, wherein the twelve convex segments 110d are provided on the lateral surface 110c of the rotor body 110, and wherein FIG. 23(a), FIG. 23(b) and FIG. 23(c) are a top plan view, a front view (side view) and a bottom view, respectively. Depending on properties of a fluid as a stirrable substance, such as viscosity, etc, the rotor body 110 configured in the above shape can provide an efficient stirring operation. In this case, each of the convex segments 110d has a roundish shape, so that it becomes possible to further reduce the risk that, when the stirring rotor 100 being rotated is brought into contact with a container or the like, debris or chips are generated and mixed in the stirrable substance.

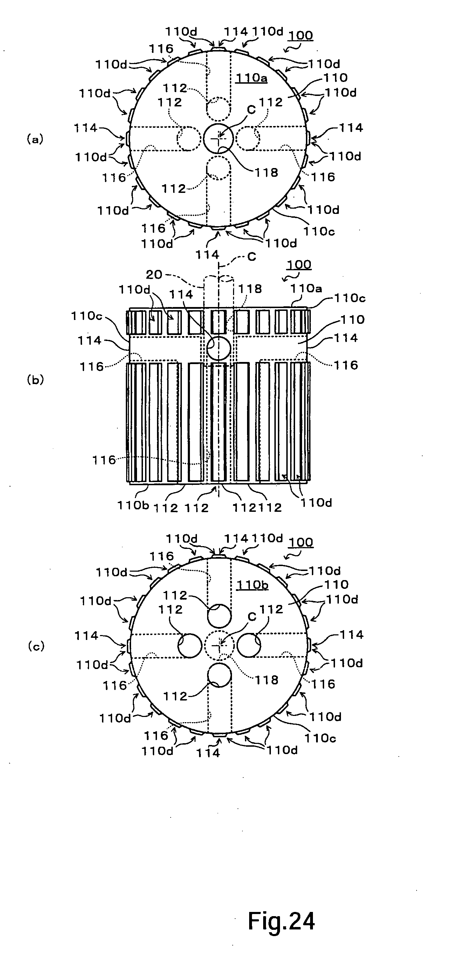

FIGS. 24(a) to 24(c) illustrate an example where the contour shape of the convex segment 110d in the cross-section perpendicular to the central axis (rotation axis) C is configured as a generally trapezoidal shape, wherein the twelve convex segments 110d are provided on the lateral surface 110c of the rotor body 110, and wherein FIG. 24(a), FIG. 24(b) and FIG. 24(c) are a top plan view, a front view (side view) and a bottom view, respectively. Depending on properties of a fluid as a stirrable substance, such as viscosity, etc, the rotor body 110 configured in the above shape can provide an efficient stirring operation. Instead of forming the convex segment 110d in parallel to the central axis C, it may be spirally formed.

Further, the convex segment 110d is not necessarily provide over the overall length of the rotor body 110 in the direction of the central axis C, but may be provided over a part of the overall length, as illustrated in FIG. 24(b). In other words, the convex segment 110d may be provided only in a portion necessary to generate swirling or turbulent flows. According to need, the convex segment 110d may be provided on the top surface 110a and the bottom surface 110b.

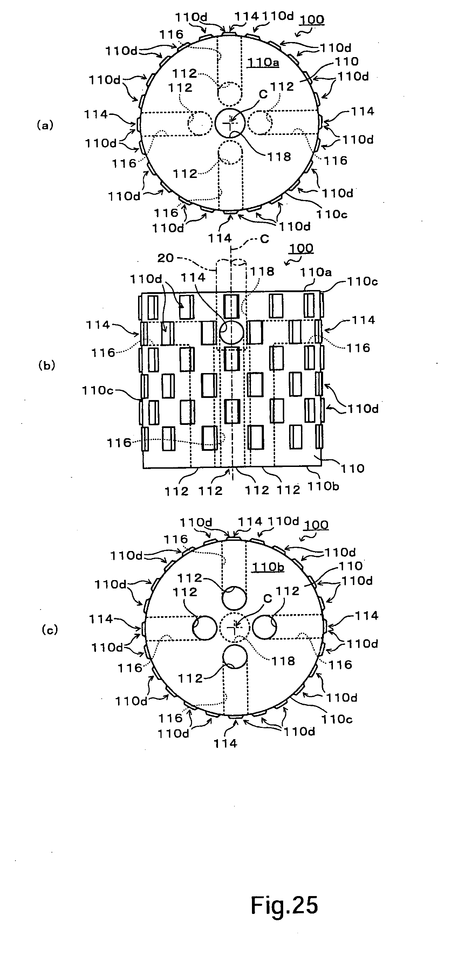

FIGS. 25(a) to 25(c) illustrate an example where the contour shape of the convex segment 110d in the cross-section perpendicular to the central axis (rotation axis) C is configured as a generally trapezoidal shape, wherein a plurality of the convex segments 110d are arranged on the lateral surface 110c of the rotor body 110 in a zigzag pattern, and wherein FIG. 25(a), FIG. 25(b) and FIG. 25(c) are a top plan view, a front view (side view) and a bottom view, respectively. Depending on properties of a fluid as a stirrable substance, such as viscosity, etc, the rotor body 110 configured in the above shape can provide an efficient stirring operation.

In this modification, a top surface of the convex segment 110d is configured in a rectangular shape as illustrated in FIG. 25(b). Alternatively, the top surface may be configured in any other suitable shape, such as a circular shape or an elliptical shape. A shape of the entire convex segment 110d may be configured as one of various shapes, such as a pyramidal or conical shape, or a semi-spherical shape. Instead of the zigzag pattern, the convex segments 110d may be arranged in a matrix pattern.

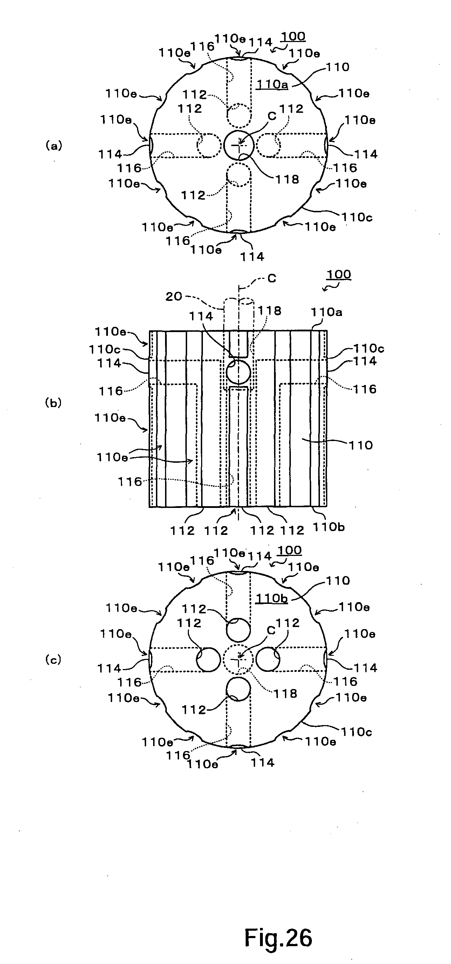

FIGS. 26(a) to 26(c) illustrate an example where the contour shape of the concave segment 110e in the cross-section perpendicular to the central axis (rotation axis) C is configured as a generally arc shape, wherein the twelve concave segments 110e are provided on the lateral surface 110c of the rotor body 110, and wherein FIG. 26(a), FIG. 26(b) and FIG. 26(c) are a top plan view, a front view (side view) and a bottom view, respectively. Depending on properties of a fluid as a stirrable substance, such as viscosity, etc, the rotor body 110 configured in the above shape can provide an efficient stirring operation. The concave segment 110e may be formed in a spiral pattern.

Further, as with the convex segment 110d, the concave segment 110e is not necessarily provide over the overall length of the rotor body 110 in the direction of the central axis C, but may be provided over a part of the overall length. According to need, the concave segment 110e may be provided on the top surface 110a and the bottom surface 110b.

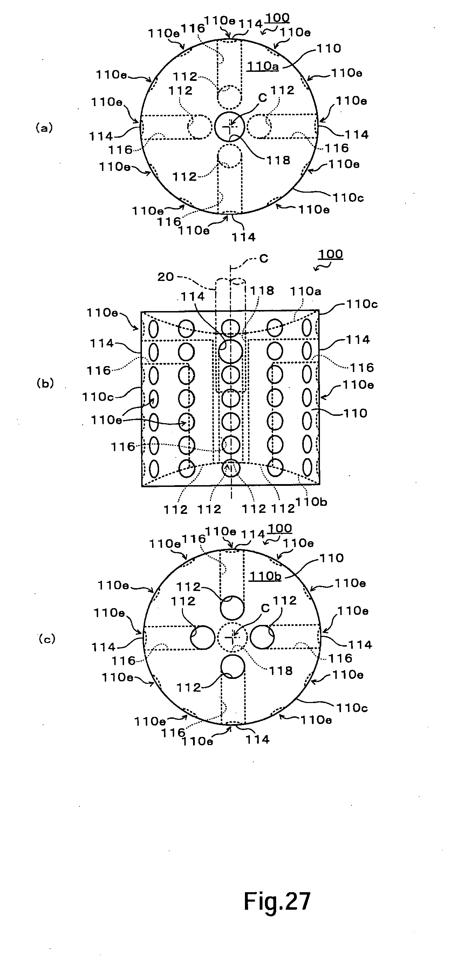

FIGS. 27(a) to 27(c) illustrate an example where a plurality of generally semi-spherical shaped concave segments 110e are arranged on the lateral surface 110c of the rotor body 110 in a matrix pattern, and each of the top surface 110a and the bottom surface 110b is concaved in a generally semi-spherical shape, wherein FIG. 27(a), FIG. 27(b) and FIG. 27(c) are a top plan view, a front view (side view) and a bottom view, respectively. Depending on properties of a fluid as a stirrable substance, such as viscosity, etc, the rotor body 110 configured in the above shape can provide an efficient stirring operation.

The shape of the entire concave segment 110e may be configured as one of various shapes other than the semi-spherical shape, such as a pyramidal shape or a conical shape. Instead of the matrix pattern, the concave segments 110e may be arranged in a zigzag pattern.

Further, each of the top surface 110a and the bottom surface 110b may be concaved in any shape other than the semi-spherical shape, or only one of the top surface 110a and the bottom surface 110b may be concaved. Instead of concaving the top surface 110a and/or the bottom surface 110b, the top surface 110a and/or the bottom surface 110b may be convexed. The concaved or convexed top surface 110a or the concaved or convexed bottom surface 110b may be additionally provided with the convex segment 110d or the concave segment 110e.

It is understood that the top surface 110a (surface region on the drive shaft side) or the bottom surface 110b (surface region on the distal end side) may be concaved or convexed in any rotor body 110 configured in other shape.

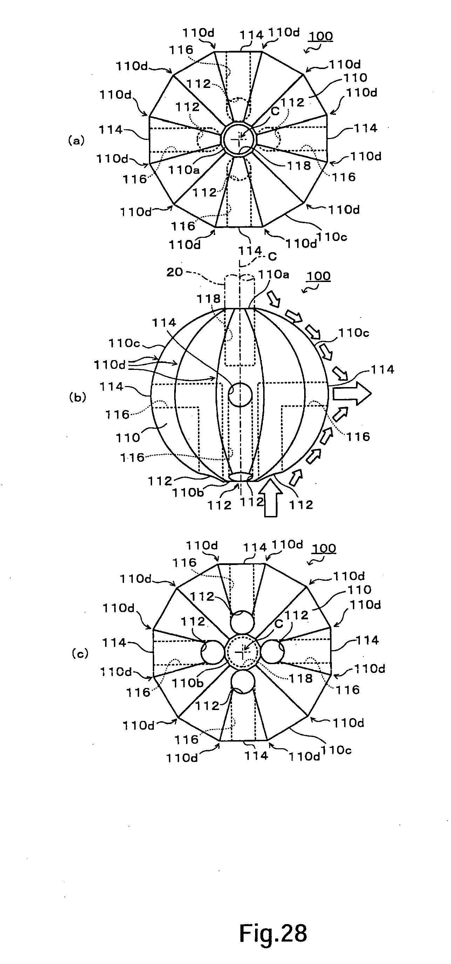

FIGS. 28(a) to 28(c) illustrate an example where the lateral surface 110c is configured as a curved surface to allow the rotor body 110 to be configured in a generally spherical shape, wherein FIG. 28(a), FIG. 28(b) and FIG. 28(c) are a top plan view, a front view (side view) and a bottom view, respectively. The rotor body 110 in this modification is configured such that it has a polygonal shape in top plan view (FIG. 28(a)), and a generally circular shape in front view (side view) (FIG. 28(b)).

In other words, the rotor body 110 is configured in a shape where a thickness thereof in the direction of the central axis (rotation axis) C gradually decreases toward the outward side in the centrifugal direction, so that it becomes possible to smoothly combine a flow adjacent to the lateral surface 110c of the stirring rotor 100 with a flow caused by a jet from the outlet port 114. This makes it possible to strengthen a flow radiating out from the stirring rotor 100 so as to enhance the stirring capability.

The rotor body 110 may be configured such that it has a generally elliptical shape, a generally rhombic shape, a generally semi-circular shape, a generally triangular shape or a generally trapezoidal shape, in front view (side view). Alternatively, the rotor body 110 may be configured as a polyhedron close to a sphere, such as a regular polyhedron or a semi-regular polyhedron. Alternatively, the rotor body 110 may be configured in a shape where a plurality of concave segments 110e (or convex segments 110d) are provided on a spherical body (or an ellipsoidal body), such as a shape of a golf ball.

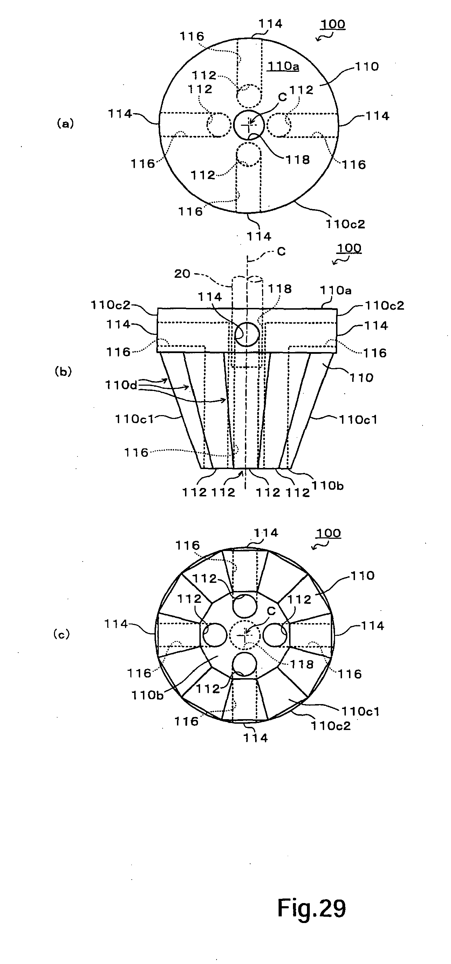

FIGS. 29(a) to 29(c) illustrate an example where the rotor body 110 is configured in a shape of a combination of a circular column and a multi-sided pyramidal frustum, wherein FIG. 29(a), FIG. 29(b) and FIG. 29(c) are a top plan view, a front view (side view) and a bottom view, respectively. As in this modification, the rotor body 110 may be configured by combining a plurality of three-dimensional bodies having different shapes

In this modification, the rotor body 110 is configured by stacking a circular column and a 12-sided pyramidal frustum, in such a manner that a thickness of the rotor body 110 in the direction of the central axis (rotation axis) C gradually decreases toward the outward side in the centrifugal direction. This makes it possible to smoothly combine a flow adjacent to a lateral surface 110c1 of the 12-sided pyramidal frustum portion with a flow caused by a jet from the outlet port 114. In this modification, that a lateral surface 110c2 of the circular column portion is located more outwardly in the centrifugal direction than the lateral surface 110c1 of the 12-sided pyramidal frustum portion. In other words, the convex segments 110d are configured so as not to protrude from the lateral surface 110c2 outwardly in the centrifugal direction to allow an outwardmost contour of the rotor body 110 in a direction perpendicular to the central axis C to have a circular shape. This makes it possible to enhance safety of the stirring rotor 100, while preventing debris or chips from being generated due to contact with a container or the like.

Alternatively, the multi-sided pyramidal frustum portion and the circular column portion may be provided, respectively, on the drive shaft side and on a side opposite to the drive shaft. Further, the multi-sided pyramidal frustum portion may be provided on a respective one of both sides of the circular column portion, or the circular column portion may be provided on a respective one of opposite sides of the multi-sided pyramidal frustum portion. The rotor body 110 is not limited to the combination of a circular column and a multi-sided pyramidal frustum, as illustrated in FIG. 29 (FIGS. 29(a) to 29(c)), but may be configured by combining two or more of various three-dimensional bodies, such as circular column, circular cone, truncated cone, multi-sided column, multi-sided pyramid, multi-sided pyramidal frustum, sphere, semi-sphere, regular polyhedron and semi-regular polyhedron.

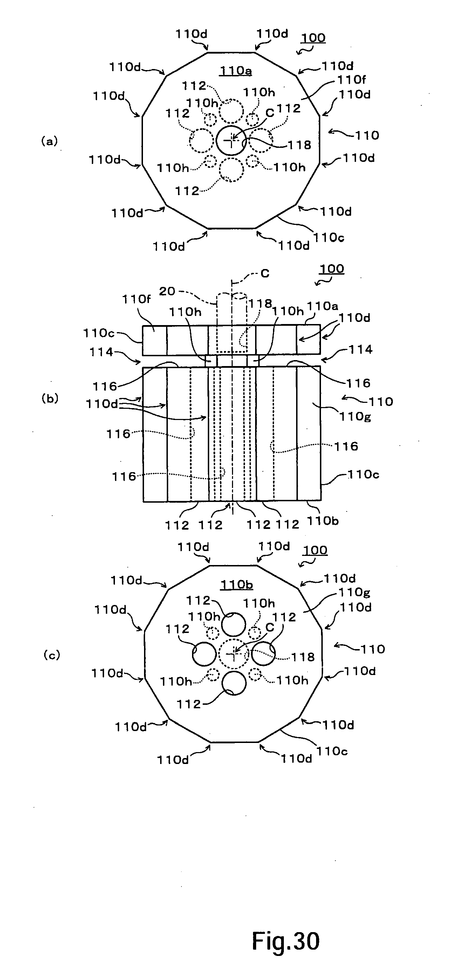

FIGS. 30(a) to 30(c) illustrate an example where the rotor body 110 is divided into two sub-bodies, and a gap is provided between the divided sub-bodies to serve as a part of the flow passage 116, wherein FIG. 30(a), FIG. 30(b) and FIG. 30(c) are a top plan view, a front view (side view) and a bottom view, respectively. More specifically, the rotor body 110 in this modification comprises a drive shaft-side sub-body 110f for allowing the drive shaft 20 to be connected thereto, and a distal end-side sub-body 110g provided with the inlet ports 112, wherein the drive shaft-side sub-body 110f and the distal end-side sub-body 110g are connected together by four connection members 110h. The flow passage 116 is formed inside the distal end-side sub-body 110g to communicate each of the inlet ports 112 with a gap between the drive shaft-side sub-body 110f and the distal end-side sub-body 110g, so that the gap between the drive shaft-side sub-body 110f and the distal end-side sub-body 110g serves as a part of the flow passage 116, and an outer periphery of the gap between the drive shaft-side sub-body 110f and the distal end-side sub-body 110g serves as the outlet port 114. In other words, the outlet port 114 in this modification is provided over the entire circumferential region of the lateral surface 110c of the rotor body 110.

Depending on properties of a fluid as a stirrable substance, such as viscosity, etc, the rotor body 110 configured in the above shape can provide an efficient stirring operation. The drive shaft-side sub-body 110f and the distal end-side sub-body 110g of the rotor body 110 may have different shapes, such as a circular column shape and a multi-sided column shape, respectively.

In addition to setting of the shape of the rotor body 110 as described above, a degree of roughness or a more fine concavo-convex shape of the outer surface of the rotor body 110 may be adjusted to more accurately control flows around the stirring rotor 100. Further, the outer surface of the rotor body 10 may be variously painted or colored to improve aesthetic quality.

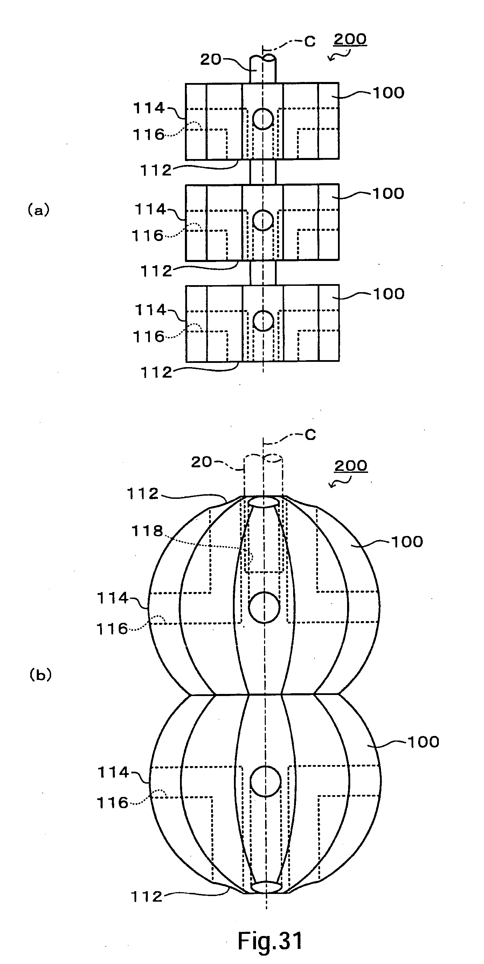

A stirring device 200 formed by coupling a plurality of the stirring rotors 100 will be described below. FIGS. 31(a) and 31(b) are front views illustrating examples of the stirring device 200. More specifically, FIG. 31(a) illustrates an example where the three stirring rotors 100 are coupled together through the drive shaft, and FIG. 31(b) illustrates an example where the two stirring rotors 100 are integrally coupled together. As illustrated in FIGS. 31(a) and 31(b), the plurality of stirring rotors 100 are coupled together in the direction of the rotation axis, so that it becomes possible to further improve the stirring capability. This is effective, particularly, when a fluid to be stirred has a large depth. The stirring device 200 illustrated in FIG. 31(b) may be used to suck a gas outside the fluid from the inlet ports 112 on the drive shaft side. In this case, the gas can be more efficiently incorporated in the fluid.

As described above, the stirring rotor 100 according to the second embodiment comprises: a rotor body 110 configured such that an outer peripheral shape of a cross-section of at least a part thereof perpendicular to a direction of a rotation axis (central axis C) thereof has a shape where a plurality of convex segments 110d or concave segments 110e are provided in a circle (virtual circle 101); an inlet port 112 provided in an outer surface of the rotor body 110; an outlet port 114 provided in the outer surface of the rotor body 110; and a flow passage 116 communicating the inlet port 112 with the outlet port 114, wherein the inlet port 112 is provided at a position closer to the rotation axis than the outlet port 114, and the outlet port 114 is provided at a position more outward in the centrifugal direction from the rotation axis than the inlet port 112.

Thus, the stirring rotor 100 can be produced at a cost far lower than an impeller or the like, while ensuring high stirring capability. Particularly, swirling or turbulent flows generated by the convex segments 110d or the concave segments 110e are synergistically applied to an inflow of the stirrable substance into the inlet port 112 and an outflow of the stirrable substance from the outlet port 114, so that it becomes possible to generate complicated flow (turbulent flow) in the fluid around the stirring rotor 100 so as to obtain a nonconventional high stirring capability.

In addition, the occurrence of a counteracting force during start of the rotation or unbalance with respect to the rotation axis can be minimized. Further, it becomes possible to allow damage, chipping or the like of the stirring rotor 100 or a container containing the stirrable substance to become less likely to occur even if the stirring rotor 100 is hit against the container or the like. This makes it possible to perform a stirring operation in a safe and efficient manner, irrespective of intended purposes.

In the second embodiment, each of the convex segments 110d or the concave segments 110e is configured such that a contour shape thereof in the cross-section perpendicular to the direction of the rotation axis has a generally triangular shape. This makes it possible to generate effective swirling or turbulent flows to enhance the stirring capability, while minimizing collision with the stirrable substance.

In the second embodiment, the outer peripheral shape of the cross-section of at least a part of the rotor body 110 perpendicular to the direction of the rotation axis is configured as a polygonal shape by the convex segments 110d or the concave segments 110e. In this manner, the rotor body 110 is configured in a relatively simple shape, so that it becomes possible to increase the strength of the rotor body 110 and reduce a production cost of the rotor body 110.

Preferably, in the second embodiment, the outer peripheral shape of the cross-section of at least a part of the rotor body 110 perpendicular to the direction of the rotation axis is configured as a 12 or more-sided polygonal shape by the convex segments 110d or the concave segments 110e. This makes it possible to obtain high stirring capability while solving problems caused by collision with the stirrable substance, such as a counteracting force during start of the rotation and pulverization of powder particles. In addition, the rotor body 110 has no sharp protrusion, so that it becomes possible to provide enhanced safety, and reduce a risk of the occurrence of damage, chipping or the like which would otherwise be caused when the stirring rotor 100 is hit against a certain object.

In the second embodiment, a corner of a top of each of the convex segments 110d may be rounded. This makes it possible to provide further enhanced safety, and further reduce the risk of the occurrence of damage, chipping or the like which would otherwise be caused when the stirring rotor 100 is hit against a certain object.

In the second embodiment, each of the convex segments 110d or the concave segments 110e may be configured such that a contour shape thereof in the cross-section perpendicular to the direction of the rotation axis has a generally arc shape. This makes it possible to enhance the stirring capability while maintaining the safety and the resistance to damage, chipping or the like during hitting against a certain object.

Preferably, in the second embodiment, a ratio of a cross-sectional area of the inlet port 112 perpendicular to a flow therein (cross-sectional area of the inlet port 112 perpendicular to a flow passing therethrough) to a cross-sectional area of the outlet port 114 perpendicular to a flow therein (cross-sectional area of the outlet port 114 perpendicular to a flow passing therethrough) is set in a range of 1/3 to 3. This makes it possible to allow the stirrable substance to smoothly flow through the flow passage 116 so as to prevent deterioration in stirring capability due to accumulation of stagnant substances within the flow passage 116.

In the second embodiment, the rotor body 110 may be configured in a shape where a thickness thereof in the direction of the rotation axis gradually decreases toward an outward side in the centrifugal direction. Thus, a flow adjacent to the outer surface of the rotor body 110 can be smoothly formed as a flow accompanied with a jet flow from the outlet port 114. This makes it possible to generate a stronger flow so as to further enhance the stirring capacity. In this case, the rotor body 110 may partially have a portion where the thickness in the direction of the rotation axis is constant.

In the second embodiment, the stirring rotor 100 includes a plurality of the outlet ports 114, wherein the inlet port 112 and the flow passage 116 are provided with respect to a respective one of the plurality of outlet ports 14. Thus, a flow rate in the flow passage 116 can be maintained at an appropriately high value, so that it becomes possible to prevent deterioration in stirring capability due to accumulation of stagnant substances within the flow passage 116.

In the second embodiment, the inlet port 112 is provided on a side opposite to the drive shaft 20 to be connected to the rotor body 110 so as to rotate the rotor body 110. This makes it possible to suck a stagnant substance at a bottom of the container so as to perform a reliable stirring operation free of unevenness. In addition, it becomes possible to perform the stirring operation without destabilizing a level of the stirrable substance.

In the second embodiment, the inlet port 112 is provided on the outward side in the centrifugal direction with respect to the rotation axis. In this case, for example, as illustrated in FIG. 28(b), the rotor body 110 can have a portion provided in the center of the distal end thereof to protrude outwardly with respect to the inlet port 112. Thus, even if the stirring rotor 100 is moved to a position close to a wall surface of the container, it becomes possible to avoid a situation where the stirring rotor 100 is suckingly brought into contact with the wall surface and thereby the inlet port 112 is closed. This makes it possible to perform a stable stirring operation even in cases where the stirring rotor 100 is manually operated.

In the second embodiment, the stirring rotor 100 may further comprise a gas suction port 113 provided in the outer surface of the rotor body 110 at a position closer to the rotation axis than the outlet port 114, and a gas passage 117 communicating the gas suction port 113 with the outlet port 114, wherein the stirring rotor 100 is usable in a posture where the gas suction port 113 is exposed to a gas outside of the stirrable substance, so as to allow the outside gas to be sucked from the gas suction port 113 and introduced into the stirrable substance. This makes it possible to allow gas bubbles to be easily entrained in the stirrable substance.

The stirring device 200 based on the second embodiment comprises the plurality of stirring rotors 100 arranged in the direction of the rotation axis. This makes it possible to further enhance the stirring capability.

### <THIRD EMBODIMENT>

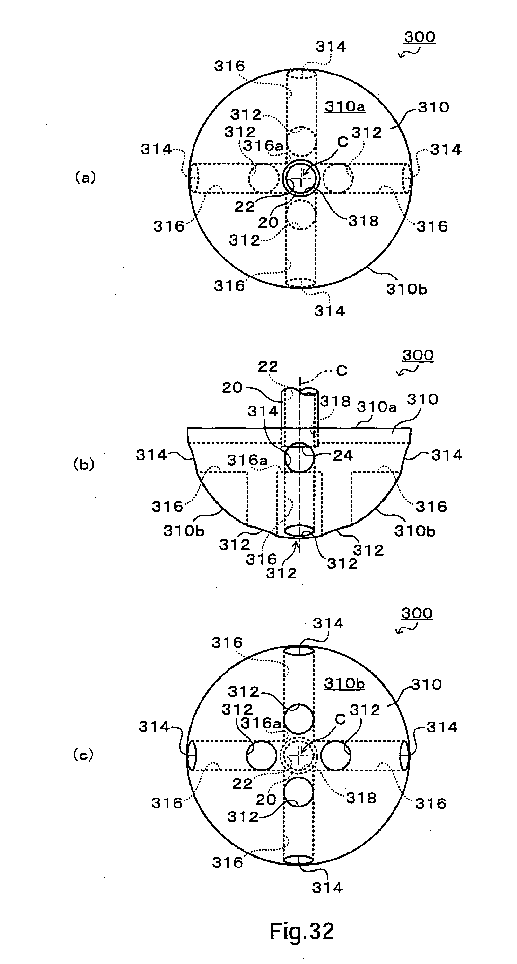

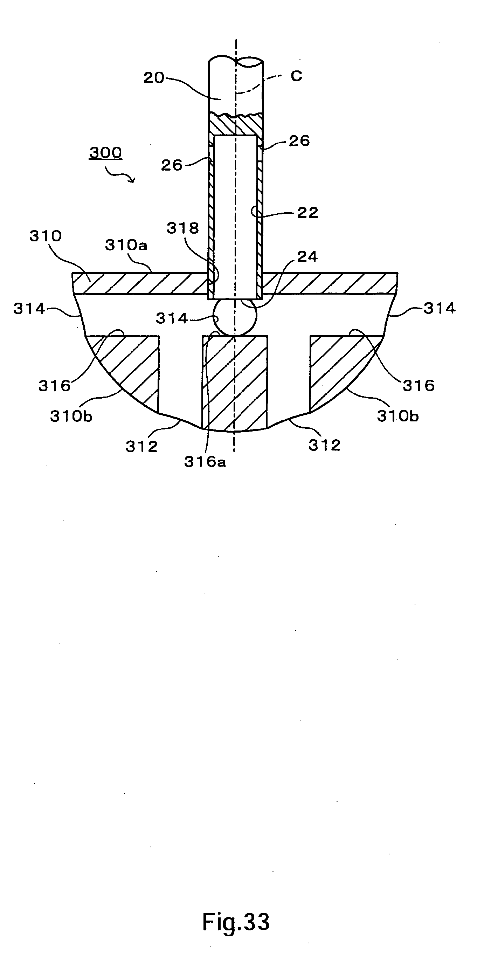

A structure of a stirring rotor 300 according to a third embodiment of the present invention will be described below. FIG. 32(a), FIG. 32(b) and FIG. 32(c) are a top plan view of the stirring rotor 300, a front view of the stirring rotor 300 (a side view is identical thereto), and a bottom view of the stirring rotor 300, respectively. FIG. 33 is a partially sectional view of the stirring rotor 300. As illustrated in FIGS. 32(a) to 33, the stirring rotor 300 comprises a semi-spherical shaped rotor body 310, a plurality of inlet ports 312 provided in an outer surface of the rotor body 310, a plurality of outlet ports 314 provided in the outer surface of the rotor body 310, and a flow passage 316 formed inside the rotor body 310 to communicate the inlet ports 312 with the outlet ports 314.

In the illustrated embodiment, the rotor body 310 is formed in a semi-spherical shape which is a shape obtained by dividing a sphere into halves. Thus, the outer surface of the rotor body 310 comprises a planar top surface 310a which is a surface perpendicular to a central axis C of the rotor body 310, and a spherical inclined surface 310b which is a surface inclined with respect to the central axis C. More specifically, the inclined surface 310b is formed as a surface which extends to become gradually farther away from the central axis C, in a direction from one side (lower side in FIG. 32(b) or 33) to the other side (upper side in FIG. 32(b) or 33) of the central axis C. In other words, the rotor body 310 is configured in a shape where a thickness thereof in a direction of the central axis C gradually decreases toward an outward side in a radial direction thereof.

The rotor body 310 has a connection portion 318 provided in the center of the top surface 310a thereof to allow a drive shaft 20 associated with a drive unit such as a motor to be connected thereto. Thus, the stirring rotor 300 is adapted to be rotated about a rotation axis defined by the central axis C of the rotor body 310. A technique for the connection between the drive shaft 20 and the connection portion 318 may be any conventional means, such as thread connection or engagement connection.

In the third embodiment, a portion of the rotor body 310 other than the flow passage 316 is configured as a solid structure to provide enhanced strength of the rotor body 310. A material for forming the rotor body 310 is not particularly limited, but an appropriate material suitable for its use conditions, such as metal, ceramics, resin, rubber or wood, may be employed. The rotor body 310 in the third embodiment is designed in a simple and easily-fabricatable or machinable configuration, so that it becomes possible to form the rotor body 310 from a wide variety of materials without being restricted by production processes.

Based on configuring the rotor body 310 in such a simple shape, the occurrence of unbalance with respect to the rotation axis can be minimized. Thus, in the third embodiment, it becomes possible to almost eliminate vibration, shaking or the like which would otherwise occur during the rotation, differently from an impeller or the like which is likely to cause unbalance.

The inlet ports 312 are provided in a distal end region (region of the inclined surface 310b on the side of the central axis C) of the rotor body 310 on a side opposite to the connection portion 318. In the third embodiment, the number of the inlet ports 312 is four, wherein the four inlet ports 312 are arranged side-by-side on a circle having a center at the central axis C, in equally spaced relation to each other, and each of the four inlet ports 312 is formed in the same direction as that of the central axis C. The outlet ports 314 are provided in a lateral surface region (region of the inclined surface 310b on the side of the top surface 310a) of the rotor body 310. More specifically, in the third embodiment, the number of the outlet ports 314 is four, wherein each of the four outlet ports 314 is provided at a position more outward in a centrifugal direction (radial direction) from the central axis C of the rotor body 310 (at a position farther away from the central axis C in a direction perpendicular to the central axis C) than a corresponding one of the inlet ports 312. Further, each of the outlet ports 314 is formed in a direction perpendicular to the central axis C.

The flow passage 316 is formed as a passage communicating each of the inlet ports 312 with a corresponding one the outlet ports 314. In other words, in the third embodiment, the number of the flow passages 316 formed inside the rotor body 310 is four. Each of the flow passages 316 is formed to extend linearly from the inlet port 312 along the central axis C, and then, after bending at a right angle, extend linearly in the centrifugal direction of the rotor body 310 to reach the corresponding outlet port 314.

In the third embodiment, each of the flow passages 316 is configured as just described to allow a set of the inlet port 312, the outlet port 314 and the flow passage 316 to be easily formed by a boring operation using a drill. Specifically, the set of the inlet port 312, the outlet port 314 and the flow passage 316 can be easily formed by drilling a hole from a position of the inlet port 312 along the central axis C, and drilling a hole from a position of the outlet port 314 toward the central axis C. Although the flow passage 316 in the third embodiment is configured such that a cross-section thereof has a circular shape, the cross-sectional shape is not limited thereto, but may be any other suitable shape such as an elliptical shape or a polygonal shape.

As illustrated in FIG. 33, the drive shaft 20 for rotationally driving the rotor body 310 has an in-shaft passage 22 formed thereinside to extend in an axial direction (the direction of the central axis C). The drive shaft 20 also has: a connection port 24 provided at a distal end thereof to serve as an opening for communicating the in-shaft passage 22 with the flow passage 316; and an external opening 26 provided at a given position of a lateral surface of the drive shaft 20 to serve as an opening for communicating the in-shaft passage 22 with the outside.

The rotor body 310 has a common space 316a formed in the central region of the rotor body 310 to serve as a space communicated with all of the flow passages 316, wherein the connection port 24 at the distal end of the drive shaft 20 is opened to the common space 316a. Specifically, the connection portion 318 is configured to allow the in-shaft passage 22 of the drive shaft 20 to be communicated with the common space 316a, whereby the in-shaft passage 22 is connected to all of the flow passages 316 via the connection port 24 and the common space 316a.

In the third embodiment, the common space 316a is formed by extending a region of the flow passage 316 along the centrifugal direction. Alternatively, a circular or rectangular column-shaped separate chamber may be formed inside the rotor body 310, and connected to the flow passages 316 to serve as the common space 316a.

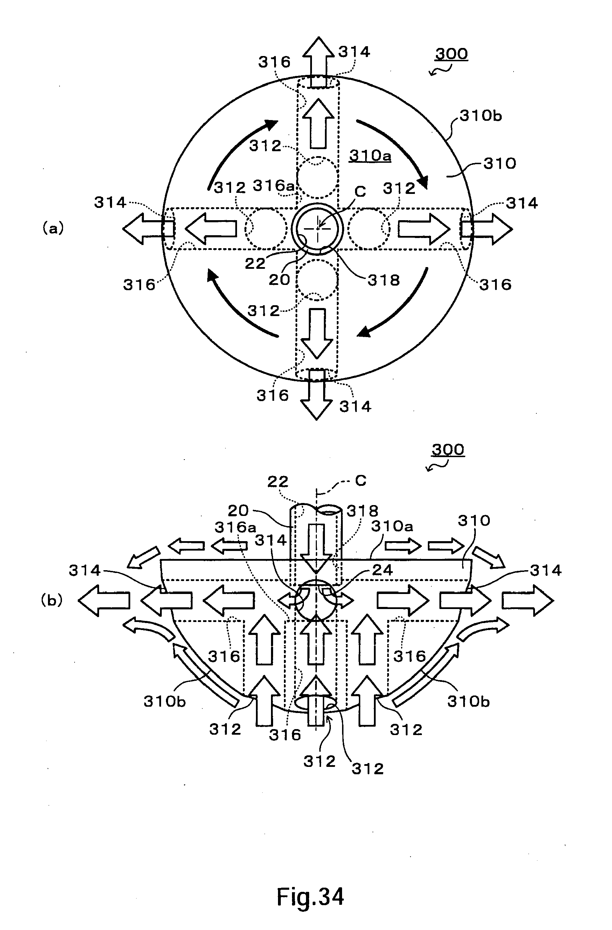

An operation of the stirring rotor 300 will be described below. FIG. 34(a) is a top plan view illustrating the operation of the stirring rotor 300, and FIG. 34(b) is a front view illustrating the operation of the stirring rotor 300. The stirring rotor 300 is adapted to be driven and rotated about the central axis C by the drive shaft 20, within a stirrable substance which is a fluid, so as to stir the stirrable substance.

Upon rotating the stirring rotor 300 under a condition that it is immersed in a fluid, a part of the fluid entering inside each of the flow passages 316 is also rotated together with the stirring rotor 300. Then, a centrifugal force is applied to the fluid inside of the flow passage 316, and thereby the fluid inside of the flow passage 316 flows toward an outward side in the radial direction of the stirring rotor 300, as illustrated in FIGS. 34(a) and 34(b). Each of the outlet ports 314 is provided more outwardly in the centrifugal direction of the rotor body 310 than a corresponding one of the inlet ports 312, so that the centrifugal force becomes stronger at the outlet port 314 than at the inlet port 312. Thus, as long as the stirring rotor 300 is being rotated, the fluid flows from the inlet port 312 toward the outlet port 314. More specifically, the fluid inside of the flow passage 316 is jetted out from the outlet port 314, and simultaneously the outside fluid is sucked from the inlet port 312 into the flow passage 316. Consequently, a flow radiating out from the lateral surface region with the outlet port 314, and a flow directed toward the distal end region with the inlet port 312, will be generated in the fluid around the stirring rotor 300.

Further, upon rotating the stirring rotor 300 under a condition that it is immersed in the fluid, a part of the fluid adjacent to an outer surface of the stirring rotor 300 is rotated together with the stirring rotor 300 by the effect of viscosity. Thus, a centrifugal force is also applied to the fluid adjacent to the outer surface of the stirring rotor 300, so that the outer surface-adjacent fluid flows to a vicinity of each of the outlet ports 314 along the outer surface of the stirring rotor 300, and becomes a flow accompanied with the jet flow from the outlet port 314, as illustrated in FIGS. 34(a) and 34(b).

In the third embodiment, the rotor body 310 is configured in a semi-spherical shape, so that it becomes possible to smoothly combine a flow adjacent to the distal end region of the stirring rotor 300 with the flow radiating out from the lateral surface region. In addition, based on configuring the rotor body 310 in the above shape, a part of the flow directed toward the distal end region of the stirring rotor 300 can be smoothly guided to the vicinity of each of the outlet ports 314 along the inclined surface 310b, and combined with the flow radiating out from the lateral surface region. This makes it possible to generate strong flows in the surrounding fluid, so that the stirring rotor 300 becomes capable of performing an efficient stirring operation.

Furthermore, in the third embodiment, the in-shaft passage 22 has one end (connection port 24) communicated with the flow passage, and the other end (external opening 26) communicated with the outside, whereby external other fluid, such as gas or liquid, can be efficiently sucked into the flow passages 316. Specifically, the external fluid in the in-shaft passage 22 can be strongly sucked by means of a negative pressure to be generated in the common space 316a in the central region by flows in the flow passages 316 toward the outward side in the centrifugal direction. Then, the fluid from each of the inlet ports 312 and the fluid from the in-shaft passage 22 can be mixed together through turbulences generated in a respective one of the flow passages 316 by the negative suction pressure, and jetted out from a corresponding one of the outlet ports 314.

Thus, the stirring rotor 300 according to the third embodiment is capable of quickly and efficiently perform a mixing/stirring operation, such as an operation of introducing an external gas into a liquid via the in-shaft passage 22 while immersing the stirring rotor 300 in the liquid, so as to allow the gas to be dissolved or bubbled in the liquid, or an operation of, under a condition that the stirring rotor 300 is immersed in a first liquid, introducing an external second liquid different from the first liquid, into the first liquid via the in-shaft passage 22, so as to allow a plurality of different liquids to be mixed together. Particularly, in the operation of introducing an external gas into a liquid, the external gas is divided into fine gas bubbles according to turbulences caused by the negative suction pressure, so that it becomes possible not only to allow the gas to be efficiently dissolved or bubbled in the liquid, but also to generate micro-bubbles in the liquid.

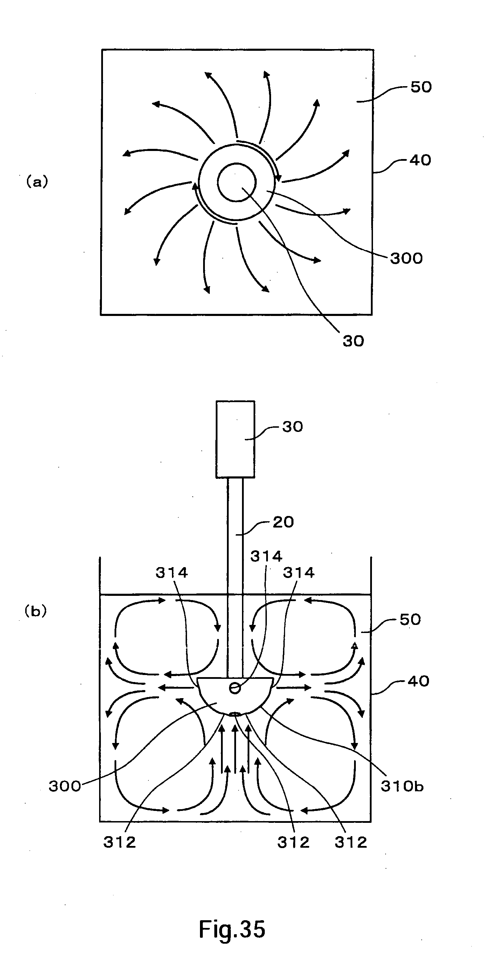

FIGS. 35(a) and 35(b) are schematic diagrams illustrating an example of how the stirring rotor 300 is used. As illustrated in FIGS. 35(a) and 35(b), the stirring rotor 300 is used under a condition that it is connected to a drive shaft 20 of a drive unit 30 such as a motor, and immersed in a stirrable substance 50 which is a fluid contained in a container 40. The drive unit 30 may be a type fixed to the container 40, a frame or the like, or may be a type adapted to be manually held and operated by a user.

Upon rotating the stirring rotor 300 by the drive unit 30, a flow radiating out from the lateral surface region of the stirring rotor 300 and a flow directed toward the distal end region of the stirring rotor 300 are generated, as described above. As a result, as illustrated in FIGS. 35(a) and 35(b), complicated circulating flows are generated in the stirrable substance 50, so that the stirrable substance 50 will be sufficiently stirred by the circulating flows.

In an operation of dispersing a stagnant substance accumulated at a bottom of the container 40, the distal end region of the stirring rotor 300 may be moved to a position close to the bottom of the container 40. This makes it possible to suck up the stagnant substance from the inlet ports 312 and jet out it from the outlet ports 314 so as to sufficiently disperse the stagnant substance into the stirrable substance 50. Further, in an operation of dispersing a stagnant substance accumulated at a corner of the container 40, the distal end region of the stirring rotor 300 may be moved to a position close to the corner of the container 40. In the third embodiment, the rotor body 310 is configured in a semi-spherical shape, so that the inlet ports 312 can be moved even to a position close to a narrow corner.

In the third embodiment, the rotor body 310 is configured in a semi-spherical shape, i.e., configured to have no collision with the stirrable substance 50 during the rotation, so that it becomes possible to almost eliminate a counteracting force which would otherwise occur during start of the rotation. In addition, differently from an impeller or the like, the rotor body 310 has no sharp protrusion, so that it becomes possible to reduce a risk that the stirring rotor 300 or the container 40 is damaged or chipped, even if the stirring rotor 300 is hit against a wall surface of the container 40. Thus, a user can move the stirring rotor 300 to a position close to the wall surface of the container 40 with a sense of security so as to sufficiently perform the stirring operation throughout the container 40. In addition, it becomes possible to prevent debris or chips of the stirring rotor 300 or the container 40, etc., from being easily mixed into the stirrable substance 50.

In the third embodiment, each of the inlet ports 312 is provided at a position slightly outward of a center of the distal end region of the stirring rotor 300 (slightly outward of the central axis C as the rotation axis) so as to keep the inlet port 312 from being closed even when the distal end region of the stirring rotor 300 is brought into contact with the wall surface of the container 40. This makes it possible to stably operate the stirring rotor 300 even in a position adjacent to the wall surface of the container 40.

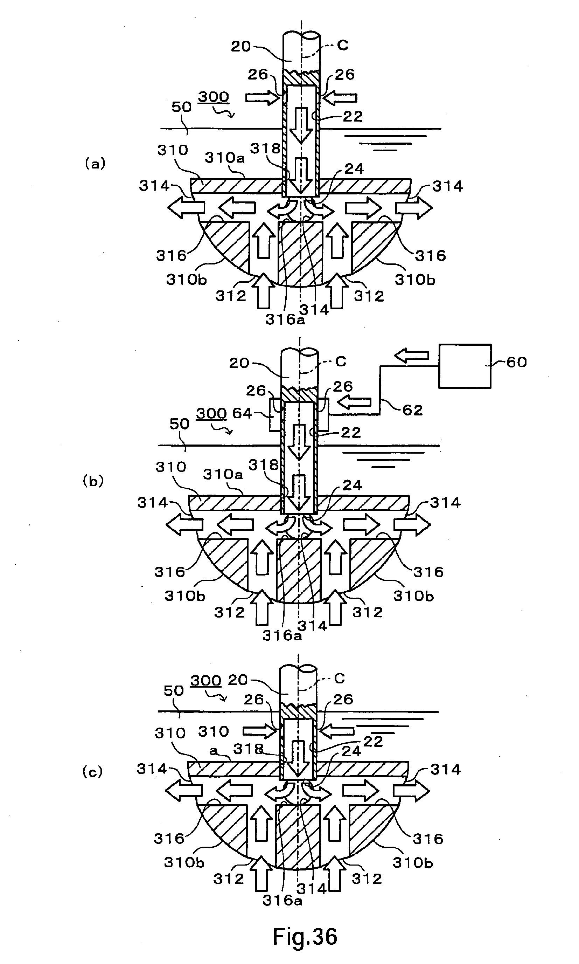

Furthermore, in the third embodiment, based on providing the in-shaft passage 22 communicated with the flow passages 316, an external fluid, such as gas or liquid, can be introduced into the stirrable substance 50 via the in-shaft passage 22 to perform an efficient mixing/stirring operation. FIGS. 36(a) to 36(c) are partial sectional views illustrating examples of how the stirring rotor 300 is used.

FIG. 36(a) illustrates an example where the external opening 26 provided in the drive shaft 20 is opened to the outside. Based on communicating the external opening 26 with the outside, a gas (e.g., air) or the like outside of the stirrable substance 50 can be sucked into the flow passages 316, and jetted out from the outlet ports 314 into the stirrable substance 50, while being mixed with the stirrable substance 50 in the flow passages 316. This makes it possible to efficiently perform gas dissolution or bubbling in the stirrable substance, generation of micro-bubbles, etc.

Alternatively, the external opening 26 may be opened to a liquid different from the stirrable substance 50 to mix the liquid with the stirrable substance 50. In other words, an operation of mixing two types of liquids can be performed in a significantly efficient manner. Further, together with a liquid or gas, a solid, such as a powder or particles, may be introduced from the external opening 26. In this case, the solid, such as a powder, can be efficiently dispersed in the stirrable substance 50. For example, this makes it possible to perform an operation of supplying food while dissolving oxygen in water, in a fish farm.

FIG. 36(b) illustrates an example where a supply unit 60 is connected to the in-shaft passage 22 via the external opening 26 to supply a fluid such as a gas or a liquid, or a mixture of a fluid and a solid. In this example, the supply unit 60 is comprised, for example, of a pump or a compressor, and connected to the external opening 26 though a supply pipe 62 and a rotary joint 64.

Based on connecting the supply unit 60 to the in-shaft passage 22 as just described, a gas, a liquid, or a mixture of a gas and/or a liquid, and a solid such as a powder or particles, can be forcedly supplied into the flow passages 316, so that it becomes possible to significantly quickly perform various mixing and dispersing operations. Further, a supply amount from the supply unit 60 may be controlled so as to appropriately adjust a degree of mixing, a size of gas bubbles to be entrained, etc.

FIG. 36(c) illustrates an example where the external opening 26 is opened to the stirrable substance 50. In this example, the stirrable substance 50 will be strongly sucked from the external opening 26 into the flow passages 316 via the in-shaft passage 22, so that it becomes possible to quickly discharge a gas, such as air, stagnating in the flow passages 316, from the outlet ports 314.

For example, in an operation of stirring a high-viscosity stirrable substance 50 using the drive shaft 20 devoid of the in-shaft passage 22 communicated with the flow passages 316, a gas in the flow passages 316 (e.g., air residing in the flow passages 316 before immersion in the fluid) cannot be adequately discharged, which is likely to make it impossible to jet out the fluid from the outlet ports 314. In the third embodiment, such a problem can be solved.

The example illustrated in FIG. 36(c) may be considered as a structure where an inlet port 312 is provided in the connection portion 318 of the rotor body 310 (or the connection portion 18 is configured to function as an inlet port 312), and the in-shaft passage 22 is communicated with the inlet port 312 of the connection portion 318. Thus, on a case-by-case basis, as the inlet port, the rotor body 310 may be provided with only the inlet port 312 of the connection portion 318 to be communicated with the in-shaft passage 22. In other words, the in-shaft passage 22 may be communicated with the flow passages 316 via the inlet port 312.

Although the external opening 26 in the third embodiment is provided in the lateral surface of the drive shaft 20, a position of the external opening 26 is not limited thereto. For example, the drive shaft 20 is configured in a pipe-like shape, wherein the external opening 26 is provided at an end of the drive shaft 20 on an opposite side of the connection port 24. In this case, an opening may be provided in a coupling connecting between the drive shaft 20 and the drive unit 30, or the drive unit 30 may be offset from a shaft center of the drive shaft 20 using a gear or the like. Further, the drive unit 30 may have a hollow output shaft communicated with the in-shaft passage 22. Alternatively, the drive shaft 30 may have an output shaft which is provided with the in-shaft passage 22, the connection port 24 and the external opening 26 and directly connected to the rotor body 10 as substitute for the drive shaft 20.

In the third embodiment, the in-shaft passage 22 is communicated with all of the flow passages 316. Alternatively, the in-shaft passage 22 may be communicated with a part of the flow passages 316. Specifically, a common space 316a communicated with only a part of the flow passages 316 may be formed, and communicated with the in-shaft passage 22.

In the third embodiment, a cross-sectional area of the inlet port 312 (cross-sectional area of the inlet port 312 perpendicular to a flow passing therethrough) is set to be approximately equal to a cross-sectional area of the outlet port 314 (cross-sectional area of the outlet port 314 perpendicular to a flow passing therethrough). Alternatively, the two cross-sectional areas may be set to become different from each other, depending on intended purposes of the stirring rotor 300, etc. However, in view of allowing a fluid (stirrable substance) to smoothly flow through the flow passage 316 without stagnation so as to obtain an effective stirring capability, a ratio of the cross-sectional area of the inlet port 312 (cross-sectional area of the inlet port 312 perpendicular to a flow passing therethrough) to the cross-sectional area of the outlet port 314 (cross-sectional area of the outlet port 314 perpendicular to a flow passing therethrough) is preferably set in a range of 1/3 to 3, more preferably in a range of 1/2 to 2, particularly preferably in a range of 5/6 to 1.2.

In the third embodiment, in view of machinability, the flow passage 316 is configured in a shape bended at approximately a right angle. Alternatively, the flow passage 316 may be configured as a smoothly curved passage, or may be configured to communicate the inlet port 312 and the outlet port 314 in a straight line. Based on configuring the flow passage 316 in this manner, a flow resistance in the flow passage 316 can be reduced, so that it becomes possible to further strengthen a flow to be generated by the stirring rotor 300, so as to improve stirring capability.

In the third embodiment, each of the outlet ports 314 may be arranged offset with respect to a corresponding to the inlet ports 312 in a rotation direction of the stirring rotor 300 in such a manner that a region of a corresponding one of the flow passages 316 in continuous relation to the outlet port 314 is configured to form an angle with respect to the centrifugal direction of the stirring rotor 300. Alternatively or additionally, the outlet port 314 may be arranged offset in the direction of the rotation axis in such a manner that a region of the flow passage 316 in continuous relation to the outlet port 314 is configured to be oriented on the side of a distal end (distal end side) of the rotor body 310 (on a side opposite to the drive shaft 20), or to be oriented on the side of the drive shaft (drive shaft side). Based on appropriately setting a direction of a jet flow from the outlet port 314 in this manner, an optimal flow for an efficient stirring operation can be obtained.

In the third embodiment, the inlet port 312 may be provided on the drive shaft side (top surface 310a). In this case, all of the plurality of inlet ports 312 may be provided on the drive shaft side. Alternatively, the plurality of inlet ports 312 may be arranged such that a part thereof is provided on the distal end side and a remaining part thereof is provided on the drive shaft side. Alternatively, the inlet port 312 and the connection portion 318 may be provided in the inclined surface 310b. In this case, the top surface 310a is located on the side of a distal end of the stirring rotor 300. Based on appropriately setting the arrangement of the inlet ports 312, an optimal flow for an intended purpose can be generated.

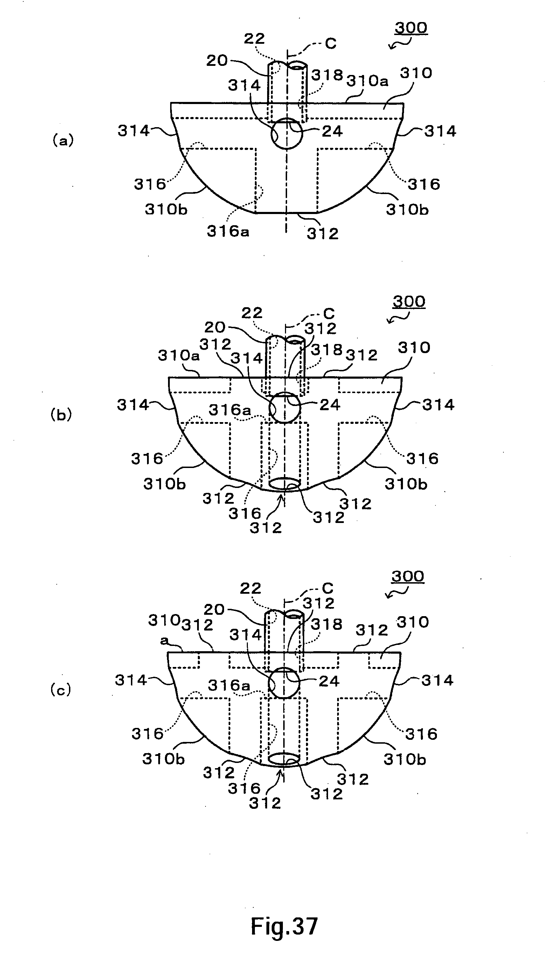

In the third embodiment, the inlet port 312 may be provided with respect to the outlet port 314 in one-to-plurality relationship, or in plurality-to-one relationship. FIGS. 37(a) to 37(b) are front views showing examples of a modified arrangement of the inlet port 312 and the outlet port 314.

FIG. 37(a) illustrates an example where the inlet ports 312 is provided with respect to the corresponding outlet port 314 in one-to-plurality relationship, wherein the flow passage 316 is configured to extend from the one inlet port 312 and then branch toward the plurality of outlet ports 314. In this manner, the inlet port 312 may be provided as a common port to the plurality of outlet ports 314. In this case, a common region of the flow passage 316 along the direction of the central axis C may be defined as the common space 316a.

FIGS. 37(b) and 37(c) illustrate examples where the inlet port 312 is provided with respect to the outlet port 314 in plurality-to-one relationship. In this case, one or more of the plurality of inlet ports 321 may be provided on a respective one of the distal end side (on a side opposite to the drive shaft 20) and the drive shaft side, with respect to the one outlet port 314. Alternatively, the plurality of inlet ports 321 may be provided on one of the distal end side and the drive shaft side, with respect to the one outlet port 314.

Further, the plurality of inlet ports 312 communicated with the one outlet port 314 may be arranged such that they are different from each other in terms of a distance from the rotation axis (central axis C) in the centrifugal direction (arranged offset from each other in the centrifugal direction). In FIG. 37(c), the number of the inlet ports 312 communicated to the one outlet port 314 is two, wherein the two inlet ports 312 are arranged offset from each other in such a manner that one of the inlet ports 312 on the drive shaft side is located more outwardly in the centrifugal direction from the central axis C than the other inlet port 312 on the distal end side.

As above, the flow passages 316 from the plurality of inlet ports 312 may be combined and communicated with the one outlet port 312. This is effective, for example, in stirring a stirrable substance comprising completely separable components, such as a mixture of water and oil to achieve dispersion or emulsification. Particularly, the plurality of inlet ports 312 communicated with the one outlet port 314 can be arranged such that they are different from each other in terms of a distance from the rotation axis (central axis C) in the centrifugal direction (arranged offset from each other in the centrifugal direction), to allow respective suction forces at two of the inlet ports 312 to become different from each other, so that it becomes possible to generate more complicated flows so as to efficiently perform the dispersion or emulsification.

In the examples illustrated in FIGS. 37(a) to 37(c), in view of allowing a fluid to smoothly flow through the flow passage 316 without stagnation so as to obtain an effective stirring capability in cases where the inlet port 312 is provided with respect to the corresponding outlet port 314 in one-to-plurality relationship, a ratio of a cross-sectional area of the one inlet port 312 (cross-sectional area of the inlet port 312 perpendicular to a flow passing therethrough) to a sum of respective cross-sectional areas of the plurality of outlet ports 314 (cross-sectional areas of the outlet ports 314 perpendicular to a flow passing therethrough) is preferably set in a range of 1/3 to 3, more preferably in a range of 1/2 to 2, particularly preferably in a range of 5/6 to 1.2. On the other hand, in cases where the inlet port 312 is provided with respect to the corresponding outlet port 314 in plurality-to-one relationship, a ratio of a sum of respective cross-sectional areas of the plurality of inlet ports 312 (cross-sectional areas of the inlet ports 312 perpendicular to a flow passing therethrough) to a cross-sectional area of the one outlet port 314 (cross-sectional area of the outlet port 314 perpendicular to a flow passing therethrough) is preferably set in a range of 1/3 to 3, more preferably in a range of 1/2 to 2, particularly preferably in a range of 5/6 to 1.2.

In the third embodiment, the rotor body 310 is configured as a solid structure. Alternatively, the rotor body 310 may be configured as a hollow structure, wherein a pipe-like flow passage 316 may be provided thereinside. In this case, the rotor body 310 can be configured as a lightweight structure.

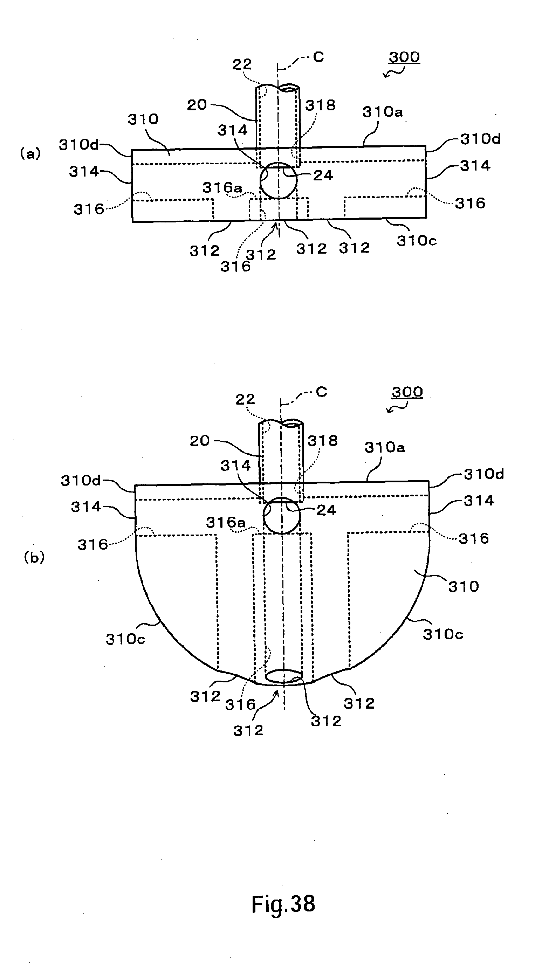

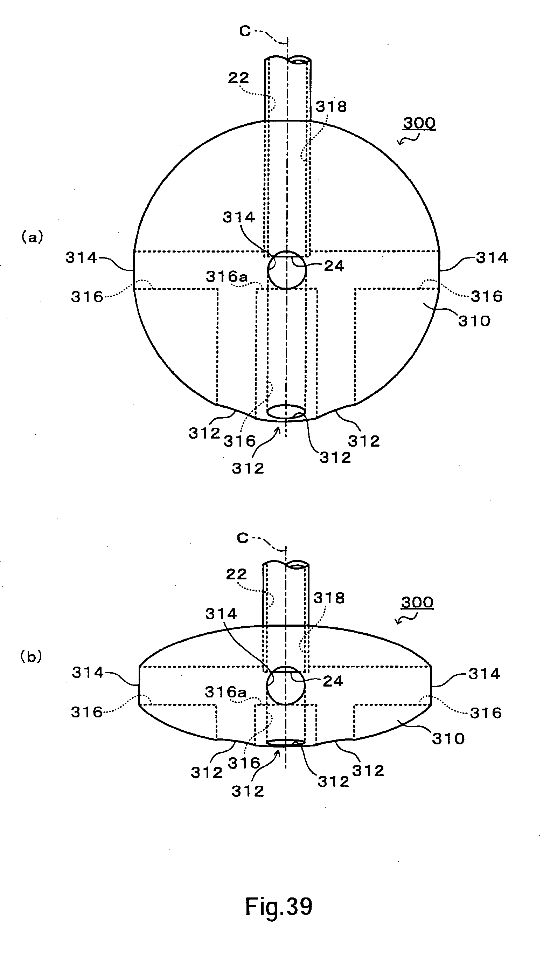

Although the rotor body 310 in the third embodiment is configured in a semispherical shape, the shape of the rotor body 310 is not limited thereto, but may be any other suitable shape. FIGS. 38 and 39 are front views illustrating examples of a modified shape of the rotor body 310.

FIG. 38(a) illustrates an example where the rotor body 310 is configured in a circular column shape (disk shape). In this modification, the inlet port 312 is provided in a bottom surface 310C on the distal end side, and the outlet port 314 is provided in a lateral surface 310d parallel to the rotation axis (central axis C). Instead of the circular column shape, the rotor body 310 may be configured in a multi-sided column shape, or may be configured in a truncated cone, multi-sided pyramidal frustum, circular cone or multi-sided pyramid shape.

FIG. 38(b) illustrates an example where the rotor body 310 is configured such that a bottom surface 310c of a circular column (disk) on the distal end side is formed as a spherical surface. Similarly, the rotor body 310 may be configured such that at least one of surfaces of a circular column, a multi-sided column, a truncated cone or a multi-sided pyramidal frustum, perpendicular to a rotation axis thereof, has a spherical or curved surface. In this case, the spherical or curved surface may be formed on one or a respective one of the distal end side and the drive shaft side. In this modification, the outlet port 314 is provided in a lateral surface 310d parallel to the rotation axis. Alternatively, it may be provided in the bottom surface 310c.

FIG. 39(a) illustrates an example where the rotor body 310 is configured in a spherical shape, and FIG. 39(b) illustrates an example where the rotor body 310 is configured in an ellipsoidal shape which has a circular shape in top plan view. Based on configuring the rotor body 310 in the above shape, a flow adjacent to the outer surface of the rotor body 310 can be smoothly formed as a flow accompanied with a jet flow from the outlet port 314, so that stirring and mixing capabilities can be improved depending on intended purposes. Particularly, it is preferable to reduce the thickness in the direction of the rotation axis in whole, as illustrated in FIG. 38(b). In this case, it becomes possible to further strengthen the flow radiating out from the stirring rotor 300.

In addition to the aforementioned shapes, various other shapes may be employed as the shape of the rotor body 310. For example, the rotor body 310 may be configured by combining two or more of various three-dimensional bodies, such as multi-sided column or multi-sided pyramid. Alternatively, the rotor body 310 may be configured as a polyhedron close to a sphere, such as a regular polyhedron or a semi-regular polyhedron. Further, a plurality of convex or concave segments may be provided on the outer surface of the rotor body 310.

Based on configuring the rotor body 310 in the shape with appropriate irregularities, a moderate flow can be generated around the stirring rotor 300, so that the stirring capability can be improved in some cases. In addition to setting of the shape of the rotor body 310, a degree of roughness or a more fine concavo-convex shape of the surface of the rotor body 310 may be adjusted to more accurately control flows around the stirring rotor 300. Further, the outer surface of the rotor body 310 may be variously painted or colored to improve aesthetic quality.

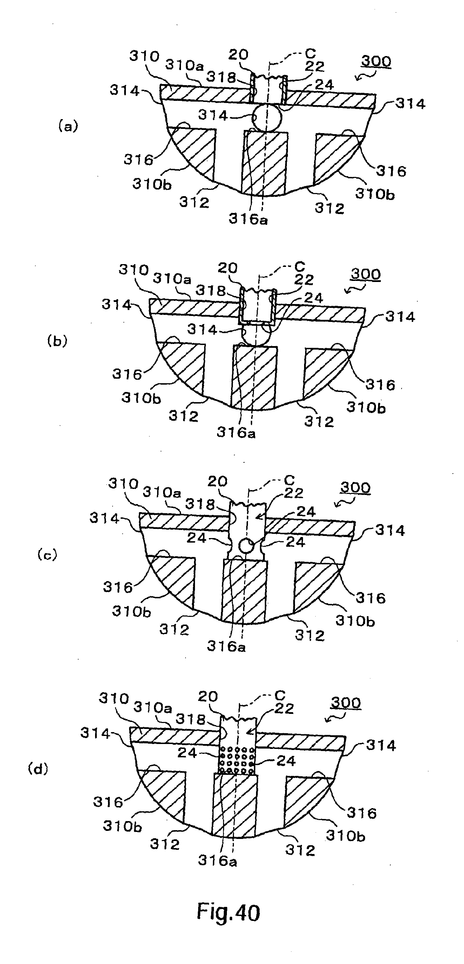

FIGS. 40(a) to 40(d) are sectional views illustrating examples of a modified configuration of the connection port 24. An arrangement and/or a shape of the connection port 24 may be appropriately adjusted to allow a degree of mixing of an external fluid, solid, etc, into a stirrable substance, or a state of generation of gas bubbles to be adjusted.

FIG. 40(a) illustrates an example where the drive shaft 20 is disposed to keep a distal end thereof from protruding into the common space 316a. Based on adjusting a protruding amount of the distal end of the drive shaft 20 provided with the connection port 24 in this manner, a degree of mixing, a state of generation of gas bubbles, etc, can be adjusted. FIG. 40(b) illustrates an example where a size of the connection port 24 provided at the distal end of the drive shaft 20 is reduced. Based on adjusting the size of the connection port 24 in this manner, a degree of mixing, a state of generation of gas bubbles, etc, can also be adjusted.

FIG. 40(c) and 40(d) illustrate examples where the distal end of the drive shaft 20 is butted against an inner wall of the common space 316a, and the connection port 24 is provided in the lateral surface of the drive shaft 20. In this manner, the connection port 24 may be provided to be opened in the centrifugal direction, instead of being opened in the axial direction. In this case, in addition to a size of the connection port 24, the number and/or arrangement of the connection ports 24 can be appropriately set to desirably obtain a degree of mixing, a state of generation of gas bubbles, etc,

A shape of the connection port 24 is not particularly limited, but various shapes other than a circular shape, such a rectangular shape and a slit-like shape, may be employed. Alternatively, a mesh-like member may be provided at the connection port 24.

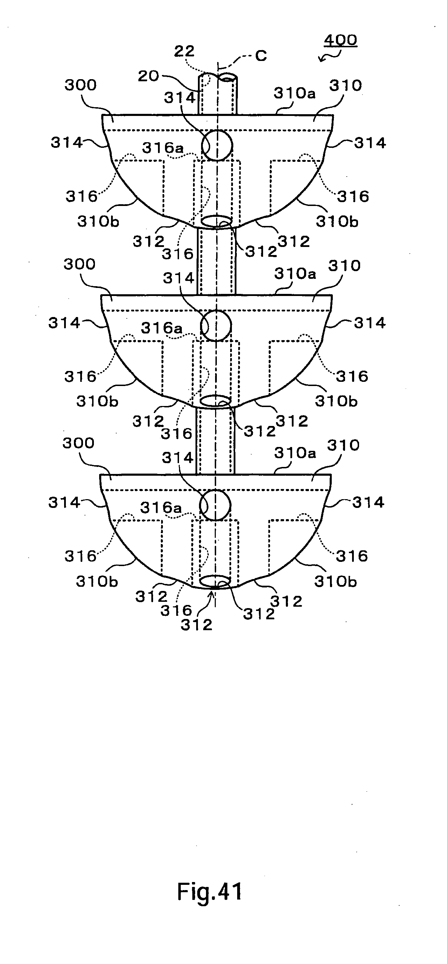

A stirring device 400 formed by coupling a plurality of the stirring rotors 300 will be described below. FIG. 41 is a front view illustrating an example of the stirring device 400. In the illustrated example, the number of the stirring rotors 300 is three, wherein the three stirring rotors 300 are coupled together through the drive shaft 20. As illustrated in FIG. 41, the plurality of stirring rotors 300 are coupled together in the direction of the rotation axis, so that it becomes possible to further improve the stirring and mixing capabilities. This is effective, particularly, when a fluid to be stirred has a large depth.

For example, in the stirring device 400, the drive shaft 20 may be installed to penetrate through the plurality of stirring rotors 300, and a plurality of the connection ports 24 are provided in the lateral surface of the drive shaft 20 to allow the in-shaft passage 22 to be communicated with the flow passages 316 in all of the stirring rotors 300. It is understood that the in-shaft passage 22 may be communicated with the flow passages 316 in only a part of the stirring rotors 300.

As described above, the stirring rotor 300 according to the third embodiment comprises: a rotor body 310 adapted to be rotated about a rotation axis (central axis C); an inlet port 312 provided in an outer surface of the rotor body 310; an outlet port 314 provided in the outer surface of the rotor body 310; and a flow passage 316 communicating the inlet port 312 with the outlet port 314, wherein the rotor body 310 is connected to a drive shaft 20 for rotating the rotor body 310, and wherein: the inlet port 313 is provided at a position closer to the rotation axis than the outlet port 314; the outlet port 314 is provided at a position more outward in a centrifugal direction from the rotation axis than the inlet port 312; and the drive shaft 20 has an in-shaft passage 22 communicating an opening (external opening 26) provided therein with the flow passage 316.

In the third embodiment configured in this manner, a gas, liquid, solid or the like outside of the stirrable substance can be strongly sucked into the flow passage 316 and jetted out from the outlet port 314 together with the stirrable substance, so that it becomes possible to efficiently stir the stirrable substance, while introducing a gas, liquid, solid or the like outside of the stirrable substance, into the stirrable material and mixing/stirring it with the stirrable substance. Differently, the stirrable substance may be sucked into the flow passage 316 via the in-shaft passage 22. This means that it becomes possible to perform a stirring operation in various nonconventional modes and in an efficient manner.

In the third embodiment, the opening (external opening 26) may be provided in a portion of the drive shaft 20 to be located outside the stirrable substance. In this case, a gas, liquid or the like outside of the stirrable substance can be introduced into and mixed/stirred with the stirrable substance, so that it becomes possible to efficiently perform mixing of a plurality of materials, gas dissolution or bubbling or dispersion of a solid such as a powder or particles, in a liquid, etc. It is also possible to generate micro-bubbles in a liquid.

Alternatively, the opening (external opening 26) may be provided in a portion of the drive shaft 20 to be located inside the stirrable substance. In this case, the stirrable substance 50 can be strongly sucked into the flow passage 316 via the in-shaft passage 22, so that it becomes possible to quickly discharge a gas, such as air, stagnating in the flow passages 316, from the outlet port 314. This makes it possible to prevent deterioration in stirring capability due to stagnation of gas in the flow passage 316.

In the third embodiment, a supply device 60 may be connected to the in-shaft passage 22 to supply a fluid or a mixture of a fluid and a solid to the flow passage 316 via the in-shaft passage 22. In this case, a gas, a liquid, or a mixture of a gas and/or a liquid, and a solid such as a powder or particles, can be forcedly supplied into the flow passage 316, so that it becomes possible to significantly efficiently perform various mixing/stirring and dispersing operations. Further, based on controlling the supply unit 60, a degree of mixing, dispersion or bubbling, etc., can be appropriately adjusted.

In the third embodiment, the rotor body 310 is configured such that a cross-section thereof perpendicular to the rotation axis has a circular shape. Thus, it becomes possible to eliminate a counteracting force during start of the rotation, and allow damage, chipping or the like of the stirring rotor 300 or a container containing a stirrable substance to become less likely to occur even if the stirring rotor 300 is hit against the container or the like. Further, the occurrence of unbalance with respect to the rotation axis can be minimized, so that it becomes possible to almost eliminate vibration, shaking or the like which would otherwise occur during the rotation. This makes it possible to perform a stirring operation in a safe and efficient manner, irrespective of intended purposes.

In the third embodiment, the rotor body 310 is configured in a semi-spherical shape. Thus, it becomes possible to generate strong flows in the stirrable substance, and allow the inlet port 312 to be moved to a position close to a narrow area, such as a corner of the container, so as to suck a stagnant substance. In other words, it becomes possible to sufficiently perform the stirring operation throughout the container. The rotor body 310 may be configured in an ellipsoidal shape. As for the shape of the rotor body 310, it is preferable to reduce a thickness in the direction of the rotation axis in whole. In this case, it becomes possible to further strengthen the flow radiating out from the stirring rotor 300 so as to improve the stirring and mixing capabilities.

In the third embodiment, the stirring rotor 300 includes a plurality of the outlet ports 314, wherein the inlet port 312 is provided with respect to a respective one of the plurality of outlet ports 314. Thus, a flow rate in the flow passage 316 can be maintained at an appropriately high value, so that it becomes possible to prevent deterioration in stirring capability due to accumulation of stagnant substances within the flow passage 316.

In the third embodiment, the inlet port 312 is provided on a side opposite to the drive shaft 20. This makes it possible to suck a stagnant substance at a bottom of the container so as to perform a reliable stirring operation free of unevenness. In addition, it becomes possible to perform the stirring operation without destabilizing a level of the stirrable substance.

In the third embodiment, the inlet port 312 is provided on an outward side in the centrifugal direction with respect to the rotation axis. In this case, the rotor body 310 can have a portion provided in the center of a distal end thereof to protrude outwardly with respect to the inlet port 312. Thus, even if the stirring rotor 300 is moved to a position close to a wall surface of the container, it becomes possible to avoid a situation where the stirring rotor 300 is suckingly brought into contact with the wall surface and thereby the inlet port 312 is closed. This makes it possible to perform a stable stirring operation even in cases where the stirring rotor 300 is manually operated.

In the third embodiment, the inlet port 312 may be provided with respect to the outlet port 314 in plurality-to-one relationship. In this case, more complicated flows can be generated. This is effective, for example, in efficiently dispersing or emulsifying a mixture of water and oil. Particularly, the plurality of inlet ports 312 communicated with the one outlet port 314 can be arranged such that they are different from each other in terms of a distance from the rotation axis in the centrifugal direction, to allow respective suction forces at two of the inlet ports 312 to become different from each other, so that it becomes possible to generate more complicated flows so as to efficiently perform the dispersion or emulsification.

The stirring device 400 based on the third embodiment comprises the plurality of stirring rotors 300 arranged in the direction of the rotation axis. This makes it possible to further improve the stirring and mixing capabilities.

### <FOURTH EMBODIMENT>

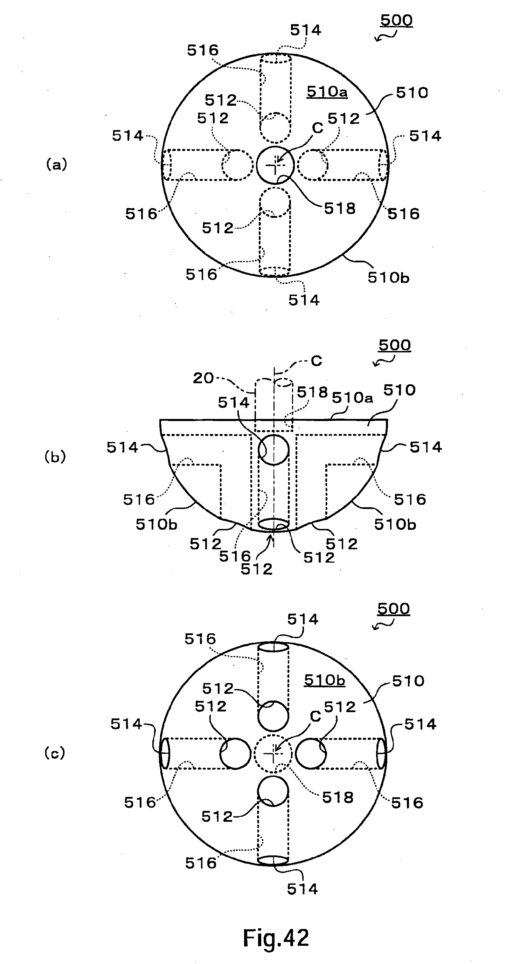

A structure of a stirring rotor 500 according to a fourth embodiment of the present invention will be described below. FIG. 42(a), FIG. 42(b) and FIG. 42(c) are a top plan view of the stirring rotor 500, a front view of the stirring rotor 500 (a side view is identical thereto), and a bottom view of the stirring rotor 500, respectively. As illustrated in FIGS. 42(a) to 42(c), the stirring rotor 500 comprises a semi-spherical shaped rotor body 510, a plurality of inlet ports 512 provided in an outer surface of the rotor body 510, a plurality of outlet ports 514 provided in the outer surface of the rotor body 510, and a flow passage 516 formed inside the rotor body 510 to communicate the inlet ports 512 with the outlet ports 514.

In the illustrated embodiment, the rotor body 510 is formed in a semi-spherical shape which is a shape obtained by dividing a sphere into halves. Thus, the outer surface of the rotor body 510 comprises a planar top surface 510a which is a surface perpendicular to a central axis C of the rotor body 510, and a spherical inclined surface 510b which is a surface inclined with respect to the central axis C. More specifically, the inclined surface 510b is formed as a surface which extends to become gradually farther away from the central axis C, in a direction from one side (lower side in FIG. 42(b)) to the other side (upper side in FIG. 42(b)) of the central axis C. In other words, the rotor body 510 is configured in a shape where a thickness thereof in a direction of the central axis C gradually decreases toward an outward side in a radial direction thereof.

The rotor body 510 has a connection portion 518 provided in the center of the top surface 510a thereof to allow a drive shaft 20 associated with a drive unit such as a motor to be connected thereto. Thus, the stirring rotor 500 is adapted to be rotated about a rotation axis defined by the central axis C of the rotor body 510. A technique for the connection between the drive shaft 20 and the connection portion 518 may be any conventional means, such as thread connection or engagement connection.

In the fourth embodiment, a portion of the rotor body 510 other than the flow passage 516 is configured as a solid structure to provide enhanced strength of the rotor body 510. A material for forming the rotor body 510 is not particularly limited, but an appropriate material suitable for its use conditions, such as metal, ceramics, resin, rubber or wood, may be employed: The rotor body 510 in the fourth embodiment is designed in a simple and easily-fabricatable or machinable configuration, so that it becomes possible to form the rotor body 510 from a wide variety of materials without being restricted by production processes.

Based on configuring the rotor body 510 in such a simple shape, the occurrence of unbalance with respect to the rotation axis can be minimized. Thus, in the fourth embodiment, it becomes possible to almost eliminate vibration, shaking or the like which would otherwise occur during the rotation, differently from an impeller or the like which is likely to cause unbalance.

The inlet ports 512 are provided in a distal end region (region of the inclined surface 510b on the side of the central axis C) of the rotor body 510 on a side opposite to the connection portion 518. In the fourth embodiment, the number of the inlet ports 512 is four, wherein the four inlet ports 512 are arranged side-by-side on a circle having a center at the central axis C, in equally spaced relation to each other, and each of the four inlet ports 512 is formed in the same direction as that of the central axis C. The outlet ports 514 are provided in a lateral surface region (region of the inclined surface 510b on the side of the top surface 510a) of the rotor body 510. More specifically, in the fourth embodiment, the number of the outlet ports 514 is four, wherein each of the four outlet ports 514 is provided at a position more outward in a centrifugal direction (radial direction) from the central axis C of the rotor body 510 (at a position farther away from the central axis C in a direction perpendicular to the central axis C) than a corresponding one of the inlet ports 512. Further, each of the outlet ports 514 is formed in a direction perpendicular to the central axis C.

The flow passage 516 is formed as a passage communicating each of the inlet ports 512 with a corresponding one the outlet ports 514. In other words, in the fourth embodiment, the number of the flow passages 516 formed inside the rotor body 510 is four. Each of the flow passages 516 is formed to extend linearly from the inlet port 512 along the central axis C, and then, after bending at a right angle, extend linearly in the centrifugal direction of the rotor body 510 to reach the corresponding outlet port 514.

In the third embodiment, each of the flow passages 516 is configured as just described to allow a set of the inlet port 512, the outlet port 514 and the flow passage 516 to be easily formed by a boring operation using a drill. Specifically, the set of the inlet port 512, the outlet port 514 and the flow passage 516 can be easily formed by drilling a hole from a position of the inlet port 512 along the central axis C, and drilling a hole from a position of the outlet port 514 toward the central axis C. Although the flow passage 516 in the fourth embodiment is configured such that a cross-section thereof has a circular shape, the cross-sectional shape is not limited thereto, but may be any other suitable shape such as an elliptical shape or a polygonal shape.

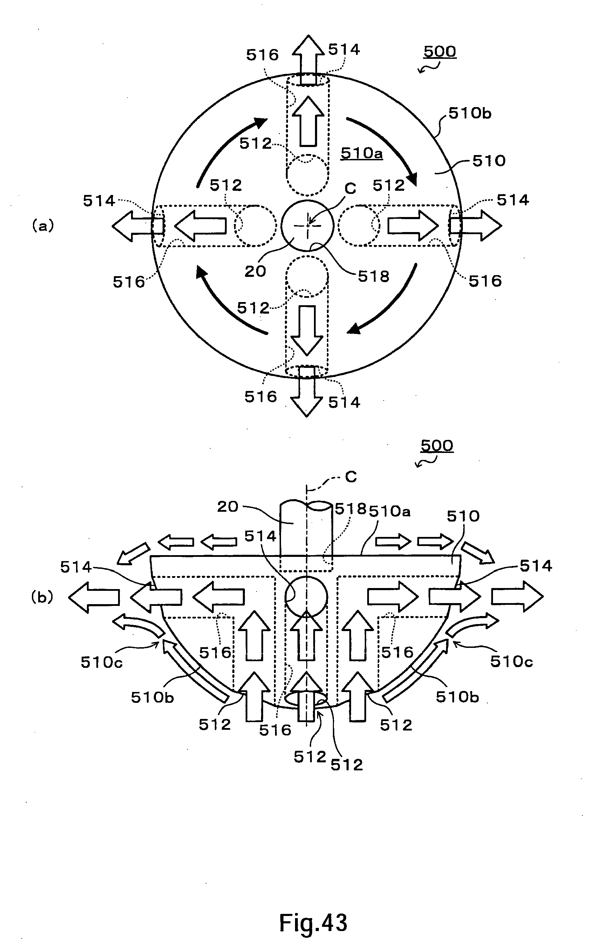

An operation of the stirring rotor 500 will be described below. FIG. 43(a) is a top plan view illustrating the operation of the stirring rotor 500, and FIG. 43(b) is a front view illustrating the operation of the stirring rotor 500. The stirring rotor 500 is adapted to be driven and rotated about the central axis C by the drive shaft 20, within a stirrable substance which is a fluid, so as to stir the stirrable substance.

Upon rotating the stirring rotor 500 under a condition that it is immersed in a fluid, a part of the fluid entering inside each of the flow passages 516 is also rotated together with the stirring rotor 500. Then, a centrifugal force is applied to the fluid inside of the flow passage 516, and thereby the fluid inside of the flow passage 516 flows toward an outward side in the radial direction of the stirring rotor 500, as illustrated in FIGS. 43(a) and 43(b). Each of the outlet ports 514 is provided more outwardly in the centrifugal direction of the rotor body 510 than a corresponding one of the inlet ports 512, so that the centrifugal force becomes stronger at the outlet port 514 than at the inlet port 512. Thus, as long as the stirring rotor 500 is being rotated, the fluid flows from the inlet port 512 toward the outlet port 514. More specifically, the fluid inside of the flow passage 516 is jetted out from the outlet port 514, and simultaneously the outside fluid is sucked from the inlet port 512 into the flow passage 516. Consequently, a flow radiating out from the lateral surface region with the outlet port 514, and a flow directed toward the distal end region with the inlet port 512, will be generated in the fluid around the stirring rotor 500.

Further, upon rotating the stirring rotor 500 under a condition that it is immersed in the fluid, a part of the fluid adjacent to an outer surface of the stirring rotor 500 is rotated together with the stirring rotor 500 by the effect of viscosity. Thus, a centrifugal force is also applied to the fluid adjacent to the outer surface of the stirring rotor 500, so that the outer surface-adjacent fluid flows to a vicinity of each of the outlet ports 514 along the outer surface of the stirring rotor 500, and becomes a flow accompanied with the jet flow from the outlet port 514, as illustrated in FIGS. 43(a) and 43(b).

In the fourth embodiment, the rotor body 510 is configured in a semi-spherical shape to allow a flow adjacent to the distal end region of the stirring rotor 500 to be smoothly combined with the flow radiating out from the lateral surface region. In addition, the rotor body 510 configured in the above shape allows a part of the flow directed toward the distal end region of the stirring rotor 500 to be smoothly guided to the vicinity of each of the outlet ports 514 along the inclined surface 510b and combined with the flow radiating out from the lateral surface region. This makes it possible to generate strong flows in the surrounding fluid, so that the stirring rotor 500 becomes capable of performing an efficient stirring operation.

Furthermore, in the fourth embodiment, each of the outlet ports 514 is provided in the inclined surface 510b, i.e., a surface extending to become gradually farther away from the rotation axis (central axis C) in a direction from one side to the other side of the rotation axis, to allow an effective stirring operation to be performed even for a high-viscosity fluid.

Specifically, in an operation of stirring a high-viscosity fluid using a stirring rotor designed such that each of the outlet ports 514 is provided in a surface parallel to the rotation axis (central axis C), a gas in the flow passages 516 (e.g., air residing in the flow passages 516 before immersion in the fluid) cannot be adequately discharged, which is likely to make it impossible to jet out the fluid from the outlet ports 514. Through various researches and experimental tests on the above phenomenon, the inventor of this application has found out that, when the outlet port 514 is provided in the inclined surface 510b, i.e., a surface inclined with respect to the rotation axis (central axis C), instead of the surface parallel to the rotation axis, a gas in the flow passage 516 can be immediately discharged even under a high-viscosity fluid.

More specifically, based on providing the outlet port 514 in the inclined surface 510b, a region of the outlet port 514 on the side of a distal end (distal end side) of the stirring rotor 500 (on a side opposite to the connection portion 518), and a region of the outlet port 514 on the side of the drive shaft (drive shaft side) (on the side of the connection portion 518), are allowed to become different from each other in terms of a distance from the rotation axis, so that it becomes possible to cause a difference in circumferential velocity and centrifugal force between the distal end-side region and the drive shaft-side region of the outlet port 514. Then, based on the difference in circumferential velocity and centrifugal force in the outlet port 514, turbulences are generated in a region of the flow passage 516 adjacent to the outlet port 514 to disturb a gas stagnating in the flow passage 516, so that it becomes possible to quickly discharge the gas from the outlet port 514.

Further, based on providing the outlet port 514 in the inclined surface 510b, the outlet port 514 can be arranged at a position close to a separation point 510c where a flow along the inclined surface 510b separates from the inclined surface 510b and becomes a flow in the centrifugal direction (or the separation point 510C can be set within the outlet port 514). At the separation point 510a, a negative pressure is generated along with the flow which starts separating from the inclined surface 510b. Thus, based on arranging the outlet port 514 at a position close to the separation point 510c, a gas stagnating in the flow passage 516 can be sucked out from the outlet port 514 arranged close by the negative pressure.

As above, in the fourth embodiment, the outlet port 512 is provided in the inclined surface 510b which is a surface extending to become gradually farther away from the rotation axis (central axis C), in a direction from one side to the other side of the rotation axis. Thus, even under a high-viscosity fluid, a gas in the flow passage 516 can be discharged therefrom immediately after start of a stirring operation so as to perform the stirring operation in a speedy and efficient manner. In addition, even if a gas enters into the flow passage 516 for some reason, the entered gas can be immediately discharged from the flow passage 516, so that it becomes possible to stably achieve the stirring capability.

Further, in the fourth embodiment, based on a synergic effect of the difference in circumferential velocity and centrifugal force in the outlet port 514, and the negative pressure at the separation point 510c, the flow radiating out from the stirring rotor 500 can be generated as a more complicated flow (turbulent flow), so that it becomes possible to obtain a higher stirring capability than ever before.

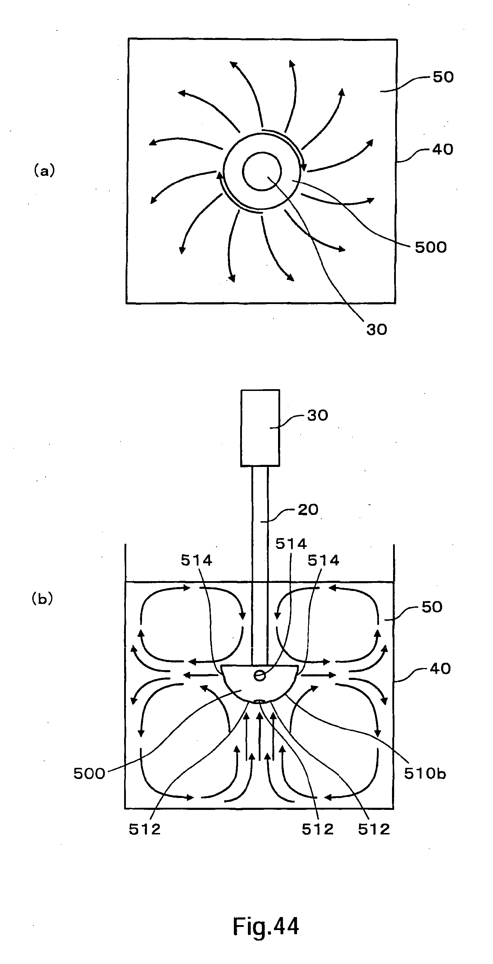

FIGS. 44(a) and 44(b) are schematic diagrams illustrating an example of how the stirring rotor 500 is used. As illustrated in FIGS. 44(a) and 44(b), the stirring rotor 500 is used under a condition that it is connected to a drive shaft 20 of a drive unit 30 such as a motor, and immersed in a stirrable substance 50 which is a fluid contained in a container 40. The drive unit 30 may be a type fixed to the container 40, a frame or the like, or may be a type adapted to be manually held and operated by a user.

Upon rotating the stirring rotor 500 by the drive unit 30, a flow radiating out from the stirring rotor 500 and a flow directed toward the distal end region of the stirring rotor 500 are generated, as described above. As a result, as illustrated in FIGS. 44(a) and 44(b), complicated circulating flows are generated in the stirrable substance 50, so that the stirrable substance 50 will be sufficiently stirred by the circulating flows.

In an operation of dispersing a stagnant substance accumulated at a bottom of the container 40, the distal end region of the stirring rotor 500 may be moved to a position close to the bottom of the container 40. This makes it possible to suck up the stagnant substance from the inlet ports 512 and jet out it from the outlet ports 514 so as to sufficiently disperse the stagnant substance into the stirrable substance 50. Further, in an operation of dispersing a stagnant substance accumulated at a corner of the container 40, the distal end region of the stirring rotor 500 may be moved to a position close to the corner of the container 40. In the fourth embodiment, the rotor body 510 is configured in a semi-spherical shape, so that the inlet ports 512 can be moved even to a position close to a narrow corner.

In the fourth embodiment, the rotor body 510 is configured in a semi-spherical shape, i.e., configured to have no collision with the stirrable substance 50 during the rotation, so that it becomes possible to almost eliminate a counteracting force which would otherwise occur during start of the rotation. In addition, differently from an impeller or the like, the rotor body 510 has no sharp protrusion, so that it becomes possible to reduce a risk that the stirring rotor 500 or the container 40 is damaged or chipped, even if the stirring rotor 500 is hit against a wall surface of the container 40. Thus, a user can move the stirring rotor 500 to a position close to the wall surface of the container 40 with a sense of security so as to sufficiently perform the stirring operation throughout the container 40. In addition, it becomes possible to prevent debris or chips of the stirring rotor 500 or the container 40, etc., from being easily mixed into the stirrable substance 50.

In the fourth embodiment, each of the inlet ports 512 is provided at a position slightly outward of a center of the distal end region of the stirring rotor 500 (slightly outward of the central axis C as the rotation axis) so as to keep the inlet port 512 from being closed even when the distal end region of the stirring rotor 500 is brought into contact with the wall surface of the container 40. This makes it possible to stably operate the stirring rotor 500 even in a position adjacent to the wall surface of the container 40.

In the fourth embodiment, a cross-sectional area of the inlet port 512 (cross-sectional area of the inlet port 512 perpendicular to a flow passing therethrough) is set to be approximately equal to a cross-sectional area of the outlet port 514 (cross-sectional area of the outlet port 514 perpendicular to a flow passing therethrough). Alternatively, the two cross-sectional areas may be set to become different from each other, depending on intended purposes of the stirring rotor 500, etc. However, in view of allowing a fluid (stirrable substance) to smoothly flow through the flow passage 516 without stagnation so as to obtain an effective stirring capability, a ratio of the cross-sectional area of the inlet port 512 (cross-sectional area of the inlet port 512 perpendicular to a flow passing therethrough) to the cross-sectional area of the outlet port 514 (cross-sectional area of the outlet port 514 perpendicular to a flow passing therethrough) is preferably set in a range of 1/3 to 3, more preferably in a range of 1/2 to 2, particularly preferably in a range of 5/6 to 1.2.

In the third embodiment, in view of machinability, the flow passage 516 is configured in a shape bended at approximately a right angle. Alternatively, the flow passage 516 may be configured as a smoothly curved passage, or may be configured to communicate the inlet port 512 and the outlet port 514 in a straight line. Based on configuring the flow passage 516 in this manner, a flow resistance in the flow passage 516 can be reduced, so that it becomes possible to further strengthen a flow to be generated by the stirring rotor 500, so as to improve stirring capability.

In the fourth embodiment, each of the outlet ports 514 may be arranged offset with respect to a corresponding to the inlet ports 512 in a rotation direction of the stirring rotor 500 in such a manner that a region of a corresponding one of the flow passages 516 in continuous relation to the outlet port 514 is configured to form an angle with respect to the centrifugal direction of the stirring rotor 500. Alternatively or additionally, the outlet port 514 may be arranged offset in the direction of the rotation axis in such a manner that a region of the flow passage 516 in continuous relation to the outlet port 514 is configured to be oriented on the side of a distal end (distal-end side) of the rotor body 510 (on a side opposite to the connection portion 518), or to be oriented on the side of the drive shaft (drive-shaft side) (on the side of the connection portion 518). Based on appropriately setting a direction of a jet flow from the outlet port 514 in the above manner, an optimal flow for an efficient stirring operation can be obtained.

In the fourth embodiment, the inlet port 512 may be provided on the drive-shaft side (top surface 510a). In this case, all of the plurality of inlet ports 512 may be provided on the drive-shaft side. Alternatively, the plurality of inlet ports 512 may be arranged such that a part thereof is provided on the distal-end side and a remaining part thereof is provided on the drive-shaft side. Alternatively, the inlet port 512 and the connection portion 518 may be provided in the inclined surface 510b. In this case, the top surface 510a is located on the side of a distal end of the stirring rotor 500. Based on appropriately setting the arrangement of the inlet ports 512, an optimal flow for an intended purpose can be generated.

In the fourth embodiment, the inlet port 512 may be provided with respect to the outlet port 514 in one-to-plurality relationship, wherein the flow passage 516 is configured to extend from the one inlet port 512 and then branch toward the plurality of outlet ports 514. In this case, in view of allowing a fluid to smoothly flow through the flow passage 516 without stagnation so as to obtain an effective stirring capability, a ratio of a cross-sectional area of the one inlet port 512 (cross-sectional area of the inlet port 512 perpendicular to a flow passing therethrough) to a sum of respective cross-sectional areas of the plurality of outlet ports 514 (cross-sectional areas of the outlet ports 514 perpendicular to a flow passing therethrough) is preferably set in a range of 1/3 to 3, more preferably in a range of 1/2 to 2, particularly preferably in a range of 5/6 to 1.2.

In the fourth embodiment, the rotor body 510 is configured as a solid structure. Alternatively, the rotor body 510 may be configured as a hollow structure, wherein a pipe-like flow passage 516 may be provided thereinside. In this case, the rotor body 510 can be configured as a lightweight structure.

Although the rotor body 510 in the fourth embodiment is configured in a semispherical shape, the shape of the rotor body 510 is not limited thereto, but may be any other suitable shape as long as it has the inclined surface 510b which extends to become gradually farther away from the rotation axis (central axis C), in a direction from one side to the other side of the rotation axis. For example, the rotor body 510 may have a spherical shape, or may have an ellipsoidal shape or a semi-ellipsoidal shape. Alternatively, the rotor body 510 may have a partial spherical shape as a part of a sphere, or a partial ellipsoidal shape as a part of an ellipsoid.

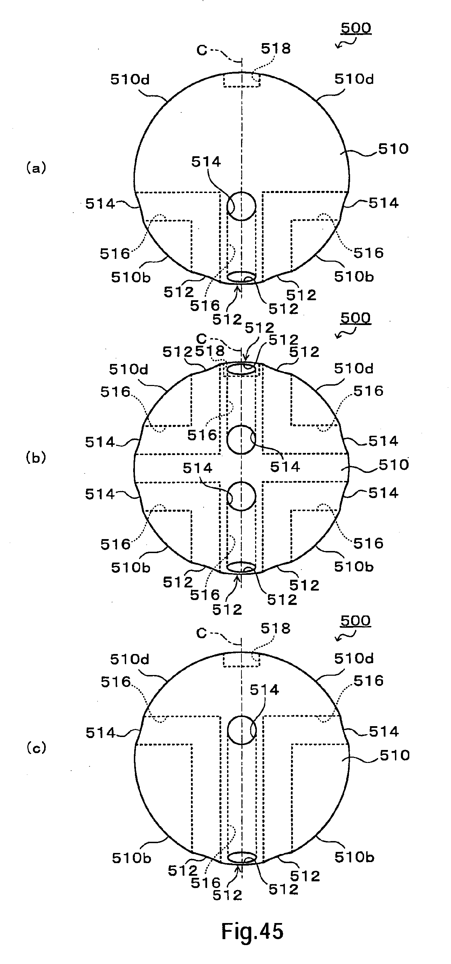

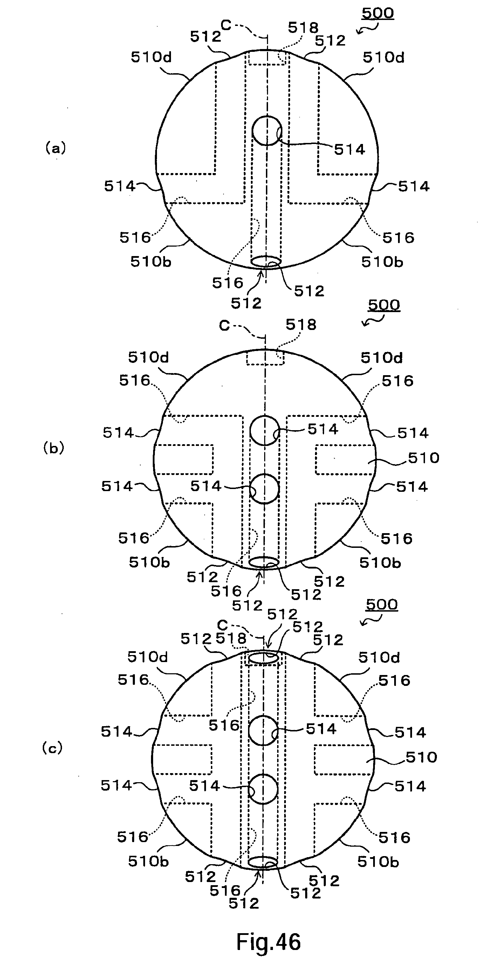

FIGS. 45(a) to 45(c) and FIGS. 46(a) to 46(c) are front views (side views) illustrating examples where the rotor body 510 is configured in a spherical shape. As illustrated in FIGS. 45(a) to 46(c), when the rotor body 510 is configured in a spherical shape, two inclined surfaces 510b, 510d are formed in respective regions on the distal end side and the drive shaft side. In cases where the rotor body 510 has a plurality of the inclined surfaces, an outlet port 514 may be provided in any of the inclined surfaces, irrespective of a position of an inlet port 512.

For example, as illustrated in FIG. 45(a), the rotor body 510 may be designed such that an inlet port 512 is provided on the distal end side, and an outlet port 514 communicated with the inlet port 512 is provided in the distal end-side inclined surface 510b. Alternatively, although illustration is omitted, the rotor body 510 may be designed such that an inlet port 512 is provided on the drive shaft side, and an outlet port 514 communicated with the inlet port 512 is provided in the drive shaft-side inclined surface 510d.

Alternatively, as illustrated in FIG. 45(b), the rotor body 510 may be designed such that a first inlet port 512 and a second inlet port 512 are provided, respectively, on the distal end side and the drive shaft side, and a first outlet port 514 communicated with the first inlet port 512 and a second outlet port 514 communicated with the second inlet port 512 are provided, respectively, in the distal end-side inclined surface 510b and the drive shaft-side surface 510d.

Alternatively, as illustrated in FIG. 45(c), the rotor body 510 may be designed such that an inlet port 512 is provided on the distal end side, and an outlet port 514 communicated with the inlet port 512 is provided in the drive shaft-side inclined surface 510d. Alternatively, although illustration is omitted, the rotor body 510 may be designed such that an inlet port 512 is provided on the drive shaft side, and an outlet port 514 communicated with the inlet port 512 is provided in the distal end-side inclined surface 510b.

Alternatively, as illustrated in FIG. 46(a), the rotor body 510 may be designed such that a first set of a first inlet port 512 provided on the distal end side and a first outlet port 514 communicated with the first inlet port 512 and provided in the drive shaft-side inclined surface 510d, and a second set of a second inlet port 512 provided on the drive shaft side and a second outlet port 514 communicated with the second inlet port 512 and provided in the distal end-side inclined surface 510b are alternately arranged.

Alternatively, as illustrated in FIG. 46(b), the rotor body 510 may be designed such that a flow passage 516 is branched at an intermediate position thereof to communicate an inlet port 512 provided on the distal end side thereof with both of a first outlet port 514 and a second outlet port 514 provided, respectively, in the distal end-side inclined surface 510b and the drive shaft-side inclined surface 510d. In this case, although illustration is omitted, each of the first outlet port 514 and the second outlet port 514 provided, respectively, in the distal end-side inclined surface 510b and the drive shaft-side inclined surface 510d, may be communicated with an inlet port 512 provided on the drive shaft side.

Alternatively, as illustrated in FIG. 46(c), a first inlet port 512 and a second inlet port 512 provided, respectively, on the distal end side and the drive shaft side, may be communicated with a first outlet port 514 and a second outlet port 514 provided, respectively, in the distal end-side inclined surface 510b and the drive shaft-side inclined surface 510d.

Based on appropriately arranging the inlet port 512 and the outlet port 514 and appropriately providing communication therebetween as just described, a flow suitable for an intended purpose can be generated, so that it becomes possible to perform an efficient stirring operation.

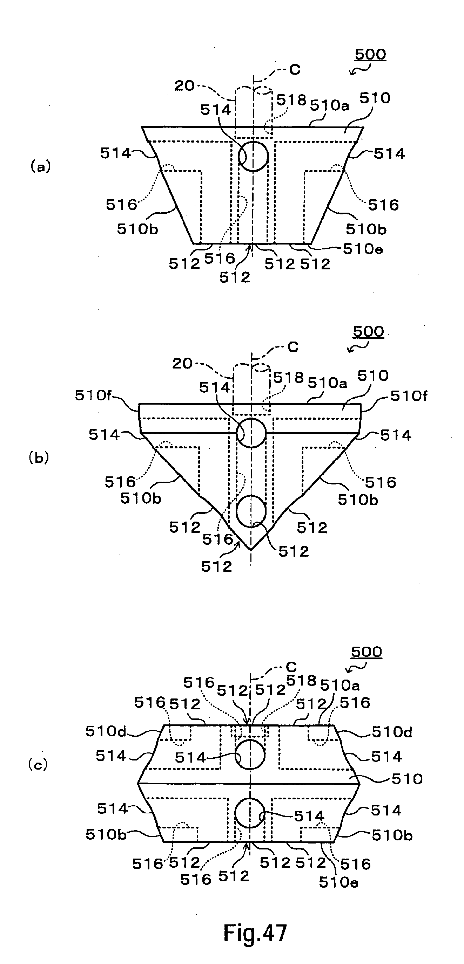

FIGS. 47(a) to 47(c) are front views illustrating examples of a modified shape of the rotor body 510. The rotor body 510 may be configured in a shape having an inclined surface, such as a circular cone or a truncated cone, or may be configured in a shape of a combination of a circular or truncated cone, and other three-dimensional body, such as a circular column or a semi-sphere.

FIG. 47(a) illustrates an example where the rotor body 510 is configured in a truncated cone shape. In this modification, the inlet port 512 is provided in a bottom surface 510e (flat surface on a side opposite to the connection portion 518). Alternatively, the inlet port 512 may be provided in an inclined surface 510b.

FIG. 47(b) illustrates an example where the rotor body 510 is configured in a shape of a combination of a circular cone and a circular column. In this modification, the outlet port 514 is provided to straddle a boundary between of an inclined surface 510b of the circular cone portion on the distal end side and a lateral surface 501f (surface parallel to the central axis C) of the circular column portion on the drive shaft side. In cases where the inclined surface 510b is provided adjacent to the lateral surface 501f parallel to the central axis C, as in the above modification, the outlet port 514 may be provided such that only a part of the outlet port 514 is located in the inclined surface 510b.

Even if the outlet port 514 is arranged in this manner, it is possible to cause a difference in circumferential velocity and centrifugal force between the distal end-side region and the drive shaft-side region of the outlet port 514, and arrange the outlet port 514 at a position close to the separation point 510c, so as to achieve the advantageous effect described in connection with FIG. 43. In this case, the outlet port 514 may be formed as an elongate hole to allow a part thereof to extend from the lateral surface 510f parallel to the central axis C into the inclined surface 510b.

FIG. 47(c) illustrates an example where the rotor body 510 is configured in a shape of a combination of two truncated cones. In this modification, two inclined surfaces: a distal end-side inclined surface 510b and a drive shaft-side inclined surface 510d, are formed, as with the example where the rotor body 510 is configured in a spherical shape. Thus, based on appropriately arranging the inlet port 512 and the outlet port 514 and appropriately providing communication therebetween, a flow suitable for an intended purpose can be generated, so that it becomes possible to perform an efficient stirring operation can be performed.

In addition to the aforementioned shapes, various other shapes may be employed as the shape of the rotor body 510. Specifically, although each of the above examples is configured such that a cross-section perpendicular to the rotation axis (central axis C) has a circular shape, the shape of the rotor body 510 is not limited thereto. For example, the rotor body 510 may be configured such that a cross-section perpendicular to the rotation axis has a polygonal shape, such as a multi-sided pyramid or a multi-sided pyramidal frustum, or may be configured by combining a multi-sided column or a multi-sided pyramid with various three-dimensional bodies to allow the cross-section perpendicular to the rotation axis to have a polygonal shape. Further, a plurality of convex or concave segments may be provided on the outer surface of the rotor body 510.

Based on configuring the rotor body 510 in the shape with appropriate irregularities as described above, a moderate flow can be generated around the stirring rotor 500, so that the stirring capability can be improved in some cases. In addition to setting of the shape of the rotor body 510, a degree of roughness or a more fine concavo-convex shape of the surface of the rotor body 510 may be adjusted to more accurately control flows around the stirring rotor 500. Further, the outer surface of the rotor body 510 may be variously painted or colored to improve aesthetic quality.

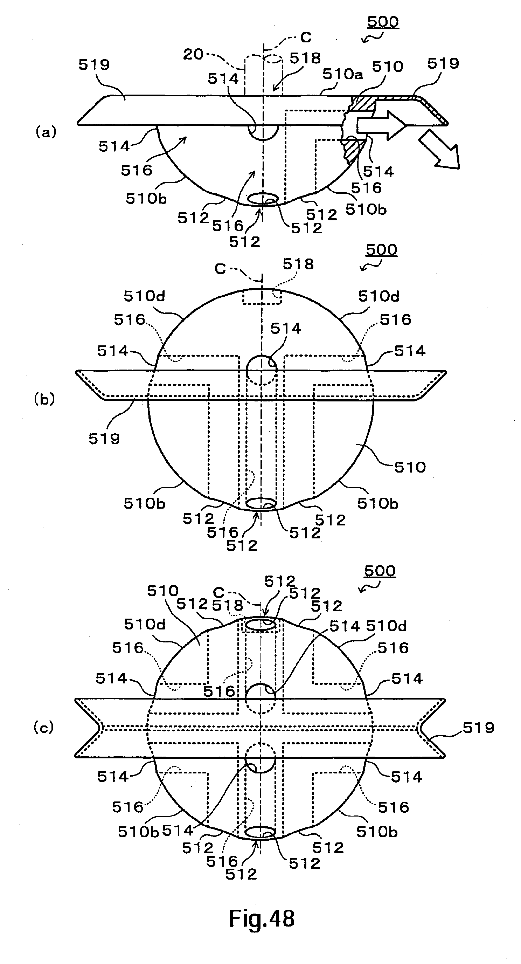

Further, a guide member may be provided on the rotor body 510 to guide a flow (jet flow) from the outlet port 514 in a given direction. FIGS. 48(a) to 48(c) are front views illustrating examples where a guide member 519 is provided on the rotor body 510.

FIG. 48(a) illustrates an example where the guide member 519 is provided on the rotor body 510 to have a hood-like shape which protrudes in the centrifugal direction from the drive shaft side with respect to the outlet port 514 and then bends toward the distal end side. In this modification, the guide member 519 is configured to bend toward the distal end side. Thus, as illustrated in FIG. 48(a), a flow jetted out from the outlet port 514 is guided by the guide member 519, in such a manner that a direction of the flow is changed toward the distal end side.

Based on providing the guide member 519 configured in an appropriate shape, in a vicinity of the outlet port 514 of the rotor body 510 as just described, a flow direction of a jet flow from the outlet port 514 can be appropriately controlled. In other words, a flow to be generated by the stirring rotor 500 therearound can be controlled to become a desired state, so that it becomes possible to perform a more efficient stirring operation.

FIG. 48(b) illustrates an example where the guide member 519 is provided on the rotor body 510 to have a hood-like shape which protrudes in the centrifugal direction from the distal end side with respect to the outlet port 514 and then bends toward the drive shaft side. As in this example, the guide member 519 may be configured to guide a jet flow from the outlet port 514 toward the drive shaft side.

FIG. 48(c) illustrates an example where the guide member 519 is provided as a means to guide a flow from the outlet port 514 in the distal end-side inclined surface 510b, toward the distal end side, and guide a flow from the outlet port 514 in the drive shaft-side inclined surface 510d, toward the drive shaft side. As in this example, the guide member 519 may be configured to guide a jet flow from the outlet port 514 toward both of the distal end and drive shaft sides.

In the example illustrated in FIG. 48(c), the guide member 519 may comprise two separate components: one for guiding a jet flow toward the distal end side; and the other for guiding a jet flow toward the drive shaft side, may be provided as separate components. Alternatively, only one of the guide member 519 for guiding a jet flow toward the distal end side and the guide member 519 for guiding a jet flow toward the drive shaft side, is provided to guide one of the jet flow from the outlet port 514 in the distal end-side inclined surface 510b and the jet flow from the outlet port 514 in the drive shaft-side inclined surface 510d.

A shape of the guide member 519 is not limited to those illustrated in FIGS. 48(a) to 48(c), but may be any other suitable shape capable of guiding a jet flow from the outlet port 514. For example, instead of the hood-like guide member 519 extending over the entire circumference of the rotor body 510 as illustrated in FIG. 48(a) and 48(c), the guide member 519 may be locally provided adjacent to the outlet port 514. Further, the guide member 519 may be configured to guide only a jet flow from a part of the plurality of outlet ports 514, or may be configured to allow a direction of the guidance to be alternately changed.

The guide member 519 may be integrally formed with the rotor body 510, or may be formed separately from the rotor body 510 and then fixed to the rotor body 510 by conventional means, such as screwing or bonding. In the stirring rotor provided with the guide member 519, the outlet port 514 may be provided in a surface region other than the inclined surface 510b (510d), for example, a lateral surface parallel to the central axis C.

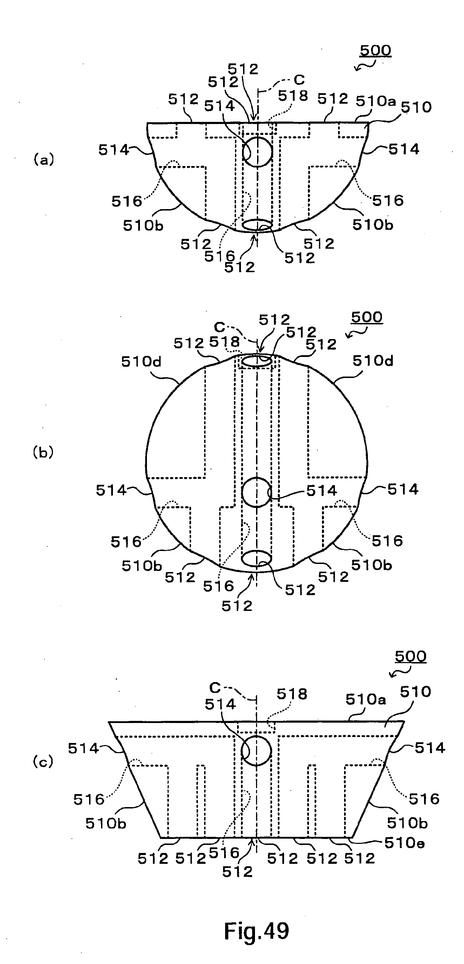

FIGS. 49(a) to 49(c) are front views illustrating examples where the inlet port 512 is communicated with the outlet port 514 in plurality-to-one relation. FIG. 49(a) illustrates an example where the rotor body 510 is configured in a semi-spherical shape, and the flow passage 516 is formed to communicate the inlet port 512 with the outlet port 514 in two-to-one relationship, wherein the two inlet ports 512 are provided on the distal end side and the drive shaft side (in the inclined surface 510b and the top surface 510a), respectively. Further, in this example, the two inlet ports 512 are arranged offset from each other to allow the drive shaft-side inlet port 512 to be located more outwardly in the centrifugal direction from the rotation axis (central axis C) than the distal end-side inlet port 512.

As above, respective flow passages 516 from the plurality of inlet ports 512 may be combined together and communicated with the one outlet port 514. This is effective, for example, in stirring a stirrable substance comprising completely separable components, such as a mixture of water and oil to achieve dispersion or emulsification. Particularly, the plurality of inlet ports 512 communicated with the one outlet port 514 can be arranged such that they are different from each other in terms of a distance from the rotation axis (central axis C) in the centrifugal direction (arranged offset from each other in the centrifugal direction), to allow respective suction forces at two of the inlet ports 512 to become different from each other, so that it becomes possible to generate more complicated flows so as to efficiently perform the dispersion or emulsification.

FIG. 49(b) illustrates an example where the rotor body 510 is configured in a spherical shape, and inlet port 512 and the outlet port 514 are communicated with each other in two-to-one relationship, wherein the two inlet ports 512 are provided, respectively, on the distal end side and the drive shaft side, and wherein the distal end-side inlet port 512 is provided at a position more outward in the centrifugal direction from the central axis C than the drive shaft-side inlet port 512. As in this example, the distal end-side inlet port 512 may be provided more outwardly in the centrifugal direction than the drive shaft-side inlet port 512. In other words, which of the distal end-side inlet port 512 and the drive shaft-side inlet port 512 should be provided more outwardly in the centrifugal direction may be appropriately determined depending on intended purposes, etc.

In the example illustrated in FIG. 49(b), the rotor body 510 may be rotated under a condition that the drive shaft-side inlet port 512 is exposed to an outside of the stirrable substance. In this case, a gas or the like outside of the stirrable substance can be sucked from the drive shaft-side inlet port 512, so that it becomes possible to dissolve a gas in the stirrable substance, or entrain gas bubbles in the stirrable substance to whip it.

FIG. 49(c) illustrates an example where the rotor body 510 is configured in a truncated cone shape, and the flow passage 516 is formed to communicate the inlet port 512 with the outlet port 514 in two-to-one relationship, wherein each of the two inlet ports 512 is provided on the distal end side (in the bottom surface 510e). As in this example, the plurality of inlet ports 512 communicated with the one outlet port 514 may be provided only on the distal end side (or drive shaft side).

In the stirring rotor where the plurality of inlet ports 512 are communicated with the one outlet port 514 as illustrated in FIGS. 49(a) to 49(c), the shape of the rotor body 510 is not particularly limited, but any suitable shape for an intended purpose, etc., may be employed. It is understood that the inlet ports 512 may be communicated with the outlet port 513 in three or more-to-one relationship. In the stirring rotor where the plurality of inlet ports 512 are communicated with the one outlet port 514, the outlet port 514 may be provided in a surface region other than the inclined surface 510b (510d), for example, a lateral surface parallel to the central axis C.

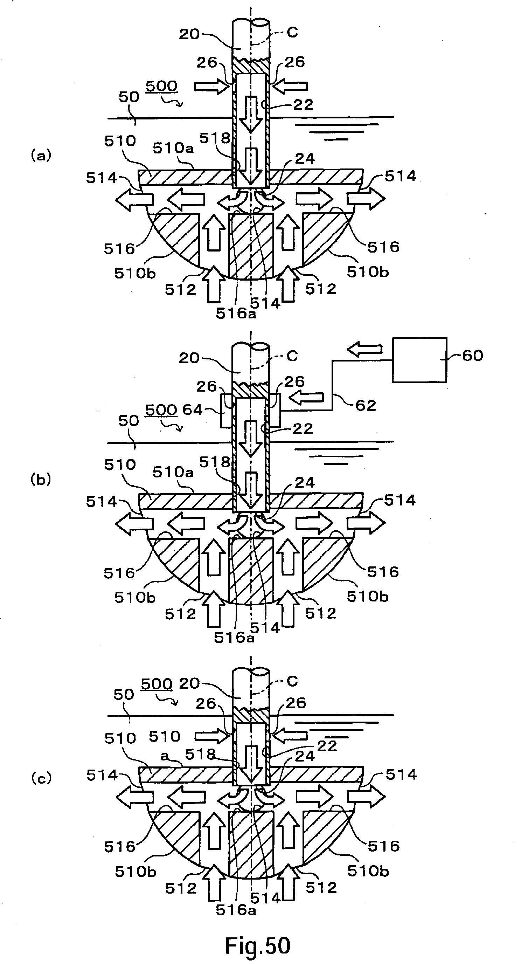

FIGS. 50(a) to 50(c) are partially sectional views illustrating an example where an in-shaft passage 22 is provided in the drive shaft 20 connected to the rotor body 510. Specifically, in this example, as illustrated, for example, in FIG. 50(a), the drive shaft 20 for rotationally driving the rotor body 510 has an in-shaft passage 22 formed thereinside to extend an axial direction thereof. The drive shaft 20 has: a connection port 24 provided at a distal end thereof to serve as an opening for communicating the in-shaft passage 22 with the flow passage 516; and an external opening 26 provided at a given position of a lateral surface of the drive shaft 20 to serve as an opening for communicating the in-shaft passage 22 with an outside of the stirrable substance 50.

The rotor body 510 has a common space 516a formed in the central region of the rotor body 510 to serve as a space communicated with all of the flow passages 516, wherein the connection port 24 at the distal end of the drive shaft 20 is opened to the common space 516a. Specifically, the connection portion 518 is configured to allow the in-shaft passage 22 of the drive shaft 20 to be communicated with the common space 516a, whereby the in-shaft passage 22 is connected to all of the flow passages 516 via the connection port 24 and the common space 516a.

As above, the in-shaft passage 22 is provided in the drive shaft 20, and the one end (connection port 24) and the other end (external opening 26) of the in-shaft passage 22 are communicated, respectively, with the flow passage and the outside of the stirrable substance 50, so that it becomes possible to a gas or the like outside of the stirrable substance 50 can be efficiently sucked into the flow passages 516. Specifically, the gas or the like in the in-shaft passage 22 can be strongly sucked by means of a negative pressure to be generated in the common space 516a in the central region by flows in the flow passages 516 toward the outward side in the centrifugal direction. Further, the external gas or the like is divided into fine gas bubbles according to turbulences caused by the negative suction pressure, so that it becomes possible not only to allow the gas to be efficiently dissolved or bubbled in the liquid, but also to generate micro-bubbles in the liquid.

In the drive shaft 20 provided with the in-shaft passage 22, the external opening 26 may be opened to a liquid different from the stirrable substance 50 to mix the liquid with the stirrable substance 50. In other words, the stirring rotor 500 having the drive shaft 20 provided with the in-shaft passage 22 allows an operation of mixing two types of liquids to be performed in a significantly efficient manner. Further, together with a liquid or gas, a solid, such as a powder or particles, may be introduced from the external opening 26. In this case, the solid, such as a powder, can be efficiently dispersed in the stirrable substance 50. For example, this makes it possible to perform an operation of supplying food while dissolving oxygen in water, in a fish farm.

FIG. 50(b) illustrates an example where a supply unit 60 is connected to the in-shaft passage 22 to supply a fluid such as a gas or a liquid, or a mixture of a fluid and a solid. In this example, the supply unit 60 is comprised, for example, of a pump or a compressor, and connected to the external opening 26 though a supply pipe 62 and a rotary joint 64.

Based on connecting the supply unit 60 to the in-shaft passage 22 in the above manner, a gas, a liquid, or a mixture of a gas and/or a liquid, and a solid such as a powder or particles, can be forcedly supplied into the flow passages 516, so that it becomes possible to significantly quickly perform various mixing and dispersing operations. Further, a supply amount from the supply unit 60 may be controlled so as to appropriately adjust a degree of mixing, a size of gas bubbles to be entrained, etc.

FIG. 50(c) illustrates an example where the external opening 26 is opened to the stirrable substance 50. In this example, the stirrable substance 50 will be strongly sucked from the external opening 26 into the flow passages 516 via the in-shaft passage 22, so that it becomes possible to quickly discharge a gas, such as air, stagnating in the flow passages 516, from the outlet ports 514. Thus, in combination with the effect of providing at least a part of the outlet port 514 in the inclined passage 510b, a gas or the like in the flow passage 516 can be immediately discharged therefrom, so that it becomes possible to significantly efficiently perform the stirring operation, irrespective of viscosity of the stirrable material 50.

The example illustrated in FIG. 50 (c) may be considered as a structure where an inlet port 512 is provided in the connection portion 518 of the rotor body 510 (or the connection portion 518 is configured to function as an inlet port 512), and the in-shaft passage 22 is communicated with the inlet port 512 of the connection portion 518. Thus, on a case-by-case basis, as the inlet port, the rotor body 510 may be provided with only the inlet port 512 of the connection portion 518 to be communicated with the in-shaft passage 22. In other words, the in-shaft passage 22 may be communicated with the flow passages 516 via the inlet port 512.

Although the external opening 26 in the examples illustrated in FIGS. 50(a) to 50(c) is provided in the lateral surface of the drive shaft 20, a position of the external opening 26 is not limited thereto. For example, the drive shaft 20 is configured in a pipe-like shape, wherein the external opening 26 is provided at an end of the drive shaft 20 on an opposite side of the connection port 24. In this case, an opening may be provided in a coupling connecting between the drive shaft 20 and the drive unit 30, or the drive unit 30 may be offset from a shaft center of the drive shaft 20 using a gear or the like. Further, the drive unit 30 may have a hollow output shaft communicated with the in-shaft passage 22. Alternatively, the drive shaft 30 may have an output shaft which is provided with the in-shaft passage 22, the connection port 24 and the external opening 26 and directly connected to the rotor body 10 as substitute for the drive shaft 20.

In the fourth embodiment, the in-shaft passage 22 is communicated with all of the flow passages 516. Alternatively, the in-shaft passage 22 may be communicated with a part of the flow passages 516. Specifically, a common space 516a communicated with only a part of the flow passages 516 may be formed, and communicated with the in-shaft passage 22.

In the stirring rotor where the drive shaft 20 is provided with the in-shaft passage 22 communicated with the flow passage 516 as illustrated in FIGS. 50(a) to 50(c), the shape of the rotor body 510 is not particularly limited, but any suitable shape for an intended purpose, etc., may be employed. Further, the arrangement and configuration of each of the inlet port 512, the outlet port 514 and the flow passage 516 are not particularly limited. For example, a single inlet port 512 provided in the center of the distal end of the rotor body 510 may be communicated with a plurality of outlet ports 514. In the stirring rotor where the drive shaft 20 is provided with the in-shaft passage 22 communicated with the flow passage 516, the outlet port 514 may be provided in a surface region other than the inclined surface 510b (510d), for example, a lateral surface parallel to the central axis C.

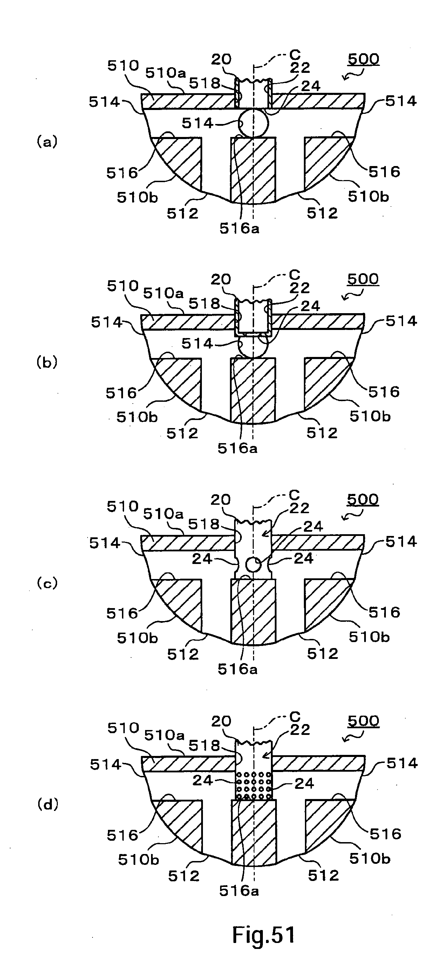

FIGS. 51(a) to 51(d) are sectional views illustrating examples of a modified configuration of the connection port 24. An arrangement and/or a shape of the connection port 24 may be appropriately adjusted to allow a degree of mixing of an external fluid, solid, etc, into a stirrable substance, or a state of generation of gas bubbles to be adjusted.

FIG. 51 (a) illustrates an example where the drive shaft 20 is disposed to keep a distal end thereof from protruding into the common space 516a. Based on adjusting a protruding amount of the distal end of the drive shaft 20 provided with the connection port 24 in this manner, a degree of mixing, a state of generation of gas bubbles, etc, can be adjusted. FIG. 40(b) illustrates an example where a size of the connection port 24 provided at the distal end of the drive shaft 20 is reduced. Based on adjusting the size of the connection port 24 in this manner, a degree of mixing, a state of generation of gas bubbles, etc, can also be adjusted.

FIG. 51 (c) and 51 (d) illustrate examples where the distal end of the drive shaft 20 is butted against an inner wall of the common space 516a, and the connection port 24 is provided in the lateral surface of the drive shaft 20. In this manner, the connection port 24 may be provided to be opened in the centrifugal direction, instead of being opened in the axial direction. In this case, in addition to a size of the connection port 24, the number and/or arrangement of the connection ports 24 can be appropriately set to desirably obtain a degree of mixing, a state of generation of gas bubbles, etc.

A shape of the connection port 24 is not particularly limited, but various shapes other than a circular shape, such a rectangular shape and a slit-like shape, may be employed. Alternatively, a mesh-like member may be provided at the connection port 24.

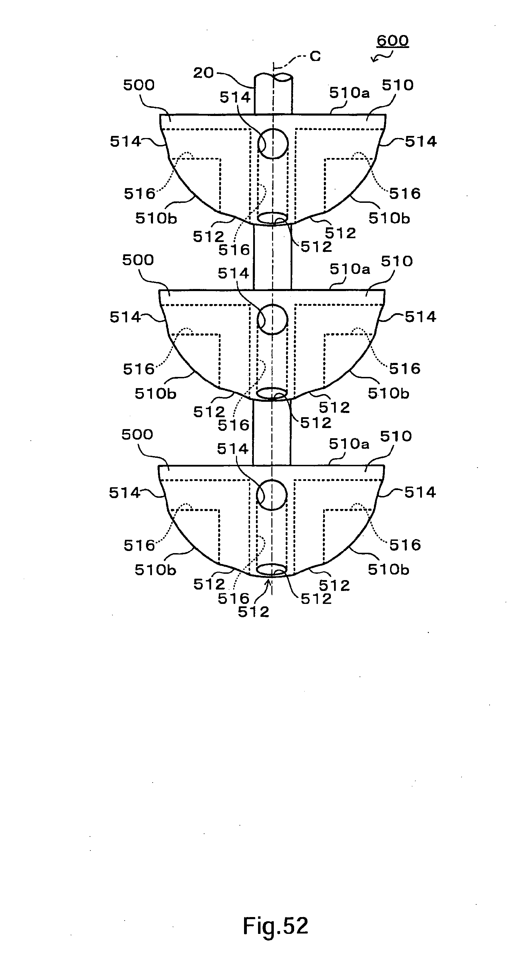

A stirring device 600 formed by coupling a plurality of the stirring rotors 500 will be described below. FIG. 52 is a front view illustrating an example of the stirring device 600. In the illustrated example, the number of the stirring rotors 500 is three, wherein the three stirring rotors 500 are coupled together through the drive shaft 20. As illustrated in FIG. 52, the plurality of stirring rotors 500 are coupled together in the direction of the rotation axis, so that it becomes possible to further improve the stirring capability. This is effective, particularly, when a fluid to be stirred has a large depth.

As described above, the stirring rotor 500 according to the fourth embodiment comprises: a rotor body 510 adapted to be rotated about a rotation axis (central axis C); an inlet port 512 provided in an outer surface of the rotor body 510; an outlet port 514 provided in the outer surface of the rotor body 510; and a flow passage 516 communicating the inlet port 512 with the outlet port 514, wherein the rotor body 510 is connected to a drive shaft 20 for rotating the rotor body 510, and wherein: the rotor body 510 has an inclined surface 510b (510d) which extends to become gradually farther away from the rotation axis, in a direction from one side to the other side of the rotation axis; the inlet port 512 is provided at a position closer to the rotation axis than the outlet port 514; and the outlet port 514 is provided at a position more outward in a centrifugal direction from the rotation axis than the inlet port 512, and wherein at least a part of the outlet port 514 is located in the inclined surface 510b (510d).

In the fourth embodiment configured in this manner, even in an operation of stirring a high-viscosity fluid, a gas, such as air, stagnating in the flow passage 516 can be quickly discharging from the flow passage 516. This makes possible to prevent deterioration in stirring capability due to stagnation of gas in the flow passage 516 so as to perform the stirring operation in a speedy and efficient manner, irrespective of viscosity of the stirrable substance.

Further, according to the inclined surface 510b (510d), a flow adjacent to the outer surface of the rotor body 510 is smoothly formed as a flow accompanied with a jet flow from the outlet port 514, and a synergic effect of the difference in circumferential velocity and centrifugal force in the outlet port 514, and the negative pressure at the separation point 510c is applied to the jet flow, so that it becomes possible to generate a more strong and complicated flow in the stirrable substance. This makes it possible to obtain a nonconventional high stirring capability.

In the fourth embodiment, the rotor body 510 is configured such that a cross-section thereof perpendicular to the rotation axis has a circular shape. Thus, it becomes possible to eliminate a counteracting force during start of the rotation, and allow damage, chipping or the like of the stirring rotor 500 or a container containing a stirrable substance to become less likely to occur even if the stirring rotor 500 is hit against the container or the like. In addition, the occurrence of unbalance with respect to the rotation axis can be minimized, so that it becomes possible to almost eliminate vibration, shaking or the like which would otherwise occur during the rotation. This makes it possible to perform a stirring operation in a safe and efficient manner, irrespective of intended purposes.

In the fourth embodiment, the rotor body 510 is configured in a semi-spherical or spherical shape. Thus, it becomes possible to generate strong flows in the stirrable substance, and allow the inlet port 512 to be moved to a position close to a narrow area, such as a corner of the container, so as to suck a stagnant substance. In other words, it becomes possible to sufficiently perform the stirring operation throughout the container.

In cases where the rotor body 510 is configured in a spherical shape, a distal end-side inclined surface 510b and a drive shaft-side inclined surface 510d are provided as the inclined surface. Thus, based on appropriately arranging the two inclined surfaces 510b, 510d, a suitable flow for an intended purpose can be generated to perform an efficient stirring operation. In the fourth embodiment, the rotor body 510 may be configured in an ellipsoidal or semi-ellipsoidal shape.

In the fourth embodiment, the stirring rotor 500 includes a plurality of the outlet ports 514, wherein the inlet port 512 and the flow passage 516 are provided with respect to a respective one of the plurality of outlet ports 514. Thus, a flow rate in the flow passage 516 can be maintained at an appropriately high value, so that it becomes possible to prevent deterioration in stirring capability due to accumulation of stagnant substances within the flow passage 516.

In the fourth embodiment, the inlet port 512 is provided on a side opposite to a drive shaft 20 to be connected to the rotor body 510 so as to rotate the rotor body 510. This makes it possible to suck a stagnant substance at a bottom of the container so as to perform a reliable stirring operation free of unevenness. In addition, it becomes possible to perform the stirring operation without destabilizing a level of the stirrable substance.

In the fourth embodiment, the inlet port 512 is provided on the outward side in the centrifugal direction with respect to the rotation axis. In this case, the rotor body 510 can have a portion provided in the center of the distal end thereof to protrude outwardly with respect to the inlet port 512. Thus, even if the stirring rotor 500 is moved to a position close to a wall surface of the container, it becomes possible to avoid a situation where the stirring rotor 500 is suckingly brought into contact with the wall surface and thereby the inlet port 512 is closed. This makes it possible to perform a stable stirring operation even in cases where the stirring rotor 500 is manually operated.

In the fourth embodiment, the stirring rotor 500 further comprises a guide member 519 for guiding a flow from the outlet port 514 toward a given direction. Thus, a flow direction of a jet flow from the outlet port 514 can be changed to an appropriate direction to appropriately control a flow condition around the stirring rotor 500, so that it becomes possible to perform a more efficient stirring operation.

In the fourth embodiment, the flow passage 516 may be configured to communicate the inlet port 512 with the outlet port 514 in plurality-to-one relationship, wherein the plurality of inlet ports 512 communicated with the one outlet port 514 are arranged such that they are different from each other in terms of a distance from the rotation axis in the centrifugal direction. In this case, based on a difference in centrifugal force applied to the plurality of inlet ports 512, a more complicated flow can be generated. This makes it possible to efficiently disperse or emulsify a mixture of water and oil, etc.

In the fourth embodiment, the rotor body 510 may be connected to a drive shaft 20 for rotating the rotor body 510, wherein the drive shaft 20 has an in-shaft passage 22 communicating an opening (external opening 26) provided therein with the flow passage 516. In this case, a gas, liquid or the like outside of the stirrable substance can be sucked into the flow passage 516, so that it becomes possible to efficiently perform mixing of a plurality of materials, gas dissolution or bubbling or dispersion of a solid such as a powder or particles, in a liquid, as well as stirring. It is also possible to generate micro-bubbles in a liquid.

Further, a supply device 60 may be connected to the in-shaft passage 22 to supply a fluid or a mixture of a fluid and a solid to the flow passage 516 via the in-shaft passage 22. In this case, a gas, a liquid, or a mixture of a gas and/or a liquid, and a solid such as a powder or particles, can be forcedly supplied into the flow passage 516, so that it becomes possible to significantly efficiently perform various mixing and dispersing operations. Further, based on controlling the supply unit 60, a degree of mixing, dispersion or bubbling, etc., can be appropriately adjusted.

The stirring device 600 based on the fourth embodiment comprises the plurality of stirring rotors 500 arranged in the direction of the rotation axis. This makes it possible to further improve the stirring capabilities.

Although the present invention has been described based on various embodiments thereof, it is understood that the stirring rotor and the stirring device of the present invention are not limited to the above embodiments, but various changes and modifications may be made therein without departing from the spirit and scope of the present invention.

### INDUSTRIAL APPLICABILITY

The stirring rotor and the stirring device of the present invention are usable in the field of stirring of various fluids and entrainment of gas bubbles.

### EXPLANATION OF CODES

1, 100, 300, 5 00: stirring rotor
2, 200, 400, 600: stirring device
10, 110, 310, 510: rotor body
12, 112, 312, 512: inlet port
13, 113: suction port
14, 114, 314, 514: outlet port
16, 116, 316, 516: flow passage
17, 117: gas passage
20: drive shaft
22: in-shaft passage
26: external opening
60: supply unit
101: virtual circle
110d: convex segment
110e: concave segment
510b, 510d: inclined surface
519: guide member
C: central axis

## Claims

1. A stirring rotor comprising:
a rotor body adapted to be rotated about a rotation axis;
an inlet port provided in an outer surface of the rotor body;
an outlet port provided in the outer surface of the rotor body; and
a flow passage communicating the inlet port with the outlet port,
wherein:
the inlet port is provided at a position closer to the rotation axis than the outlet port; and
the outlet port is provided at a position more outward in a centrifugal direction from the rotation axis than the inlet port.

2. The stirring rotor as defined in claim 1, wherein the rotor body is configured such that a cross-section thereof perpendicular to the rotation axis has a circular shape.

3. The stirring rotor as defined in claim 2, wherein the rotor body has a semi-spherical or semi-ellipsoidal shape.

4. The stirring rotor as defined in claim 2, wherein the rotor body is configured in a spherical or ellipsoidal shape.

5. The stirring rotor as defined in claim 2, wherein the rotor body is configured in a shape where at least one of opposite base surfaces of a circular column or a disk is formed as a spherical surface.

6. The stirring rotor as defined in claim 1, wherein the rotor body is configured such that an outer peripheral shape of a cross-section of at least a part thereof perpendicular to a direction of the rotation axis has a shape where a plurality of convex or concave segments are provided in a circle.

7. The stirring rotor as defined in claim 6, wherein each of the convex or concave segments is configured such that a contour shape thereof in the cross-section perpendicular to the direction of the rotation axis has a generally triangular shape.

8. The stirring rotor as defined in claim 6 or 7, wherein the outer peripheral shape of the cross-section of at least a part of the rotor body perpendicular to the direction of the rotation axis is configured as a polygonal shape by the convex or concave segments.

9. The stirring rotor as defined in claim 8, wherein the outer peripheral shape of the cross-section of at least a part of the rotor body perpendicular to the direction of the rotation axis is configured as a 12 or more-sided polygonal shape by the convex or concave segments.

10. The stirring rotor as defined in any one of claims 6 to 9, wherein a corner of a top of each of the convex segments is rounded.

11. The stirring rotor as defined in claim 6, wherein each of the convex or concave segments is configured such that a contour shape thereof in the cross-section perpendicular to the direction of the rotation axis has a generally arc shape.

12. The stirring rotor as defined in any one of claims 1 to 11, wherein the rotor body is configured in a shape where a thickness of at least a part thereof in a direction of the rotation axis gradually decreases toward an outward side in the centrifugal direction.

13. The stirring rotor as defined in any one of claims 1 to 12, wherein the rotor body has an inclined surface which extends to become gradually farther away from the rotation axis, in a direction from one side to the other side of the rotation axis, and wherein at least a part of the outlet port is located in the inclined surface.

14. The stirring rotor as defined in any one of claims 1 to 13, wherein a ratio of a cross-sectional area of the inlet port perpendicular to a flow therein to a cross-sectional area of the outlet port perpendicular to a flow therein is set in a range of 1/3 to 3.

15. The stirring rotor as defined in any one of claims 1 to 14, which includes a plurality of the outlet ports, wherein the inlet port and the flow passage are provided with respect to a respective one of the plurality of outlet ports.

16. The stirring rotor as defined in any one of claims 1 to 15, wherein the inlet port is provided on a side opposite to a drive shaft to be connected to the rotor body so as to rotate the rotor body.

17. The stirring rotor as defined in any one of claims 1 to 16, wherein the inlet port is provided on an outward side in the centrifugal direction with respect to the rotation axis.

18. The stirring rotor as defined in any one of claims 1 to 17, wherein the flow passage is configured to communicate the inlet ports with the outlet port in plurality to one relationship, and wherein the plurality of inlet ports communicated with the one outlet port are arranged such that they are different from each other in terms of a distance from the rotation axis in the centrifugal direction.

19. The stirring rotor as defined in any one of claims 1 to 18, which further comprises a gas suction port provided in the outer surface of the rotor body at a position closer to the rotation axis than the outlet port, and a gas passage communicating the gas suction port with the outlet port, wherein the stirring rotor is usable in a posture where the gas suction port is exposed to gas outside of a stirrable substance, so as to allow the outside gas to be sucked from the gas suction port and introduced into the stirrable substance.

20. The stirring rotor as defined in any one of claims 1 to 19, which further comprises a guide member for guiding a flow from the outlet port in a given direction.

21. The stirring rotor as defined in any one of claims 1 to 20, wherein the rotor body is connected to a drive shaft for rotating the rotor body, the drive shaft having an in-shaft passage communicating an opening provided therein with the flow passage.

22. The stirring rotor as defined in claim 21, wherein the opening is provided in a portion of the drive shaft to be located outside the stirrable substance.

23. The stirring rotor as defined in claim 21, wherein the opening is provided in a portion of the drive shaft to be located inside the stirrable substance.

24. The stirring rotor as defined in any one of claims 21 to 23, wherein a supply device is connected to the in-shaft passage to supply a fluid or a mixture of a fluid and a solid to the flow passage via the in-shaft passage.

25. A stirring device comprising a plurality of the stirring rotors as defined in any one of claims 1 to 24, the plurality of stirring rotors being arranged in a direction of the rotation axis.
